# EUROPEAN PATENT SPECIFICATION

(11) **EP 3 346 721 B1**
(45) Date of publication and mention of the grant of the patent: **25.01.2023**
(21) Application number: 16842103.0
(22) Date of filing: 06.07.2016
(51) Int. Cl.: G01D 11/24

(54) **ACCESSORY**
ZUBEHÖR
ACCESSOIRE

(30) Priority: 03.09.2015 KR 20150124846; 18.12.2015 KR 20150181789; 25.05.2016 US 201662341566 P
(43) Date of publication of application: 11.07.2018
(73) Proprietor: LG Electronics Inc., Yeongdeungpo-gu Seoul 07336 (KR)
(72) Inventor: KIM, Dooyul, Seoul 08592 (KR); KIM, Kyoungtae, Seoul 08592 (KR); JI, Sanghoon, Seoul 08592 (KR); RYU, Jisung, Seoul 08592 (KR); GOO, Kyeonggyu, Seoul 08592 (KR); EOM, Dajeong, Seoul 08592 (KR); KIM, Sangin, Seoul 08592 (KR)
(74) Representative: Vossius & Partner Patentanwälte Rechtsanwälte mbB
(86) International application number: PCT/KR2016/007314
(87) International publication number: WO 2017/039137

(56) References cited:
- EP-A1- 2 827 569
- WO-A2-2014/147599
- DE-A1- 10 222 193
- JP-A- H04 297 200
- JP-A- 2013 236 190
- KR-A- 20130 086 124
- KR-A- 20140 064 694
- KR-U- 19990 002 650
- US-A- 5 419 263
- US-A1- 2004 262 464
- US-A1- 2007 126 576
- US-A1- 2009 121 842
- US-A1- 2010 264 182
- US-A1- 2015 130 351
- US-A1- 2015 212 500
- US-A1- 2015 234 189

## Description

### [Technical Field]

The present invention relates to an accessory having a communication function, and more particularly to an accessory for communication including a communication module for transmitting and receiving a signal over a predetermined network and an apparatus and method for manufacturing the same.

### [Background Art]

The Internet of Things (IoT) is intelligent technology and service for interconnecting things over the Internet to perform information communication between people and things and between things. In particular, "information communication between things" means that apparatuses connected to the Internet transmit, receive, and process information without the intervention of people.

"Sensing technology" for sensing the surrounding conditions (things or environments) to acquire information, "network technology" for interconnecting things to the Internet, and "service interface technology" for processing and providing information have been proposed as technologies for realizing the Internet of Things.

In the sensing technology, at least one selected from among environment sensors (e.g. a barometer, a hygrometer, a thermometer, a radioactivity sensor, a heat sensor, and a gas sensor), chemical sensors (e.g. an electronic nose, a health care sensor, and a biometric sensor), a proximity sensor, an illumination sensor, an acceleration sensor, a magnetic sensor, a gravity sensor, a gyroscope sensor, a motion sensor, an RGB sensor, an infrared (IR) sensor, an ultrasonic sensor, a remote sensor, an SAR, a radar, and optical sensors (e.g. a video sensor and an image sensor) may be included.

"Network technology" means interconnecting personal computers (PCs), various kinds of equipment and facilities, and portable terminals using various wired and/or wireless technologies. Ethernet, PLC, IEEE 1394, Home PNA, etc. are used as the wired technologies. IEEE 802.11. WLAN, IEEE 802.15 WPAN, UWB, Wi-Fi, ZigBee, Z-wave, Bluetooth, etc. are used as the wireless technologies. In addition, a server for collecting various kinds of information and transmitting and receiving various kinds of signals may be included in the network.

The network environment may be applied to various spatial or service-dimensional concepts as well as homes and offices.

Various apparatuses having a function for transmitting and receiving information about apparatuses over networks have been developed. Particularly, in the home networking field, home electric appliances equipped with the Internet of Things function have been developed.

Meanwhile, apparatuses may include various kinds of input units. Among the input units is a switch that is pushed when vertical pressure is applied thereto. After the switch is pushed, it is necessary to return the switch to the original state thereof. In order to generate restoring force necessary to return the switch to the original state thereof, an elastic member, such as a spring, may be used.

US 2004/0262464 A1 discloses a remote control support tower to which one or more remote controls can be attached. US 2010/0264182 A1 discloses a holder for holding a phone.

US 2004/0262464 A1 discloses a remote control support tower to which one or more remote controls can be attached. US 2010/0264182 A1 discloses a holder for holding a phone.

US 2009/0121842 A1 discloses a wireless control system used for remotely operating AC powered electrical devices.

JP H04 297200 A discloses a wireless signal receiving equipment capable of being mounted on a ceiling or wall.

### [Disclosure]

### [Technical Problem]

In order to popularize technology based on the Internet of Things (IoT), it is necessary to replace conventional electric home appliances having no IoT functions with new electric home appliances having IoT functions and to reconfigure environments such that the Internet of Things is made possible. However, the replacement of electric home appliances is too heavy a burden for users. In the case in which conventional electric home appliances having no IoT functions are not replaced with new electric home appliances having IoT functions, it is not possible to use IoT technology. As a result, it is difficult to easily and rapidly popularize IoT technology. It is a first object of the present invention to solve this problem by providing an accessory that is capable of enabling the realization of IoT functions without replacing conventional electric home appliances or reconfiguring environments.

To date, products having IoT functions have been based on individual standards proposed by manufacturers who manufacture the products having IoT functions, rather than based on unified standards. For this reason, the products are not compatible with each other, with the result that it is difficult to realize an IoT environment. It is a second object of the present invention to solve this problem by providing an accessory that is capable of enabling the realization of a desired IoT environment even in the case in which products having different IoT standards are used.

It is a third object of the present invention to provide an accessory having a function of obtaining information about an environment or an apparatus and a function of transmitting a desired command to the apparatus.

It is a fourth object of the present invention to provide an accessory the position of which can be easily changed as needed.

It is a fifth object of the present invention to provide an accessory configured such that, in the case in which the position and direction of the accessory are preset, the position and direction of the accessory can be easily recognized without additional effects when the accessory is detached from an apparatus and is then attached to the apparatus again.

It is a sixth object of the present invention to provide an accessory for obtaining information about a specific direction and transmitting an optical signal in the specific direction, wherein the specific direction can be easily preset.

It is a seventh object of the present invention to provide an accessory configured to be smoothly attached to an apparatus after having been detached from the apparatus while the strength of attachment of the accessory to the apparatus is maintained.

It is an eighth object of the present invention to provide an accessory having various kinds of parts to realize variable IoT environments as needed under various environments and conditions.

It is a ninth object of the present invention to provide an accessory confioured such that in an environment having a plurality of apparatuses, the position of the accessory can be easily changed from one apparatus to another apparatus, and the setting of the accessory can be easily changed after the position of the accessory is changed.

In order to achieve the first and second objects of the present invention, it is necessary to manufacture the accessory such that the size of the accessory is small. The reason for this is that if the volume of the accessory is large, the inconvenience of the accessory at the time of disposition of the accessory is greater than the convenience afforded by the accessory, which is used in an auxiliary manner in conventional apparatuses having no IoT functions. In addition, a network including an additional server and terminals is provided in consideration of the characteristics of the Internet of Things, and it is sufficient for the accessory according to the present invention to have a function of sensing information about the surrounding conditions or transmitting a remote control signal to an apparatus. In consideration of present technology, therefore, there is no necessity for the accessory to have a large volume. Consequently, it is possible to minimize the volume of the accessory. In the case in which the volume of the accessory is minimized, however, the accessory may be easily lost. It is a tenth object of the present invention to solve this problem, i.e. to reduce the possibility of the miniaturized accessory being lost.

In consideration of the characteristics of the accessory, the accessory does not provide a particular function to users but efficiently networks the functions of conventional products when an IoT environment is realized. Consequently, the accessory may be configured to have an approximately circular shape when viewed from above such that the accessory is not visually prominent. For example, in the case in which the accessory is circular, it is difficult for a user to visually recognize that the accessory is dislocated even when the accessory is disposed at different angles. However, the circular accessory may be easily lost. Particularly, when the accessory falls from a high place, the accessory may move far away along the floor, with the result that the accessory may be lost. Even when the accessory is lost, the user may move in order to find the accessory. It is an eleventh object of the present invention to solve this problem, i.e. to reduce the possibility of the circular accessory being lost and to prevent the user from moving in order to find the accessory.

It is a twelfth object of the present invention to provide an accessory having a function of emitting an optical signal capable of obtaining information about an environment or an apparatus and a function of emitting an optical signal capable of transmitting a desired command to the apparatus.

It is a thirteenth object of the present invention to provide an accessory that is capable of transmitting an optical signal to a distant place in order to broaden the range in which the functions of the accessory can be used.

It is a fourteenth object of the present invention to provide an accessory that is capable of minimizing the diffraction or dispersion of an optical signal such that the functions of the accessory can be smoothly exhibited.

The outer surface of the accessory may have an inclined surface formed to improve the convenience thereof as a grip or to prevent the accessory from being lost. It is a fifteenth object of the present invention to provide an accessory that is capable of securing the quality and directivity of an optical signal emitted from the rear side of an inclined surface so as to pass through the inclined surface.

It is a sixteenth object of the present invention to provide a transmission member that is capable of guiding the disposition of an optical device at the rear side thereof. It is a seventeenth object of the present invention to provide a structure in which a transmission member is efficiently located.

In a conventional push-type button, it is difficult to accurately realize designed restoring force. Particularly, for a push-type button having a miniscule stroke (i.e. a miniscule push length), it is difficult to use a spring, and it is very difficult to adjust a miniscule degree of restoring force. When there is a miniscule difference in restoring force, however, the difference actually sensed by a user is very great, because the button is pushed with the tip of the user's hand. In particular, the difference in sensation in the field of electric home appliances is critical, since the sensation is connected directly with commercial success. In the conventional push-type button, it is difficult to design a miniscule degree of restoring force and to realize the designed restoring force. It is an eighteenth object of the present invention to provide a structure in which it is possible to solve this problem, i.e. to make it easy to realize a miniscule design difference in restoring force of the push-type button and to easily realize the restoring force, thereby securing uniformity.

It is a nineteenth object of the present invention to provide a structure in which a user can smoothly couple and separate detachable parts to and from each other.

The objects of the present invention are not limited to the above-mentioned objects, and other objects that have not been mentioned above will become evident to those skilled in the art from the following description.

### [Technical Solution]

In order to achieve the first to third objects, an accessory includes a main body having a communication module for communicating with a predetermined network. In addition, the main body may include at least one selected from between a remote control module for transmitting an optical signal for controlling a predetermined apparatus and a sensor module for sensing predetermined surrounding conditions.

In order to achieve the fourth object, the accessory includes a container having a main body-coupling portion to which the main body is separably coupled. The container may include an external coupling portion formed so as to be attached to one surface of an external object. In the case in which the container is attached to an apparatus or is placed in a particular environment, the main body may be easily coupled to and separated from the container.

The remote control module may include a control signal light-emitting unit for transmitting an optical signal for controlling the predetermined apparatus from the main body in a specific direction. In addition, the sensor module may include a proximity sensor for sensing the proximity of the main body to the external object in a specific direction.

In order to achieve the fifth object, the container may include a direction-setting unit for guiding the main body such that the specific direction is set to a predetermined direction when the container is attached to the one surface of the external object.

In order to achieve the sixth object, the container may include a direction-indicating unit for visually indicating the specific direction.

Specifically, the direction-setting unit may include a direction-setting protrusion and a direction-setting recess. In this case, the main body may include one selected from between the direction-setting protrusion and the direction-setting recess, and the container may include the other selected from between the direction-setting protrusion and the direction-setting recess. The direction-setting protrusion may be engaged into the direction-setting recess in the state in which the specific direction is set to the predetermined direction. In addition, the direction-setting protrusion may be disposed so as to be eccentric from a central axis of the main body and the container in one direction.

In order to achieve the seventh object, one selected from between the main body and the container may be provided with an attachment and detachment groove, and the other selected from between the main body and the container may include an attachment and detachment protrusion. In this case, the attachment and detachment protrusion may be inserted into the attachment and detachment groove when the main body is coupled to the container.

The attachment and detachment groove may extend in the circumferential direction. In addition, the attachment and detachment protrusion may include a first attachment and detachment protrusion disposed opposite the direction-setting protrusion about the central axis.

In connection with the coupling between the main body and the container, the attachment and detachment protrusion may be easily inserted into the attachment and detachment groove even in the state in which the direction-setting protrusion is not engaged into the direction-setting recess, which leads to incomplete coupling between the main body and the container. In the state in which the direction-setting protrusion is not engaged into the direction-setting recess, the first attachment and detachment protrusion may be inserted into the attachment and detachment groove so as to slide in the circumferential direction such that the main body is rotatable relative to the container. As a result, the main body may be easily guided until the main body is completely coupled to the container.

In order to secure such complete coupling between the main body and the container, the attachment and detachment protrusion may include a second attachment and detachment protrusion configured to be inserted into the attachment and detachment groove only in the state in which the direction-setting protrusion is engaged into the direction-setting recess. In addition, the attachment and detachment protrusion may include a plurality of attachment and detachment protrusions arranged at intervals in the circumferential direction.

In order to move variably set the accessory, the main body may include a remote control module for transmitting an optical signal for controlling a predetermined apparatus. For example, the accessory may be set such that in the case in which the main body is placed at a first apparatus, a target around the first apparatus is sensed and such that in the case in which the main body is placed at a second apparatus, a control signal is transmitted to the second apparatus.

The proximity sensor may include a proximity signal light-emitting unit for transmitting a predetermined optical signal in the specific direction and a proximity signal light-receiving unit for receiving the optical signal reflected in the specific direction.

In order to achieve the eighth object, the accessory may further include a reflector, the reflector including a reflective surface for reflecting the transmitted optical signal and an attachment surface configured to be attachable to the external object. In addition, the accessory may further include a detachable waterproof member for sealing a gap between the main body and the container in the state in which the main body is coupled to the container.

In order to more easily position the waterproof member, the gap between the main body and the container may define an edge that is smaller than the upper edge of the main body and the lower edge of the container in the state in which the main body is coupled to the container. The waterproof member may include a detachable elastic band wound between the upper edge of the main body and the lower edge of the container in the state in which the main body is coupled to the container.

In order to further improve the waterproofness of the waterproof member, the side surface of the main body may include an inclined surface that becomes gradually closer to the central axis in the downward direction, and the side surface of the container may include an inclined surface that becomes gradually closer to the central axis in the upward direction.

In order to achieve the ninth object, in accordance with an example, the container may include a plurality of containers configured to be attached to predetermined surfaces of external objects located at different positions. In this case, the sensor module may include a plurality of sensors for sensing different kinds of targets. The main body may include a controller for performing control such that the kinds of targets transmitted over the network are changed.

Furthermore, the controller may perform control such that the kinds of targets can be changed based on the change in position of the main body.

In order to achieve the ninth object, in accordance with another example, the container may include a plurality of containers configured to be attached to predetermined surfaces of external objects located at different positions. In this case, the main body may include a controller for controlling whether or not to transmit information about the surrounding conditions over the network and controlling whether or not to operate the remote control module.

Furthermore, the controller may perform control so as to change whether or not to transmit the information about the surrounding conditions over the network and whether or not to operate the remote control module based on the change in position of the main body.

In order to achieve the first, second, and tenth objects, an accessory includes a main body having a communication module for communicating with a predetermined network. In addition, the main body may include at least one selected from between a remote control module for transmitting an optical signal for controlling a predetermined apparatus and a sensor module for sensing predetermined surrounding conditions.

In order to achieve the tenth and eleventh objects, the accessory may be configured as follows.

The main body may include an upper edge extending along the circumference of an imaginary circle having a predetermined diameter r1. The side surface of the main body may be formed further inward in the direction inward toward the axis than the upper edge. In this case, the main body may roll in the state in which the upper edge contacts a horizontal plane (i.e. the ground), and may be overturned toward the lower side thereof, which is not supported by the horizontal plane, whereby the rolling motion of the main body may be stopped within a short time. In the case in which the rolling motion of the main body is stopped within a short time, it is possible to prevent the main body from rolling far away even when the main body rolls on the horizontal plane.

The main body may include a lower edge extending along the circumference of an imaginary circle having a predetermined diameter r2. Here, the diameter r2 may be smaller than the diameter r1. In this case, the main body may tilt toward the lower side thereof. As a result, the lower edge may contact the horizontal plane, and may roll on the horizontal plane. Consequently, the main body may return to the original position thereof, whereby user's excessive movement to find the main body may be reduced.

Specifically, the lower edge may be constituted by points contacting at least one selected from between the upper edge and the side surface of the main body and also contacting an external horizontal plane.

In addition, the main body may have a height smaller than the diameter r2. In this case, the main body may be completely overturned toward the lower side thereof. As a result, the movement of the main body may be stopped due to the frictional force between the lower surface of the main body and the horizontal plane. For example, if the height of the main body is increased, the main body may stably roll in the state in which the side surface of the main body contacts the horizontal plane. The height of the main body may be decreased such that the contact between the side surface of the main body and the horizontal plane is not stable.

The main body may include a lower corner connected to a lower side of the lower edge, the lower corner being chamfered so as to be rounded. In this case, when the main body tilts toward the lower side thereof during overturning of the main body, the upper side of the main body may smoothly contact the horizontal plane, and then the lower side of the main body may smoothly contact the horizontal plane. In addition, the main body may roll in the state in which the lower corner of the main body contacts the horizontal plane. At this time, the lower side of the main body may contact the horizontal plane along the chamfered portion of the main body. As a result, the turning radius of the main body when the rolling motion of the main body is performed may be further decreased. Consequently, the main body may be abruptly turned.

The main body may include a battery disposed in the lower part thereof such that the center of gravity of the main body is located at the lower side of the main body. Consequently, the main body may be overturned toward the lower side thereof due to the center of gravity thereof within a shorter time in the state in which the main body rolls while the upper corner of the main body contacts the horizontal plane.

The main body may include a battery disposed at an eccentric position when viewed from below the main body such that the center of gravity of the main body is eccentric in the direction in which the battery is eccentric. In the case in which the kinetic energy of the rolling motion of the main body is less than a predetermined value, therefore, the kinetic energy may be completely converted into potential energy, with the result that the main body may move no farther away.

In order to achieve the fourth object, the accessory includes a container having a main body-coupling portion to which the main body is separably coupled. The container may include an external coupling portion formed so as to be attached to an external object.

In the case in which the main body-coupling portion is provided at the upper side of the container, it is necessary to achieve the tenth and eleventh objects of the present invention. To this end, the container may include a lower edge extending along the circumference of an imaginary circle having a predetermined diameter r3. Here, the diameter r3 may be different from the diameter r1. In this case, the upper edge of the main body and the lower edge of the container may be configured to simultaneously contact the horizontal plane. In the state in which the accessory rolls while the upper edge and the lower edge contact the horizontal plane, therefore, the accessory may roll while turning, with the result that it is possible to prevent the accessory from moving far away.

In addition, the container may be lost before the container is attached to an external object. In order to prevent the container from rolling far away and to overturn the container toward the upper side thereof within a short time when the container is separated from the ground, the container may include an upper edge extending along the circumference of an imaginary circle having a predetermined diameter r4. Here, the diameter r4 may be smaller than the diameter r3.

In order to achieve the first, second, and twelfth objects, an accessory includes a main body having a communication module for communicating with a predetermined network, wherein the main body may include an optical signal light-emitting unit for emitting a predetermined optical signal in a specific direction.

The main body may include a side member defining the external appearance of the circumference thereof about a central axis.

The side member may include an inclined surface forming an acute angle with the central axis in an imaginary vertical section comprising the central axis such that the main body is overturned within a short time when the main body rolls along the ground, whereby the main body is prevented from moving far away.

The inclined surface may be provided with a transmission member location hole such that the optical signal is emitted from the interior of the accessory to the outside. The accessory may further include a transmission member located in the transmission member location hole. The transmission member may include a front window exposed to the outside.

In order to achieve the thirteenth and fourteenth objects, the edge of the window may protrude so as to correspond to the inclined surface, and a central part of the window may have a surface formed so as to be parallel to the central axis in the imaginary vertical section including the central axis. The optical signal light-emitting unit may be disposed at the rear of the window to emit the optical signal such that the optical signal passes perpendicularly through the central part of the window.

The inclined surface may be formed so as to be gradually distant from the central axis in the upward direction such that a user can hold the upper end of the main body using a small amount of force.

In the case in which the inclined surface is formed so as to be gradually distant from the central axis in the upward direction, the window may include a vertical portion formed at the central part and the lower part of the window, and the vertical portion may have a surface formed so as to be parallel to the central axis in the imaginary vertical section including the central axis. In addition, in the imaginary vertical section, the surface of the vertical portion may be disposed on the same vertical line as the surface of the side member at the lower side of the transmission member location hole. As a result, the vertical portion may be prevented from protruding further than the surface of the side member, thereby achieving the thirteenth to fifteenth objects of the present invention.

In the case in which the inclined surface is formed so as to be gradually distant from the central axis in the upward direction, the window may include circumferential portions protruding from the upper, left, and right edges of the window in the direction outward from the axis. The circumferential portions may include an upper circumferential portion protruding forward from the upper part of the window and side circumferential portions protruding forward from the left and right parts of the window. The side circumferential portions may be formed so as to gradually protrude in the upward direction. As a result, the circumferential portions may be prevented from protruding further than the surface of the side member, thereby achieving the thirteenth to fifteenth objects of the present invention.

In an arbitrary horizontal section, the extent to which the surface of the edge of the window protrudes in the direction outward from the axis may be proportional to the extent to which the surface of the side member adjacent to the window protrudes in the direction outward from the axis. As a result, the gap between the transmission member and the side member may be smoothly formed.

In order to realize variable IoT environments as needed under various environments and conditions, the optical signal light-emitting unit may include a proximity sensor for emitting a predetermined optical signal in a specific direction and a control signal light-emitting unit for emitting a predetermined optical signal in a specific direction.

In order to achieve the sixteenth object, the transmission member may include a disposition guide protruding rearward from the rear surface of the window. The disposition guide may guide the positions of the proximity sensor and the control signal light-emitting unit relative to the window.

For efficient disposition, the disposition guide may include a vertically extending rib, and the proximity sensor and the control signal light-emitting unit may be disposed in spaces at the rear of the window partitioned by the disposition guide.

In order to achieve the seventeenth object, the transmission member may include a catching portion configured to contact the inner wall of the side member for preventing the transmission member from escaping from the transmission member location hole. The catching portion may protrude from the rear edge of the window.

The optical signal light-emitting unit may include a module case configured to contact the rear surface of the window such that the transmission member is fixed only by the catching portion, whereby the transmission member is prevented from escaping to the rear side.

In order to enable the optical signal light-emitting unit to smoothly perform its function while achieving the fourth object of the present invention, the accessory may further include a container having a main body-coupling portion to which the main body is separably coupled, the main body-coupling portion being provided at an upper side of the container, wherein the container may include an external coupling portion formed so as to be attached to an external object. The main body may include an exposed portion exposed in a state in which the main body is coupled to the container and an insertion portion received in the main body-coupling portion. The transmission member may be disposed at the front surface of the exposed portion.

In an accessory including a main body, the main body may include cases defining the external appearance of the main body, a main switch disposed in the cases so as to be pushed downward, and an elastic operation portion disposed so as to cross the upper side of the main switch, the elastic operation portion being elastically deformed downward to push the main switch.

In order to achieve the eighteenth object, the elastic operation portion may include a middle part disposed at the upper side of the main switch, a first bent part connected to one end of the middle part, the first bent part having a curvature that is convex downward, and a second bent part connected to the other end of the middle part, the second bent part having a curvature that is convex downward. In this case, when the elastic operation portion is pushed downward, the first and second bent parts may be further bent, with the result that the curvatures of the first and second bent parts are increased and the distance between one end a1 and the other end a2 of the first and second bent parts is decreased. When the first and second bent parts are bent and thus elastically deformed, restoring force may be generated in the first and second bent parts. As a result, elastic deformation of the elastic operation portion may be intensively concentrated on the first and second bent parts, which is advantageous in realizing elastic deformation desired by a designer and in setting the magnitude of the restoring force. That is, it is possible to predict the portion in which elastic deformation intensively occurs and to easily design restoring force by calculating restoring force proportional to the elastic deformation. In addition, since the elastic deformation is concentrated on the first and second bent parts, it is also possible to secure uniformity.

In another embodiment of the present invention, the elastic operation portion may further include a first connection part for interconnecting the support frame and the first bent part and a second connection part for interconnecting the support frame and the second bent part.

In order to achieve the first and second objects, the main body may include a communication module for communicating with a predetermined network and a controller for controlling the communication module. When the main switch is pushed, control information may be input to the controller.

In order to achieve the first and second objects, the main body may include a sensor module for sensing predetermined surrounding conditions and a remote control module for transmitting an optical signal for controlling predetermined apparatuses. The controller may control the sensor module and the remote control module.

The main body may include a switch panel defining at least a portion of the upper surface of the main body such that, when the user pushes the button, force is more accurately transmitted through a desired route to generate restoring force desired by the designer. When the switch panel is pushed downward, the switch panel may be elastically deformed. The elastic operation portion may be disposed between the switch panel and the main switch. When the switch panel is elastically deformed downward, the elastic operation portion may also be elastically deformed to push the main switch.

The switch panel may be formed of a dome-shaped plate that is convex upward such that, when the user pushes the button, force is more accurately transmitted through a desired route, e.g. through the middle part, to generate restoring force desired by the designer. In this case, the center of the dome-shaped plate may have the largest vertical displacement, with the result that force may be transmitted from the switch panel to the elastic operation portion via the middle part.

The case may include a side member defining the external appearance of the circumference of the main body about the central axis X thereof. The circumference of the switch panel may be configured to contact the inner surface of the side member. In this case, when the dome-shaped switch panel is pushed downward, the inner surface of the side member may fix the switch panel in the direction XO outward from the axis, thereby preventing the switch panel from extending in the direction XO outward from the axis. As a result, on the assumption that the other conditions of the dome-shaped switch panel are not changed, greater restoring force may be generated when the switch panel is elastically deformed downward. In addition, the elastically deformation conditions of the dome-shaped switch panel may more closely approximate ideal conditions, with the result that it is possible to realize restoring force closer to the designed restoring force.

The elastic operation portion may be generally formed so as to be convex upward. Alternatively, the elastic operation portion may be formed such that the middle part of the elastic operation portion is the highest. Alternatively, the first bent part may be configured such that the end of the first bent part adjacent to the middle part is higher than the end of the first bent part distant from the middle part, and the second bent part may be configured such that the end of the second bent part adjacent to the middle part is higher than the end of the second bent part distant from the middle part. Alternatively, the first connection part may be disposed such that the inclination of the first connection part is gradually increased from the end of the first connection part adjacent to the support frame to the end of the first connection part adjacent to the first bent part, and the second connection part may be disposed such that the inclination of the second connection part is gradually increased from the end of the second connection part adjacent to the support frame to the end of the second connection part adjacent to the second bent part. In this case, if the elastic operation portion is pushed downward without the first and second bent parts, buckling may occur in an undesired portion of the elastic operation portion, and excessive force may be required in order to push the elastic operation portion. In the present invention, however, elastic deformation of the elastic operation portion may be concentrated on the first and second bent parts without buckling.

The main body may include a support frame located in the case for supporting the elastic operation portion. The support frame may include an edge member extending along the circumference thereof about the central axis. The elastic operation portion may be configured so as to cross the center of the edge member. As a result, it is possible to prevent an increase in the distance between the opposite ends of the elastic operation portion 225 in the longitudinal direction (i.e. in the horizontal direction), whereby the elastic deformation may be concentrated on the first and second bent parts, as desired by the designer.

The first bent part and the second bent part may each be formed of a plate, the middle part may include a horizontal plate defining the upper surface of the middle part, and the horizontal plate may be thicker than the first bent part and the second bent part. Alternatively, the first bent part, the second bent part, the first connection part, and the second connection part may each be formed of a plate, the middle part may include a horizontal plate defining the upper surface of the middle part, and the horizontal plate may be thicker than the first bent part, the second bent part, the first connection part, and the second connection part. As a result, the rigidity of the horizontal plate is increased. When the elastic operation portion is pushed downward, therefore, the elastic deformation may be easily concentrated on the first and second bent parts.

The middle part may include a push protrusion protruding downward from the lower surface of the horizontal plate such that, when the user pushes the button, force is more accurately transmitted through a desired route, e.g. through the middle part, to generate restoring force desired by the designer. In this case, the center of the dome-shaped plate may have the largest vertical displacement, with the result that force may be transmitted from the switch panel to the elastic operation portion via the middle part.

In order to improve accuracy in setting restoring force and uniformity in realizing the restoring force in the present invention, the elastic operation portion may be configured such that the depth d2 of each bent part is greater than the stroke length d1.

In order to achieve the first, second, and fourth objects, the accessory according to the present invention may include a main body having a communication module for communicating with a predetermined network and a container having a main body-coupling portion, to which the main body is separably coupled, provided at the upper side thereof.

The container may be made of a material that can be injection-molded.

In order to achieve the nineteenth object, the container may include an outer portion configured to be exposed outward when the main body is coupled to the container and an inner portion defining the main body-coupling portion, the inner portion being depressed downward. The outer portion may include an outward surface formed in the direction outward from the axis. The inner portion may include a bottom portion defining the bottom thereof and an inclined portion gradually inclined upward from the bottom portion in the direction XO outward from the axis. As a result, the lower corner 279 of the main body may contact the inclined portion, whereby the main body may be coupled to or separated from the container through smooth sliding.

In order to achieve the first, second, and fourth objects, the accessory according to the present invention may include a main body having a communication module for communicating with a predetermined network and a container having a main body-coupling portion, to which the main body is separably coupled, provided at the upper side thereof.

The container may be made of a material that can be injection-molded.

The details of other embodiments are included in the following description and the accompanying drawings.

### [Advantageous Effects]

As is apparent from the above solution, the accessory according to the present invention may be attached to an apparatus or may be placed in an environment so as to realize IoT functions without replacing the apparatus or reconfiguring the environment.

In addition, it is possible to realize desired IoT environments even in the case in which various kinds of products having different standards are provided as the result of the accessory according to the present invention being attached to an apparatus or being placed in an environment.

In addition, the accessory according to the present invention includes a sensor module, and a main body is separably coupled to a container. Consequently, it is possible to sense the surrounding conditions at a desired position.

In addition, the accessory according to the present invention includes a remote control module. Consequently, it is possible to remotely control an apparatus based on information received over a network.

In addition, the accessory according to the present invention includes a container having an external coupling portion. In the case in which the optimal disposition of the main body is preset, therefore, the main body may be easily separated from the container and may then be coupled to the container again without additional effects.

In addition, the accessory according to the present invention includes a direction-setting unit. Consequently, it is possible to easily set the optimal direction of the main body. Particularly, even in the state in which the main body is not coupled to the container, it is possible to set the optimal direction of the main body during the attachment of the container.

In addition, the accessory according to the present invention includes an attachment and detachment groove and attachment and detachment protrusions. When the main body is coupled to the container in the state in which the direction of the main body is not set, the main body is incompletely coupled to the container (e.g. one of the attachment and detachment protrusions is inserted into the attachment and detachment groove). As a result, the rotation and movement of the main body are guided until the main body is completely coupled to the container (all of the attachment and detachment protrusions are inserted into the attachment and detachment groove).

In addition, the accessory according to the present invention includes a reflector or a waterproof member. Consequently, it is possible to easily realize variable IoT environments as needed under various environments and conditions.

In addition, in the state in which a plurality of container is attached to a plurality of positions, one or more main bodies may be selectively coupled to the containers. Consequently, it is possible to realize variable IoT environments using a limited number of accessories. For example, two main bodies may be attached to a door and a robot cleaner, and then the main bodies may be attached to a washing machine and a television as needed.

In addition, the possibility of losing the main body 2A, the container 2B, and the accessory (the assembly of the main body and the container) may be reduced. Furthermore, even when the main body 2A, the container 2B, and the accessory (the assembly of the main body and the container) fall onto the ground and roll, it is possible to prevent the main body, the container, and the accessory from moving far away.

In addition, the present invention has the effect of transmitting an optical signal to a distant place, thereby broadening the range in which the functions of the accessory can be used.

In addition, the present invention has the effect of minimizing the diffraction or dispersion of the optical signal such that the functions of the accessory can be smoothly exhibited.

In addition, the outer surface of the accessory may be configured to improve the usability thereof as a grip or to prevent the accessory from being lost as the result of rolling of the accessory. Consequently, it is possible to secure the quality and directivity of an optical signal emitted from the accessory while achieving this effect.

In addition, the present invention has the effect of accurately setting the relative positions of a transmission member and an optical signal light-emitting unit by guiding the disposition of the optical signal light-emitting unit.

In addition, the present invention has the effect of locating the transmission member at a correct position so as to be fixed thereto using a minimal structure.

In addition, the present invention has the effect of making it easy to design even a miniscule difference in restoring force of the push-type button.

In addition, the present invention has the effect of enabling the uniform manufacturing of products such that designed restoring force can be accurately realized.

In addition, the present invention has the effect of inducing the route through which force is transmitted and the point at which elastic deformation occurs as designed.

In addition, the present invention has the effect of enabling the user to smoothly couple or separate the main body to or from the container.

It should be noted that effects of the present invention are not limited to the effects of the present invention as mentioned above, and other unmentioned effects of the present invention will be clearly understood by those skilled in the art from the following claims.

### [Description of Drawings]

FIG. 1 is a view showing a network system according to an embodiment of the present invention;
FIG. 2 is a view showing a network system according to another embodiment of the present invention;
FIG. 3 is a perspective view of an accessory 2 according to an embodiment of the present invention, showing the state in which a main body 2A and a container 2B are coupled to each other;
FIG. 4 is a perspective view of the main body 2A of FIG. 3 when viewed at a different angle;
FIG. 5 is a perspective view of the container 2B of FIG. 3 when viewed at a different angle;
FIG. 6 is a sectional view of the main body 2A taken along line AB-AB' of FIG. 3;
FIG. 7 is a block diagram showing the functions of an embodiment of the main body of FIG. 3;
FIG. 8 is a perspective view showing a use example of a reflector 2C according to an embodiment of the present invention;
FIG. 9 is a perspective view of a waterproof member 2D according to an embodiment of the present invention;
FIG. 10 is a perspective view showing a use example of the waterproof member 2D of FIG. 9;
FIGS. 11 to 16 are views showing use examples of the accessory 2 of FIG. 3;
FIG. 17 is a conceptual view showing a use example in which the main body 2A is selectively attached to a plurality of containers 2B in the state in which the containers 2B are attached at a plurality of positions;
FIG. 18 is an exploded perspective view of the main body 2A shown in FIG. 4;
FIG. 19 is an exploded perspective view of FIG. 18 when viewed at a different angle;
FIG. 20 is a perspective view showing a switch panel 210 of FIG. 18;
FIG. 21 is a sectional view of the switch panel 210 taken along line A1-A1' of FIG. 20;
FIG. 22 is a perspective view showing a switch operation unit 220 of FIG. 18;
FIG. 23 is a perspective view of the switch operation unit 220 of FIG. 22 when viewed at a different angle;
FIG. 24 is a sectional view of the switch operation unit 220 taken along line A2-A2' of FIG. 23;
FIG. 25 is a perspective view showing a side case 230 of FIG. 18 in the state in which printed circuit boards (PCBs) 240 and 250 are not coupled to the side case 230, but a transmission member 260 is coupled to the side case 230;
FIG. 26 is a perspective view of the side case 230 of FIG. 25 when viewed at a different angle;
FIG. 27 is an elevation view of the side case 230 of FIG. 25 when viewed from above;
FIG. 28 is a sectional view of the side case 230 taken along line A3-A3' of FIG. 27;
FIG. 29 is a perspective view showing the state in which the upper PCB 240 is coupled to the side case 230 of FIG. 25;
FIG. 30 is a perspective view of the side case 230 and the upper PCB 240 of FIG. 29 when viewed at a different angle;
FIG. 31 is an elevation view of the side case 230 and the upper PCB 240 of FIG. 29 when viewed from above;
FIG. 32 is a perspective view showing the lower PCB 250 of FIG. 18;
FIG. 33 is an elevation view of the lower PCB 250 of FIG. 32 when viewed from below;
FIG. 34 is a perspective view showing the state in which the lower PCB 250 is coupled to the side case 230 and the upper PCB 240 of FIG. 29;
FIG. 35 is a perspective view of the side case 230, the upper PCB 240, and the lower PCB 250 of FIG. 34 when viewed at a different angle;
FIG. 36 is a vertical sectional view of the main body 2A of FIG. 3 when the main body 2A is cut across the transmission member 260, showing the section of the transmission member 260;
FIG. 37 is a perspective view of the transmission member 260 of FIG. 18;
FIG. 38 is a sectional view of the transmission member 260 of FIG. 18 when the transmission member 260 is cut horizontally;
FIG. 39 is a perspective view showing a bottom case 270 of FIG. 18;

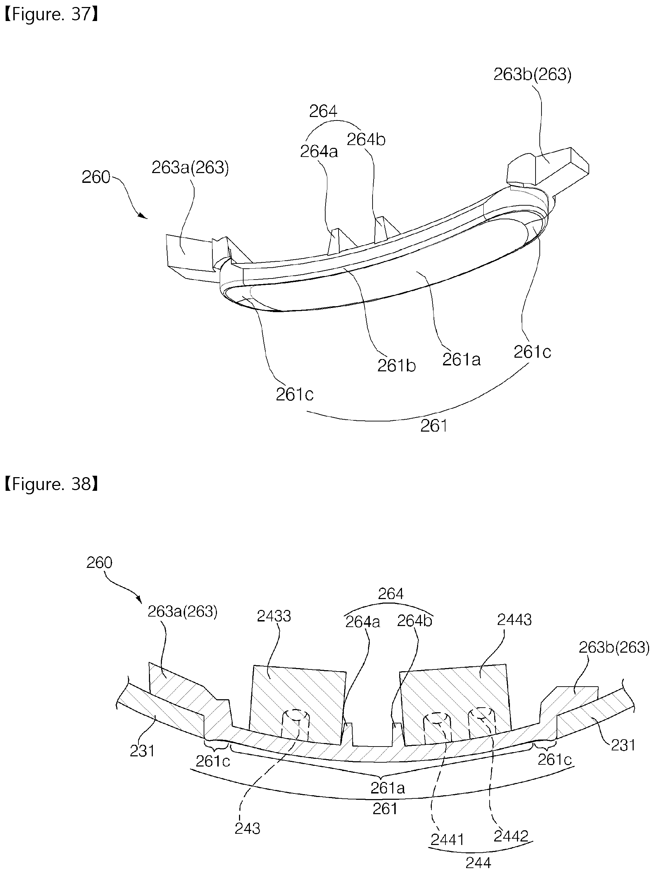

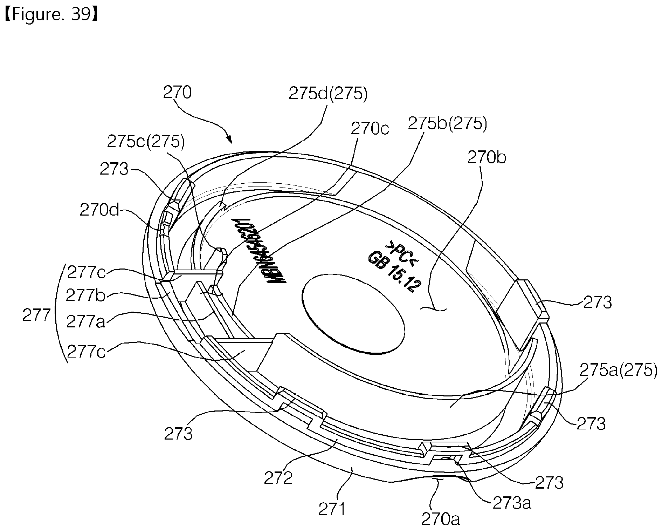

FIG. 37 is a perspective view of the bottom case 270 of FIG. 39 when viewed at a different angle;

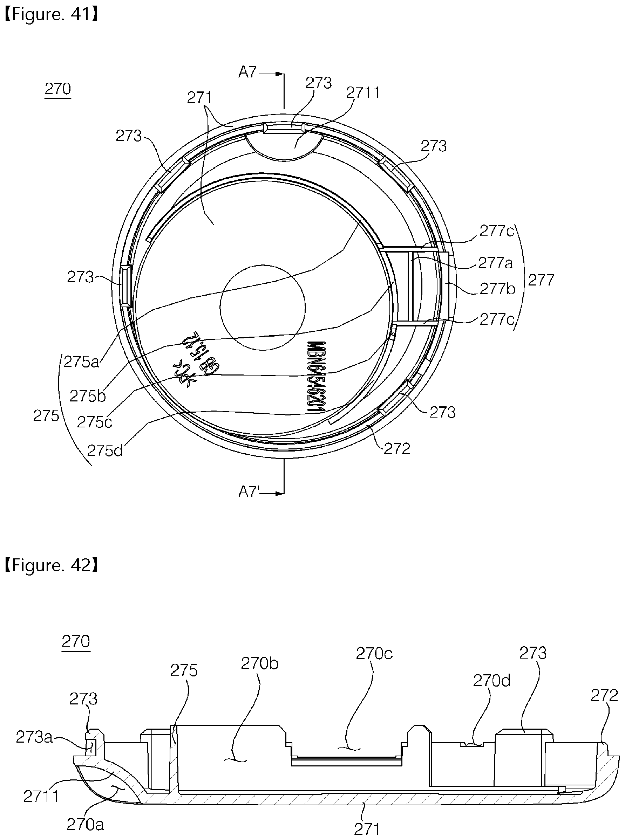

FIG. 41 is an elevation view of the bottom case 270 of FIG. 39 when viewed from above;
FIG. 42 is a sectional view of the bottom case 270 taken along line A7-A7' of FIG. 41;

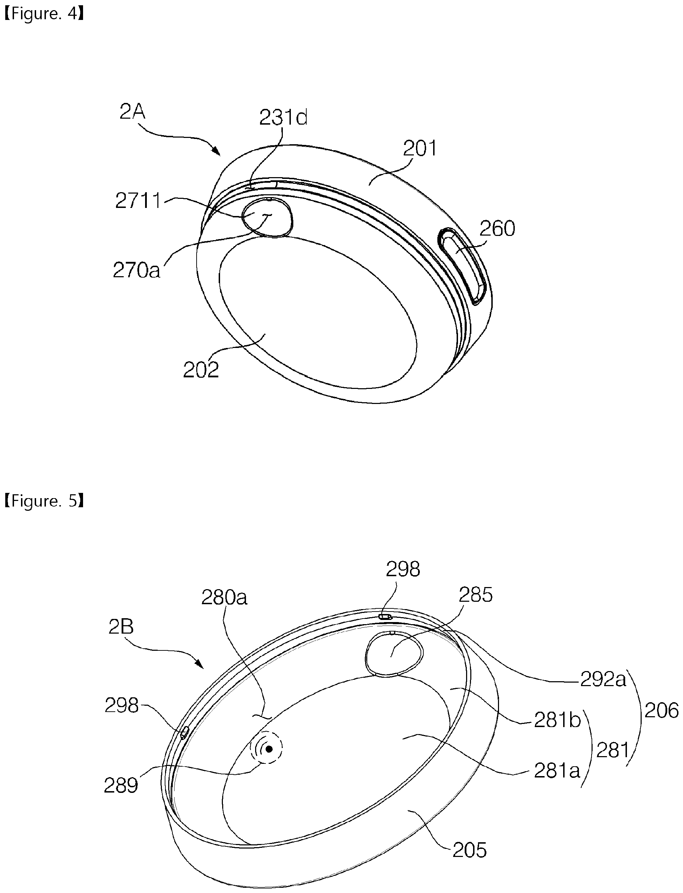

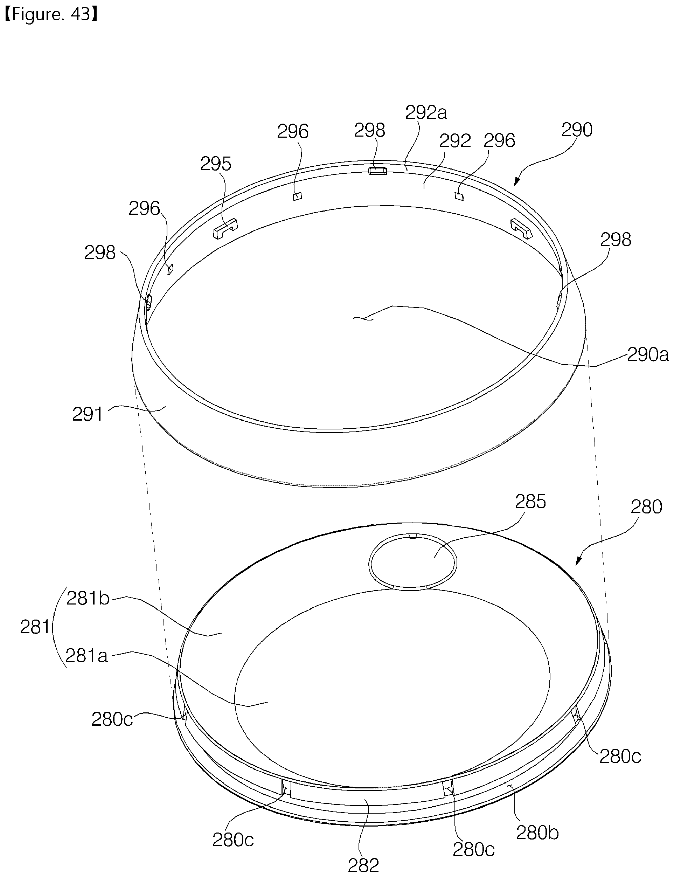

FIG. 43 is an exploded perspective view of the container 2B shown in FIG. 5;

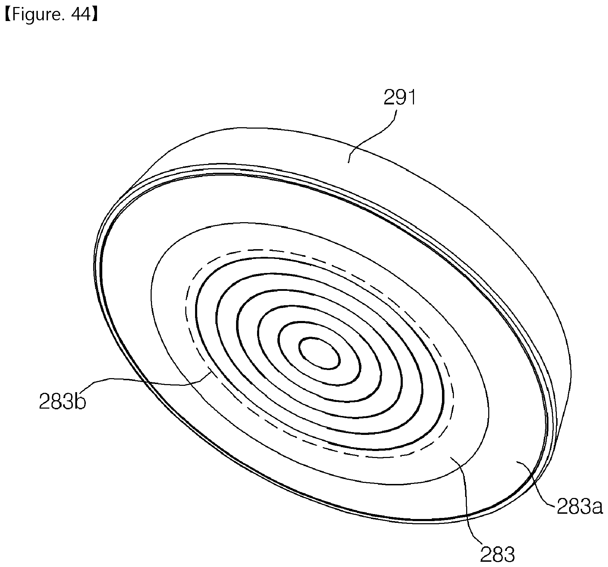

FIG. 44 is a perspective view of the container 2B of FIG. 5 when viewed at a different angle;

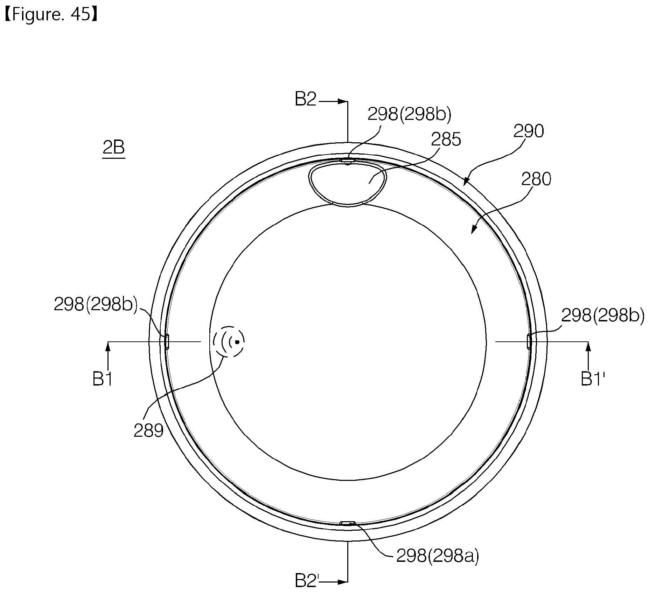

FIG. 45 is an elevation view of the container 2B of FIG. 5 when viewed from above; and

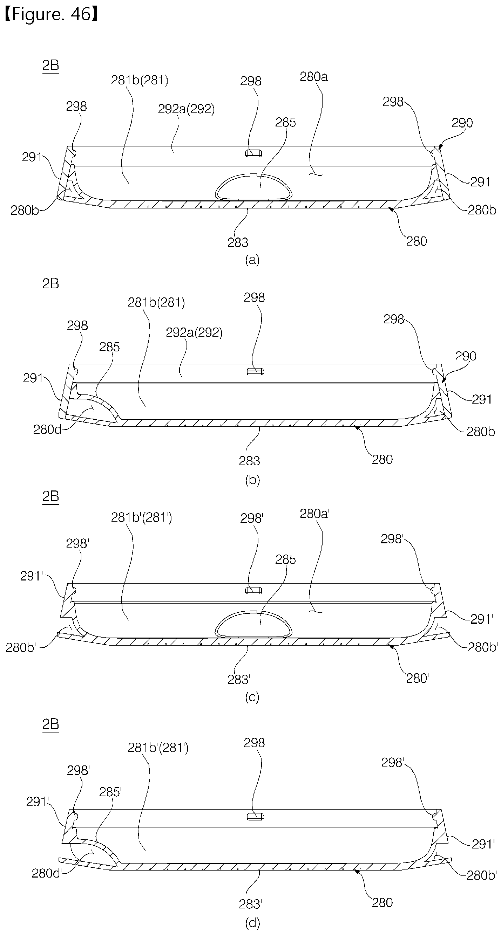

FIG. 46 is a sectional view of the container 2B of FIG. 45, wherein FIG. 46(a) is a sectional view taken along line B1-B1' and FIG. 46(b) is a sectional view taken along line B2-B2'.

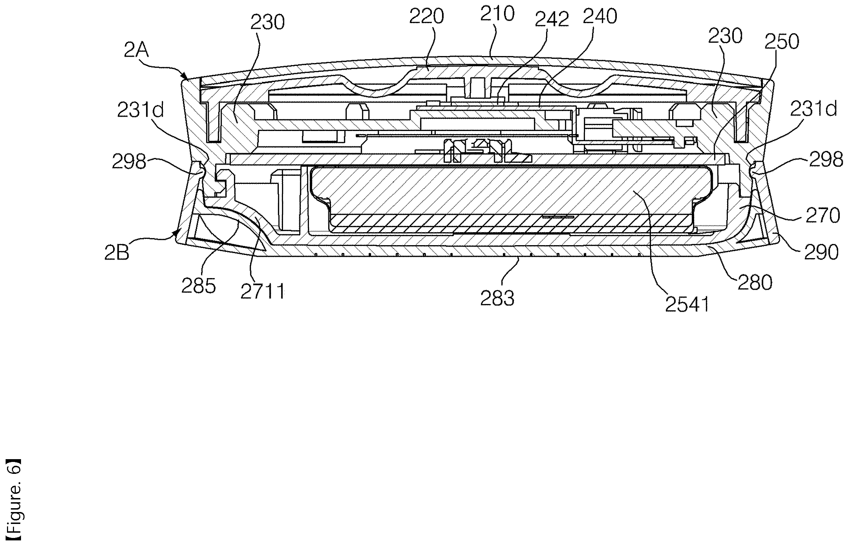

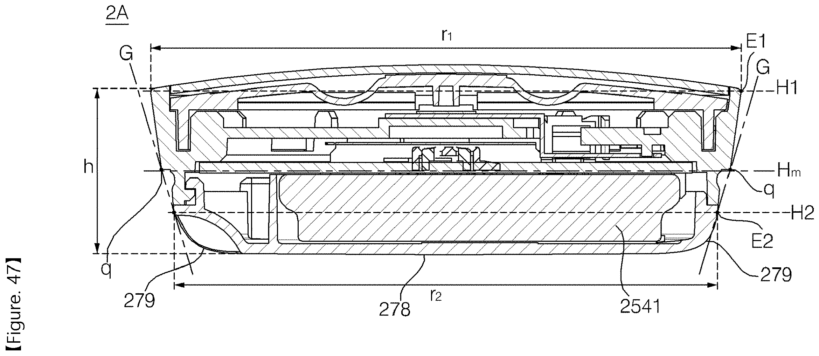

FIG. 47 is a sectional view showing only the main body 2A of FIG. 6, without the container 2B;

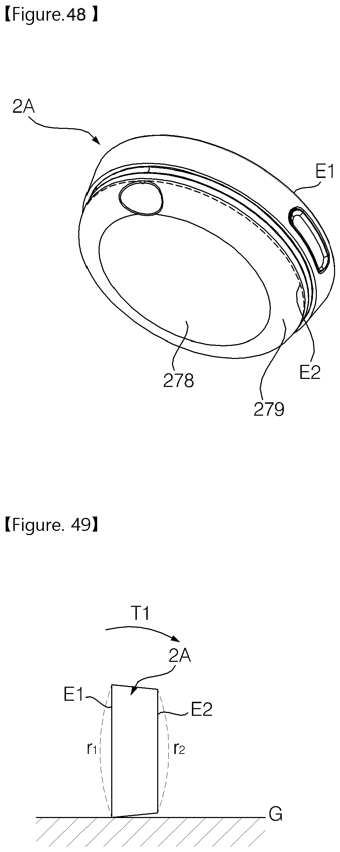

FIG. 48 is a perspective view showing an upper edge E1 and a lower edge E2 of the main body 2A of FIG. 47;

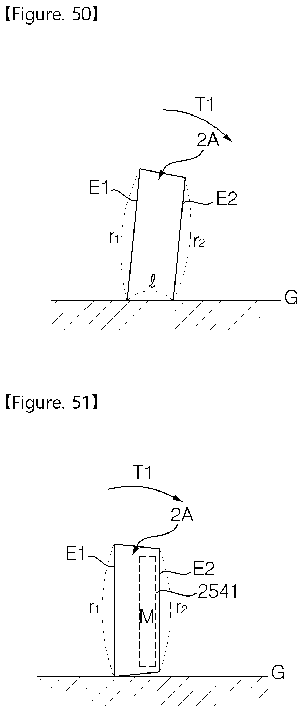

FIGS. 49 to 51 are conceptual views showing the direction T1 in which the main body 2A of FIG. 47 is overturned when the main body 2A rolls on a horizontal plane G when viewed from side, wherein FIG. 49 is a view showing the state in which only the upper edge E1 of the main body 2A contacts the ground, FIG. 50 is a view showing the state in which the lower edge E2 of the main body 2A contacts the ground, and FIG. 51 is a view showing the position of a battery 2541 in FIG. 49;

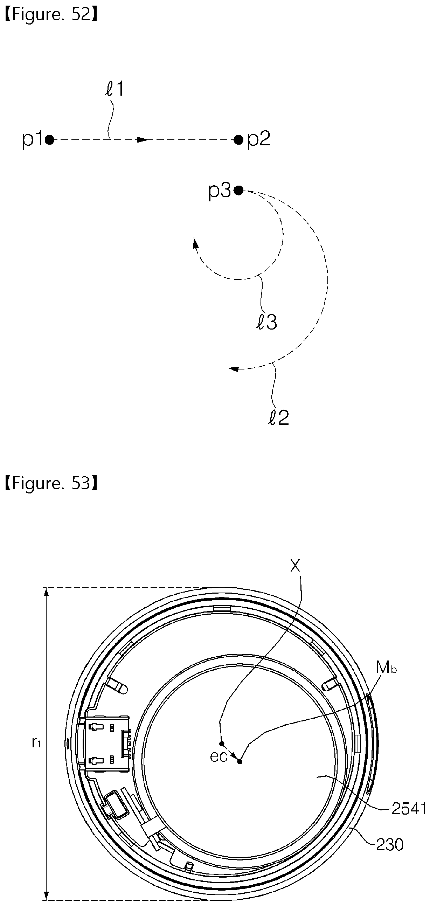

FIG. 52 is a conceptual view showing imaginary tracks formed by the upper edge E1 and the lower edge E2 of the main body 2A on the horizontal plane G when the main body 2A is overturned while rolling along the horizontal plane G in FIGS. 49 to 51;
FIG. 53 is an elevation view of the main body 2A of FIG. 4, without the bottom case 270, when viewed from below;

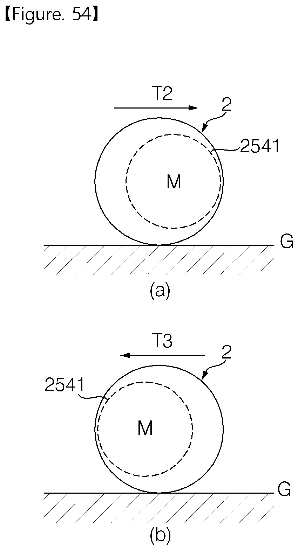

FIG. 54 is a conceptual view showing the directions T2 and T3 in which torque is applied depending on the eccentric position of the battery 2541 when the main body 2A of FIG. 53 rolls on the ground;

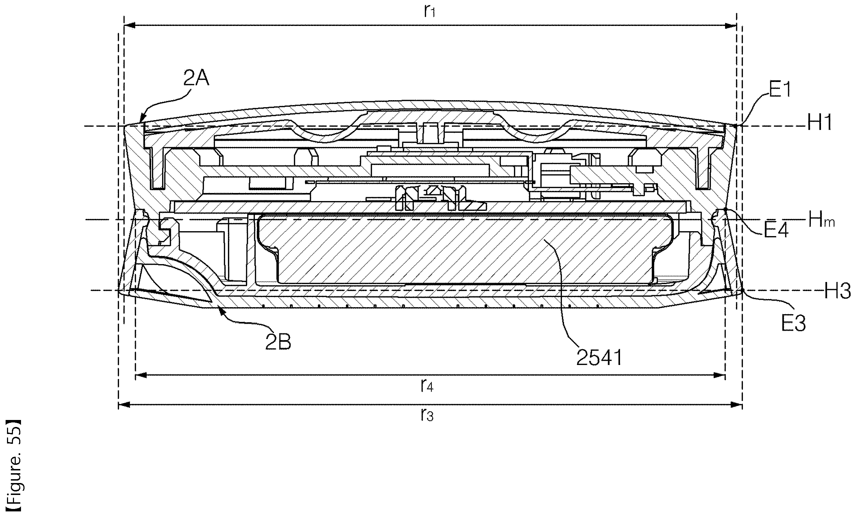

FIG. 55 is a view showing the diameters r1, r3, and r4 of the accessories 2A and 2B of FIG. 6;

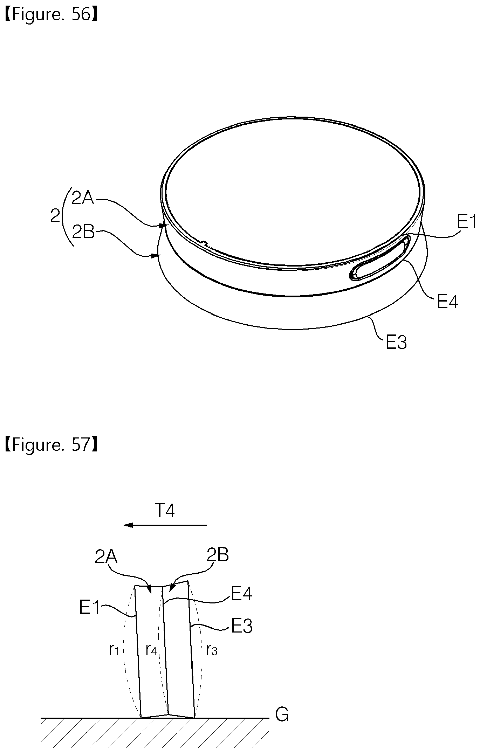

FIG. 56 is a view showing the upper edge E1 of the main body, a lower edge E3 of the container, and an upper edge E4 of the container in the accessories 2A and 2B of FIG. 55;
FIG. 57 is a conceptual view showing the direction T4 in which the accessories 2A and 2B of FIG. 56 are turned when the accessories 2A and 2B roll on the horizontal plane G when viewed from side;

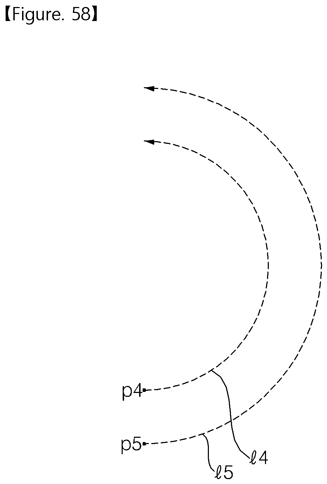

FIG. 58 is a conceptual view showing imaginary tracks formed by the upper edge E1 of the main body and the lower edge E3 of the container on the horizontal plane G when the accessories 2A and 2B of FIG. 57 are turned while rolling along the horizontal plane G;

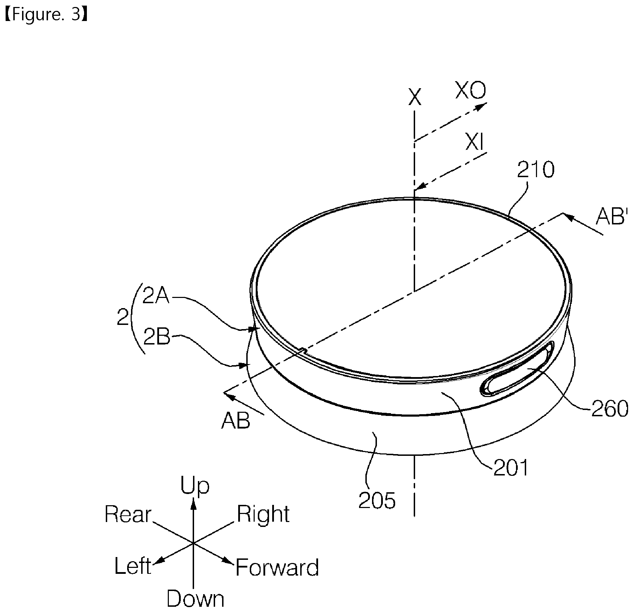

In the following description, the terms "front," "rear," "left," "right," "upper," and "lower," which indicate directions, are defined as shown in FIG. 3. However, these definitions are given only for clear understanding of the present invention, and the directions may be differently defined depending on the circumstances.

In FIG. 3, a central axis X means an imaginary vertical axis passing through the center of an accessory 2A and 2B according to an embodiment of the present invention, a direction that becomes distant from the central axis X is defined as a direction XO outward from the axis, a direction that becomes close to the central axis X is defined as a direction XI inward toward the axis, and a direction that rotates about the central axis X is defined as a circumferential direction. However, these definitions are given only for clear understanding of the present invention, and the directions may be differently defined depending on the circumstances.

### [Best Mode]

Advantages and features of the present invention and a method of achieving the same will be more clearly understood from embodiments described below with reference to the accompanying drawings. The same reference numbers will be used throughout the specification to refer to the same or like elements.

A network may include an accessory 2 having a communication function and a hub 1 communicating with the accessory 2. Hereinafter, a home network will be described as an example of the network. However, the present invention is not limited thereto.

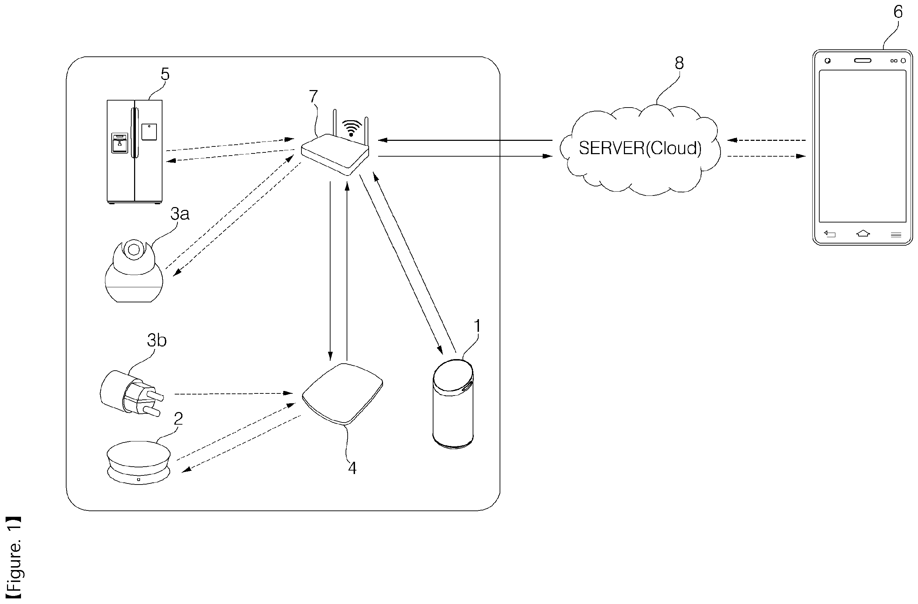

FIG. 1 is a view showing a home network system according to an embodiment of the present invention.

Referring to FIG. 1, the home network system may include accessories 2, 3a, and 3b, a gateway 4, an access point 7, and a hub 1, which transmit information to each other through a wired or wireless network. In addition, the home network system may further include a server 8 and a terminal 6.

The network may be configured based on Wi-Fi, Ethernet, ZigBee, Z-wave, or Bluetooth. The accessories 2, 3a, and 3b, the gateway 4, the access point 7, and the hub 1 may have communication modules that can access the network according to a predetermined protocol.

The communication modules included in the respective devices 2, 3a, 3b, 4, 7, and 1 constituting the network system are set based on the configuration of the network. Each device may include a plurality of communication modules based on the communication scheme between the devices and the network and between the devices.

The accessories 2, 3a, and 3b each include at least one communication module for access to the network. The communication module communicates with a predetermined network. The communication of the communication module with the predetermined network means that the communication module communicates with at least one of the gateway 4, the access point 7, the hub 1, the server 8, and the terminal 6, which constitute the network.

The accessories 2, 3a, and 3b may each include a sensor module for sensing the surrounding conditions. The accessories 2, 3a, and 3b may each include a control module that exhibits a specific function affecting the surrounding conditions. The accessories 2, 3a, and 3b may each include a remote control module 25 for transmitting an optical signal (e.g. an infrared signal) for controlling predetermined apparatuses.

The accessories 2, 3a, and 3b including the sensor modules may each be a device including an atmosphere sensor, a humidity sensor, a temperature sensor, a radioactivity sensor, a heat sensor, a gas sensor, an air quality sensor, an electronic nose sensor, a health care sensor, a biometric sensor, a sleep sensor (e.g. a sensor for sensing snoring, sleep apnea, and tossing of a user while the user sleeps in the state in which the sensor is attached to the pajamas or underwear of the user), a proximity sensor, an illumination sensor, an acceleration sensor, a magnetic sensor, a gravity sensor, a gyroscope sensor, a motion sensor, an RGB sensor, an infrared (IR) sensor, an ultrasonic sensor, a remote sensor, an SAR, a radar, or an optical sensor (e.g. a video sensor or an image sensor).

The accessories 2, 3a, and 3b including the control modules may each be a smart light for controlling lighting, a smart plug for controlling the application and intensity of electric power, a smart temperature controller for controlling whether or not to operate a boiler or an air conditioner and the operation level of the boiler or the air conditioner, or a smart gas lock for controlling whether or not to interrupt gas.

The accessories 2, 3a, and 3b including the remote control modules may each be a device including an infrared LED for transmitting an infrared (IR) signal to a remote-controllable electric home appliance.

The accessories 2, 3a, and 3b may be configured to have predetermined purposes so as to exhibit predetermined performance. For example, the accessory 3a may be an image camera, and the accessory 3b may be a smart plug.

The accessory 2 according to the embodiment of the present invention may be configured so as to be installed at a position desired by a user. In addition, the accessory 2 may be configured to be used for various purposes. For example, the accessory 2 may be attached to an external object, such as an electric home appliance, a door, a window, or a wall. Detailed use examples of the accessory 2 will be described hereinafter.

The gateway 4 enables one or more accessories 2 and 3b to communicate with the access point 7. The gateway 4 communicates with the accessory 2 in a wireless fashion. The gateway 4 communicates with the access point 7 in a wired or wireless fashion. For example, the communication between the gateway 4 and the access point 7 may be based on Ethernet or Wi-Fi.

The access point 7 may be connected to the server 8 through wired or wireless communication. The server 8 may be accessible over the Internet. Various terminals 6 connected to the Internet may communicate with the server 8. For example, the terminal 6 may be a personal computer (PC) or a mobile terminal such as a smart phone.

The accessories 2 and 3b may be configured to communicate with the gateway 4. In another example, the accessory 3a may be configured to communicate with the access point 7 directly, rather than via the gateway 4.

The access point 7 may be configured to communicate with the accessory 3a or with another device 5 including a communication module directly, rather than via the gateway 4. The devices 5 and 3a may each include a Wi-Fi communication module, through which the devices 5 and 3a can communicate with the access point 7 directly, rather than via the gateway 4.

The hub 1 may be connected to the access point 7 through wired communication (e.g. Ethernet) or wireless communication (e.g. Wi-Fi). Communication between the hub 1 and the accessories 2 and 3b may be performed via the gateway 4 and the access point 7. In another example, communication between the hub 1 and the accessory 3a or the device 5 may be performed via the access point 7.

Specifically, signals from the accessories 2 and 3b may be transmitted to the hub 1 via the gateway 4 and the access point 7 in turn, and a signal from the hub 1 may be transmitted to the accessories 2 and 3b via the access point 7 and the gateway 4 in turn. In another example, a signal from the accessory 3a or the device 5 may be transmitted to the hub 1 via the access point 7, and a signal from the hub 1 may be transmitted to the accessory 3a or the device 5 via the access point 7.

For example, information acquired by a sensor module 24 of each of the accessories 2, 3a, and 3b may be transmitted to the server 8, the terminal 6, or the hub 1 over the network. In addition, a signal for controlling the sensor module, the control module, or the remote control module from the server 8, the terminal 6, or the hub 1 may be transmitted to the accessory 2. The signals are transmitted via the gateway 4 and/or the access point 7.

Communication between the accessories 2, 3a, and 3b and the hub 1 may be performed based only on the gateway 4 and the access point 7. For example, even in the case in which the home network is not connected to an external communication network such as the Internet, communication between the accessories 2, 3a, and 3b and the hub 1 may still be performed.

In the case in which the hub 1 is connected to the server 8 via the access point 7, information transmitted from the hub 1 or the accessory 2 may be stored in the server 8. The information stored in the server 8 may be received by the terminal 6 connected to the server 8.

In addition, information transmitted from the terminal 7 may be transmitted to the hub 1 or the accessory 2 via the server 8. A smart phone, which is a terminal that has been widely used in recent years, provides a graphic-based user interface (UI). Consequently, the accessory 2 may be controlled, or information received from the accessory 2 may be processed and displayed through the UI. In addition, an application installed in the smart phone may be updated so as to extend the range of functions that can be performed by the accessory 2.

Meanwhile, although not shown, the terminal 6 and the hub 1 may communicate with each other directly without the involvement of the server 8. For example, the terminal 6 and the hub 1 may communicate with each other directly via Bluetooth.

Meanwhile, the accessory 2 may be controlled or information received from the accessory 2 may be processed and displayed using only the hub 1 without using the terminal 6. To this end, the hub 1 may include an input unit (not shown) for receiving a command for controlling the accessory 2 and a visual or auditory output means (e.g. a display or a speaker) for displaying the process information. The input unit of the hub 1 may include various buttons, a touch-type display, or a microphone. In the case in which the hub includes a microphone, the controller of the hub may recognize the user's voice input through the microphone and extract a command therefrom.

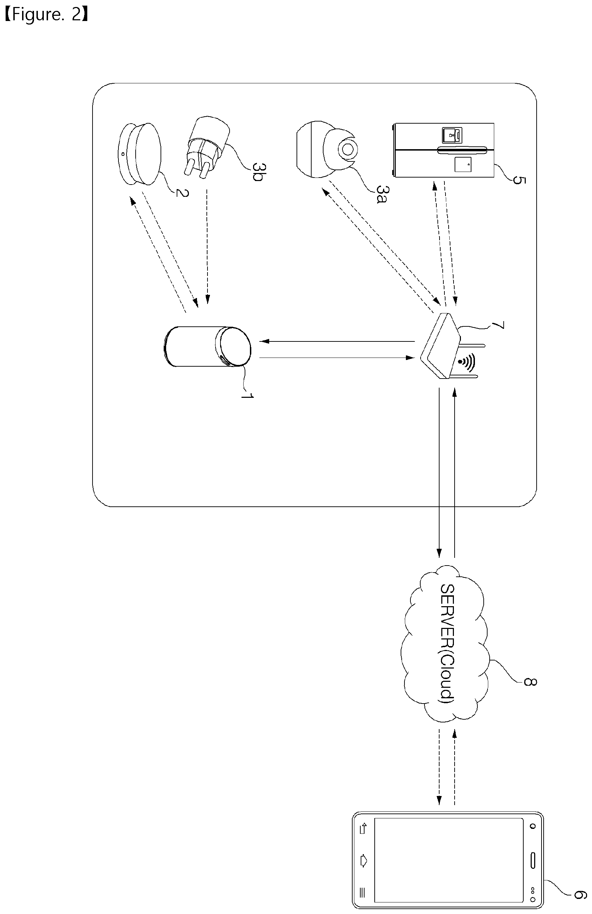

FIG. 2 is a view showing a home network system according to another embodiment of the present invention.

The home network system according to this embodiment is substantially identical to the home network system according to the previous embodiment except that the gateway 4 is not provided, and the hub 1 also performs the functions that the gateway 4 performs.

Referring to FIGS. 3 to 10, an accessory 2 according to an embodiment of the present invention includes a main body 2A having a communication module 26 for communicating with a predetermined network and a container 2B having a main body-coupling portion 280a to which the main body 2A is detachably attached. In the case in which the main body 2A includes a proximity sensor 244, the accessory 2 may further include a reflector 2C for reflecting an optical signal (e.g. an infrared signal) transmitted by a proximity signal light-emitting unit 2441 of the proximity sensor 244. The accessory 2 may further include a waterproof member 2D separably detached to an apparatus to which the main body 2A and the container 2B are coupled.

The main body 2A, the container 2B, the reflector 2C, and the waterproof member 2D are separate members, which may be variably combined depending on the purpose desired by a user. The main body 2A, the container 2B, the reflector 2C, and the waterproof member 2D may be provided in different numbers.

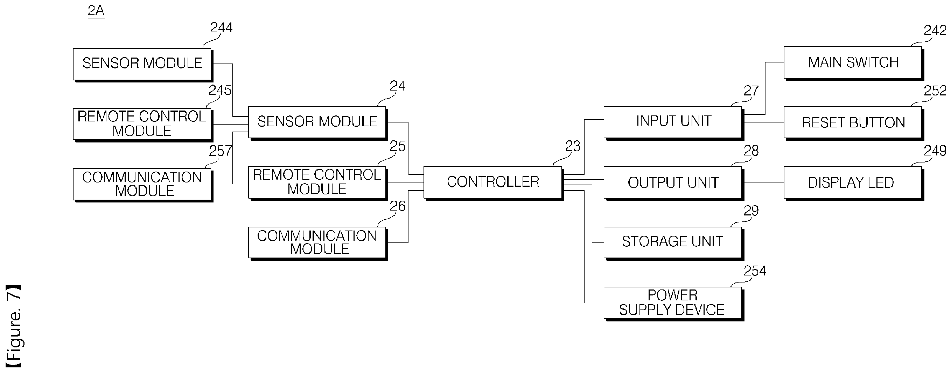

The functional configuration of the main body 2A will be described with reference to FIG. 7. The main body 2A may include a controller 23 for controlling at least one function of the main body 2A. Of course, the controller 23 may be provided in the server 8, the terminal 6, or the hub 1. Even in this case, the present invention may be embodied over a network.

The main body 2A may include a sensor module 24 for sensing predetermined surrounding conditions. The "surrounding conditions" means the surroundings of the main body 2A, which can be determined based on the type of the sensor provided in the main body 2A or information about a specific direction relative to the main body 2A.

The sensor module 24 may include a plurality of sensors for sensing different kinds of targets. The targets may include atmosphere, temperature and humidity, radioactivity, heat, gas, air quality, electronic elements, various biometric elements, various sleep elements, proximity, illumination, acceleration, magnetism, gravity, motion, infrared (IR) light, ultrasonic waves, video, and images that can be sensed by the sensors.

In this embodiment, the sensor module 24 may include a proximity sensor 244 for sensing the proximity of the main body 2A to an external object in a specific direction. The sensor module 24 may include a temperature and humidity sensor 245. In this specification, the temperature and humidity sensor 245 may be any one selected from among a temperature sensor, a humidity sensor, and a temperature and humidity sensor. The sensor module 24 may include an acceleration sensor 257 for sensing the movement or vibration of the main body 2A.

The main body 2A may include a remote control module 25 for transmitting an optical signal for controlling predetermined apparatuses. The "predetermined apparatuses" may be predetermined remote-controllable apparatuses. For example, the predetermined apparatuses may include a washing machine, a refrigerator, an air conditioner, a robot cleaner, and a TV that can be controlled by a remote controller.

The remote control module 25 includes a control signal light-emitting unit 243 for emitting a predetermined optical signal, for controlling a predetermined apparatus, in a specific direction from the main body 2A. For example, the control signal light-emitting unit 243 may be an LED for emitting infrared light.

The main body 2A may include at least one selected from between the sensor module 24 and the remote control module 25. The main body 2A may include both the sensor module 24 and the remote control module 25. In this case, a user may use the main body 2A more flexibly when required.

The main body 2A may include a communication module 26 for communicating with a predetermined network. The communication module 26 may be changed depending on the communication scheme of a device with which the communication module 26 will communicate directly. Information acquired by the sensor module 24 may be transmitted over the network through the communication module 26. The main body 2A may receive information over the network through the communication module 26, and the sensor module 24, the remote control module 25, an output unit 28, or a storage unit 29, may be controlled based on the received information.

The main body 2A may include an input unit 27 for allowing a user to input a command directly, rather than via the communication module 26.

The input unit 27 may be a power switch (not shown) for turning ON/OFF the main body 2A.

The input unit 27 may include a main switch 242 for setting the functions of the main body 2A, pairing of the main body 2A with a predetermined network, or pairing of the main body 2A with the terminal 6 or the hub 1. The main body 2A may be preset such that various commands are input to the main body 2A through a combination of the time for which the main switch 242 is pushed and/or the number of times the main switch 242 is pushed in succession.

The input unit 27 may include a reset button 252 for resetting the preset functions of the main body 2A. Previous pairing settings or information stored in the storage unit 29 may be reset by pushing the reset button 252.

The main body 2A may include a storage unit 29 for storing information acquired by the sensor module 24. The storage unit 29 may store information received through the communication module 26 over the network N. The storage unit 29 may store commands from the input unit 27.

The main body 2A may include a power supply device 254 for supplying power to the components of the main body 2A. The power supply device 254 may include a battery 2541. The battery 2541 may be provided for the purpose of charging.

The controller 23 may receive control information from the input unit 27. The controller 23 may control the output unit 28 to output predetermined information.

The controller 23 may control the communication module 26. The controller 23 may control the communication module 26 based on the control information received from the input unit 27. The controller 23 may perform control such that information received through the communication module 26 over the network is stored in the storage unit 29. The controller 23 may perform control such that information stored in the storage unit 29 is transmitted through the communication module 26 over the network.

The controller 23 may control whether or not to operate the sensor module 24. The controller 23 may control whether or not to operate the sensor module 24 based on the control information received through the communication module 26 over the network. The controller 23 may control the sensor module 24 based on the control information received from the input unit 27. The controller 23 may control the sensor module 24 based on the control information stored in the storage unit 29. The controller 23 may perform control such that information about the surrounding conditions, sensed by the sensor module 24, is stored in the storage unit 29. The controller 23 may perform control such that the information about the surrounding conditions, sensed by the sensor module 24, is transmitted through the communication module 26 over the network.

The controller 23 may control whether or not to transmit the information about the surrounding conditions over the network. The information about the surrounding conditions is predetermined information sensed under predetermined surrounding conditions. The controller 23 may control whether or not the sensor module 24 is to sense information about the surrounding conditions. Even when the sensor module 24 senses information about the surrounding conditions, the controller 23 may control whether or not to transmit the sensed information about the surrounding conditions over the network.

The controller 23 may perform control such that the type of the target transmitted over the network is changed. For example, the controller 23 may perform control such that a state change is performed from a first state in which a first target (e.g. proximity information) is sensed and information about the first target is transmitted over the network to a second state in which a second target (e.g. temperature and humidity) is sensed and information about the second target is transmitted over the network. In another example, the controller 23 may perform control such that a state change is performed from a third state in which a first target and a second target are sensed and only information about the first target is transmitted over the network to a fourth state in which a first target and a second target are sensed and only information about the second target is transmitted over the network.

The controller 23 may control whether or not to operate the remote control module 25. The controller 23 may control whether or not to operate the remote control module 25 based on control information received through the communication module 26 over the network. The controller 23 may control the remote control module 25 based on the control information received from the input unit 27. The controller 23 may control the remote control module 25 based on the control information stored in the storage unit 29.

The controller 23 may control whether or not to operate the remote control module 25. The controller 23 may perform control so as to change whether or not to operate the remote control module 25. For example, the controller 23 may perform control such that a state change is performed from a fifth state, in which the remote control module 25 is not operated, to a sixth state, in which the remote control module 25 is operated.

In the above description, the terms "first state," "second state," "third state," "fourth state," "fifth state," and "sixth state" are used only to avoid confusion between designated objects, and do not indicate the sequence or importance of the states.

Referring to FIGS. 3 to 6, the main body 2A and the container 2B are separably coupled to each other. The main body-coupling portion 280a may protrude such that a portion of the main body 2A is coupled to the main body-coupling portion 280a. In this embodiment, the main body-coupling portion 280a is a depressed receiving space. The main body-coupling portion 280a may be provided in the upper side of the container 2B.

The main body 2A includes an exposed portion 201, which is exposed in the state in which the main body 2A is coupled to the container 2B, and an insertion portion 202, which is received in the main body-coupling portion 280a.

The exposed portion 201 is formed at the upper side of the main body 2A. The exposed portion 201 includes a side surface exposed in a direction XO outward from the axis and a top surface exposed to the upper side.

Various kinds of switches 210, an opening 231b or a transmission member 260 for the sensor module 24, or a transmission member 260 for the remote control module 25 is disposed in the exposed portion 201. Even in the state in which the main body 2A is coupled to the container 2B, a user may contact the switch panel 210 of the main body 2A. Even in the state in which the main body 2A is coupled to the container 2B, the sensor module 24 or the remote control module 25 may be operated smoothly.

In this embodiment, the transmission member 260 and/or the sensor hole 231b is formed at the side surface of the exposed portion 201. The transmission member 260 and the sensor hole 231b may be disposed in opposite directions. The transmission member 260 may be disposed at the front surface of the exposed portion 201, and the sensor hole 231b may be disposed at the rear surface of the exposed portion 201. In addition, the switch panel 210 may be disposed at the top surface of the exposed portion 201. A user may push the switch panel 210 downward from above.

The side surface of the exposed portion 201 may be an inclined surface that becomes gradually closer to the central axis X in the downward direction. The side surface of the exposed portion 201 may be an inclined surface that becomes gradually further away from the central axis X in the upward direction. The side surface of the exposed portion 201 may be a truncated conical surface. A side member 231 of a side case 230, a description of which will follow, defines the side surface of the exposed portion 201.

An upper edge E1 of the main body 2A may be formed in a circular shape having a predetermined upper diameter. The upper edge E1 of the main body 2A may define the upper edge E1 of the exposed portion 201.

When the main body 2A is coupled to the container 2B, the lower end of the exposed portion 201 may contact the upper end of the container 2B. The lower end of the exposed portion 201 may contact the upper end of the main body-coupling portion 280a. The lower edge of the exposed portion 201 may be circular. The diameter of the lower edge of the exposed portion 201 may be smaller than the upper diameter.

The side surface of the exposed portion 201 includes an inclined surface, constituted by a set of lines interconnecting the upper edge of the exposed portion 201 and the lower edge of the exposed portion 201 by the shortest route. The side surface of the exposed portion 201 is an inclined surface that is oblique relative to the vertical direction, in which the upper edge of the exposed portion 201 and the lower edge of the exposed portion 201 are connected to each other.

The top surface of the exposed portion 201 may be dome-shaped. The top surface of the exposed portion 201 may includes an upper side surface of the switch panel 210. The switch panel 210 may be formed in a circular shape having a diameter less than the upper diameter when viewed from above. Specifically, the side surface of the exposed portion 201 may be defined by a wall having a predetermined thickness, and the switch panel 210 may be disposed in a space surrounded by the side surface of the exposed portion 201, which is defined in a direction XI inward toward the axis at the upper end of the exposed portion 201. The switch panel 210 may be coupled to a switch operation unit 220, a description of which will follow, such that the switch panel 210 is movable upward and downward.

The insertion portion 202 is formed at the lower part of the main body 2A. The insertion portion 202 includes a side surface exposed in the direction XO outward from the axis and a lower surface exposed to the lower side.

The insertion portion 202 is received in the main body-coupling portion 280a such that the main body 2A and the container 2B are coupled to each other. The insertion portion 202 may be inserted into the main body-coupling portion 280a from above the container 2B.

The main body 2A may include a battery 2541 for charging. In this case, the main body 2A is provided with a charging terminal 255. The charging terminal 255 may be formed at the side surface of the insertion portion 202. The accessory 2 is configured such that the charging terminal 255 connected to the battery 2541 is exposed when the main body 2A is separated from the container 2B.

The main body 2A may include a reset button 252. The main body 2A is configured such that the reset button 252 is exposed when the main body 2A is separated from the container 2B.

The insertion portion 202 may be provided with a direction-setting recess 270a, a description of which will follow. The direction-setting recess 270a is formed in one side of the lower edge of the insertion portion 202. The direction-setting recess 270a is defined by a depression 2711 in the insertion portion 202.

The insertion portion 202 may be provided with an attachment and detachment groove 231d, a description of which will follow. The attachment and detachment groove 231d extends along the circumference of the insertion portion 202 in the circumferential direction. The attachment and detachment groove 231d may extend in a circular shape. The attachment and detachment groove 231d is formed in the side surface of the insertion portion 202 in the direction XO outward from the axis. The attachment and detachment groove 231d is depressed in the direction XI inward toward the axis.

In this embodiment, the charging terminal 255 is formed at the lower side of the sensor hole 231b. The reset button 252 may be formed on the surface in which the attachment and detachment groove 231d is formed.

The edge of the main body-coupling portion 280a may be circular, and the insertion portion 202, which is inserted into the main body-coupling portion 280a, may be generally cylindrical. The side surface of the insertion portion 202 in the direction XO outward from the axis and the lower surface of the insertion portion 202 in the downward direction are connected to each other in a round shape. The direction-setting recess 270a is formed in one side of the round portion of the side surface and the lower surface of the insertion portion 202.

The lower surface of the insertion portion 202 defines the lower surface of the main body 2A. The lower surface of the main body 2A has an area less than the area defined by the upper edge of the main body 2A. The lower surface of the main body 2A is configured to overlap the area defined by the upper edge of the main body 2A when viewed from below.

The lower surface of the main body 2A may be generally circular. The diameter of the lower surface of the main body 2A may be smaller than the upper diameter of the main body 2A.

The side surface of the insertion portion 202 may include an inclined surface, which is inclined in the same direction as the side surface of the exposed portion 201. The side surface of the insertion portion 202 may be a truncated conical surface.

The side surface of the main body 2A in the direction XO outward from the axis includes the side surface of the exposed portion 201 and the side surface of the insertion portion 202. The side surface of the main body 2A may include a partially stepped portion. The side surface of the main body 2A may include a surface having a recess.

The container 2B includes an outer portion 205, which is exposed outward when the main body 2A is coupled to the container 2B, and an inner portion 206, which defines the main body-coupling portion 280a.

The inner portion 206 of the container 2B may be depressed. The inner portion 206 of the container 2B may be depressed downward. The inner portion 206 may be depressed downward from the upper middle of the container 2B.

The inner portion 206 includes an inner surface 281 of a container body 280, a description of which will follow, and an inwardly exposed surface 292a of a container side member 290, a description of which will follow. The inner surface 281 includes a bottom portion 281a, which defines the bottom of the main body-coupling portion 280a and an inclined portion 281b, which is gradually inclined upward from the bottom portion 281a in the direction XO outward from the axis. The bottom portion 281a may be circular when viewed from above. The inclined portion 281b may extend such that the inclination of the inclined portion 281b becomes steeper in the direction XO outward from the axis. The inwardly exposed surface 292a may be disposed at the upper side of the inclined portion 281b. The inwardly exposed surface 292a may be formed further inward than the inclined portion 281b in the direction XO outward from the axis.

The inner portion 206 of the container 2B may be provided with a direction-setting protrusion 285, which is engaged into the direction-setting recess 270a. The direction-setting protrusion 285 is disposed at a position distant from the central axis X. The direction-setting protrusion 285 is defined by a portion of the inclined portion 281b that protrudes.

The inner portion 206 of the container 2B may be provided with an attachment and detachment protrusion 298, which is inserted into the attachment and detachment groove 231d when the main body 2A is coupled to the container 2B. The attachment and detachment protrusion 298 may be disposed at the upper circumference of the inner portion 206. The attachment and detachment protrusion 298 is disposed at the upper side of the inclined portion 281b. The attachment and detachment protrusion 298 may extend along the circumference of the inner portion 206. In this embodiment, a plurality of attachment and detachment protrusions 298 is disposed along the circumference of the inner portion 206 in the state of being spaced apart from each other. The attachment and detachment protrusions 298 may be arranged at uniform intervals. The attachment and detachment protrusions 298 are formed on the surface of the inner portion 206 in the direction XI inward toward the axis. The attachment and detachment protrusions 298 protrude in the direction XI inward toward the axis. The attachment and detachment protrusions 298 may be formed on the inwardly exposed surface 292a.

The outer portion 205 includes a side surface in the direction XO outward from the axis and a bottom surface in the downward direction. The side surface of the outer portion 205 may be an outward surface 291, a description of which will follow.

The outward surface 291 may define an inclined surface that becomes gradually closer to the central axis X in the upward direction. The outward surface 291 may be a truncated conical surface.

The upper edge of the container 2B may be an upper edge of the outer portion 205, and the lower edge of the container 2B may be a lower edge of the outer portion 205. The lower edge of the container 2B may be formed in a circular shape having a predetermined lower diameter.

When the main body 2A is coupled to the container 2B, the upper end of the outer portion 205 contacts the lower end of the exposed portion 201 of the main body 2A. The lower edge of the exposed portion 201 may be circular. The upper edge of the outer portion 205 may be circular. The upper edge of the outer portion 205 may be formed in a circular shape having an upper diameter less than the lower diameter of the container 2B.

The lower edge of the container 2B may be formed in a circular shape having a predetermined lower diameter different from the upper diameter of the main body 2A. The lower diameter of the container 2B may be greater than the upper diameter of the main body 2A.

The outward surface 291 may be constituted by a set of lines interconnecting the upper edge of the outer portion 205 and the lower edge of the outer portion 205 by the shortest route. The side surface of the outer portion 205 is an inclined surface that is oblique relative to the vertical direction in which the upper edge of the container 2B and the lower edge of the container 2B are connected to each other.

When viewed from below, the middle part of the bottom surface of the outer portion 205 may be a horizontal surface 283, and the edge part of the bottom surface of the outer portion 205 may be an inclined surface 283a. The inclined surface 283a is formed such that the height of the inclined surface 283a is gradually increased in the direction XO outward from the axis. That is, when the bottom surface of the outer portion 205 contacts an external plane, only the horizontal surface 283 of the bottom surface of the outer portion 205 contacts the external plane.

The container 2B includes an external coupling portion 283. The horizontal surface 283 includes an external coupling portion 283, which is formed so as to be attached to an external object. The external coupling portion 283 is provided at the lower side of the container 2B. The external coupling portion 283 may be attached to one surface of an external object. The external coupling portion 283 is attached to an external object, such as the surface of an external apparatus, a wall, a door, a window, or a ceiling, to support the container 2B or the accessory 2, to which the container 2B and the main body 2A are coupled. The external coupling portion 283 may include a sticker or a material having attachment force. The external coupling portion 283 may be attached to one surface of an external object such that the external coupling portion 283 can be detached from the external object.

The remote control module 25 includes a control signal light-emitting unit 243 for emitting an optical signal in a specific direction from the main body 2A. In the case in which the main body 2A includes the control signal light-emitting unit 243, the container 2B includes a direction-setting unit for guiding the main body 2A such that the specific direction is set to a predetermined direction when the container 2B is attached to an external object.

The sensor module 24 may include a proximity sensor 244 for sensing the proximity of the main body 2A to an external object in a specific direction. The container 2B includes a direction-setting unit for guiding the main body 2A such that the specific direction is set to a predetermined direction when the container 2B is attached to an external object.

Specifically, the specific direction is set when the container 2B is attached to an external object, and even in the case in which the main body 2A is separated from the container 2B and is then coupled to the container 2B again, the specific direction of the control signal light-emitting unit 243 or the proximity sensor 244 is uniformly set by the direction-setting unit.

The container 2B may include a direction-indicating unit 289 for visually indicating the specific direction. The direction-indicating unit 289 may be formed at the inner portion 206 of the container 2B. The direction-indicating unit 289 may be a printed mark, a relief mark, or an intaglio mark. The direction-indicating unit 289, the direction-setting unit 285 and 270a, and the proximity sensor 244 are disposed such that the direction indicated by the direction-indicating unit 289 becomes the specific direction. In addition, the direction-indicating unit 289, the direction-setting unit 285 and 270a, and the control signal light-emitting unit 243 are disposed such that the direction indicated by the direction-indicating unit 289 becomes the specific direction.

Even when the container 2B, to which the main body 2A is not coupled, is attached to an external object, the user may preset the specific direction through the direction-indicating unit 289. In the case in which the container 2B is attached to an external object in the direction indicated by the direction-indicating unit 289, the specific direction is set to the direction indicated by the direction-indicating unit 289 when the main body 2A is coupled to the container 2B.

The direction-setting unit includes a direction-setting protrusion 285 and a direction-setting recess 270a. The main body 2A includes one selected from between the direction-setting protrusion 285 and the direction-setting recess 270a, and the container 2B includes the other selected from between the direction-setting protrusion 285 and the direction-setting recess 270a. In the state in which the specific direction is set to the predetermined direction, the direction-setting protrusion 285 is engaged into the direction-setting recess 270a. In this embodiment, the direction-setting protrusion 285 is formed on the container 2B, and the direction-setting recess 270a is formed in the main body 2A.

The direction-setting protrusion 285 may be dome-shaped.

The attachment and detachment groove 231d is formed in one selected from between the main body 2A and the container 2B, and the attachment and detachment protrusions 298 are formed on the other selected from between the main body 2A and the container 2B.

The attachment and detachment groove 231d is formed in one of the main body 2A and the container 2B in which the direction-setting recess 270a is formed, and the attachment and detachment protrusions 298 are formed on the other of the main body 2A and the container 2B on which the direction-setting protrusion 285 is formed. In this embodiment, the attachment and detachment protrusions 298 are formed on the container 2B, and the attachment and detachment groove 231d is formed in the main body 2A.

When the main body 2A is coupled to the container 2B, the attachment and detachment protrusions 298 are inserted into the attachment and detachment groove 231d. When the main body 2A is coupled to the container 2B, the attachment and detachment protrusions 298 are inserted into the attachment and detachment groove 231d such that the main body 2A is fixed to the container 2B.

The attachment and detachment groove 231d extends in the circumferential direction. The attachment and detachment groove 231d may extend in a circular shape. In the case in which the attachment and detachment groove 231d is formed in the main body 2A, the attachment and detachment groove 231d extends along the outer circumference of the main body 2A so as to be depressed in the direction XI inward toward the axis. In the case in which the attachment and detachment groove is formed in the container 2B, the attachment and detachment groove extends along the inner circumference of the container 2B so as to be depressed in the direction XO outward from the axis.

In the case in which the attachment and detachment groove 231d extends in the circumferential direction and the direction-setting protrusion 285 is not provided, the main body 2A is movable relative to the container 2B in the state in which the main body 2A is coupled to the container 2B. In the case in which the direction-setting protrusion 285 is provided, the main body 2A is movable relative to the container 2B in the state in which the main body 2A is incompletely coupled to the container 2B, a detailed description of which will follow.

The direction-setting protrusion 285 is disposed so as to be eccentric from the central axis X in one direction (e.g. in the direction XO outward from the axis). In this case, the attachment and detachment protrusions 298 include a first attachment and detachment protrusion 298a disposed opposite to the direction-setting protrusion 285 about the central axis X (see FIG. 45). Even when the insertion portion 202 of the main body 2A and the inner surface of the inner portion 206 of the container 2B are spaced apart from each other by the direction-setting protrusion 285 in the state in which the direction-setting protrusion 285 is not engaged into the direction-setting recess 270a, therefore, the first attachment and detachment protrusion 298a may be inserted into the attachment and detachment groove 231d. The first attachment and detachment protrusion 298a, inserted into the attachment and detachment groove 231d, is movable along the attachment and detachment groove 231d. As the first attachment and detachment protrusion 298a is moved along the attachment and detachment groove 231d, the main body 2A is rotated in the state in which the main body 2A is not completely coupled to the container 2B. As the first attachment and detachment protrusion 298a is moved along the attachment and detachment groove 231d, the main body 2A is rotated relative to the container 2B until the direction-setting protrusion 285 is engaged into the direction-setting recess 270a.

Specifically, in the state in which until the direction-setting protrusion 285 is not engaged into the direction-setting recess 270a, the first attachment and detachment protrusion 298a may be inserted into the attachment and detachment groove 231d such that the first attachment and detachment protrusion 298a can slide in the circumferential direction. When the first attachment and detachment protrusion 298a slides along the circular attachment and detachment groove 231d, the main body 2A may be rotated in the state of being inclined with respect to the container 2B.

The attachment and detachment protrusions 298 include a second attachment and detachment protrusion 298b, which can be inserted into the attachment and detachment groove 231d only in the state in which the direction-setting protrusion 285 is engaged into the direction-setting recess 270a. When the main body 2A is pushed downward at the position at which the direction-setting protrusion 285 is engaged into the direction-setting recess 270a after the first attachment and detachment protrusion 298a slides along the circular attachment and detachment groove 231d, the second attachment and detachment protrusion 298b is engaged into the attachment and detachment groove 231d. The main body 2A is fixed to the container 2B by the second attachment and detachment protrusion 298b in the state in which the direction-setting protrusion 285 is engaged into the direction-setting recess 270a.

A plurality of second attachment and detachment protrusions 298b may be arranged in the circumferential direction at intervals. The second attachment and detachment protrusions 298b may be arranged at uniform intervals. One of the second attachment and detachment protrusions 298b may be disposed at the same side as the direction-setting protrusion 285 with respect to the central axis X.

In this embodiment, the direction-setting protrusion 285 is disposed at the left side, the first attachment and detachment protrusion 298a is disposed at the right side, and the second attachment and detachment protrusions 298b are disposed at the left side, the front side, and the rear side. A larger number of second attachment and detachment protrusions 298b than the number of second attachment and detachment protrusions 298b according to this embodiment may be provided.

Each of the attachment and detachment protrusions 298 may be hook-shaped. The vertical length of each of the attachment and detachment protrusions 298 may be greater than the circumferential length of each of the attachment and detachment protrusions 298.

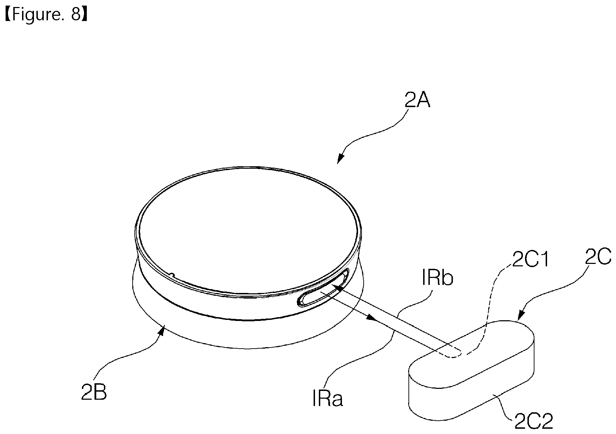

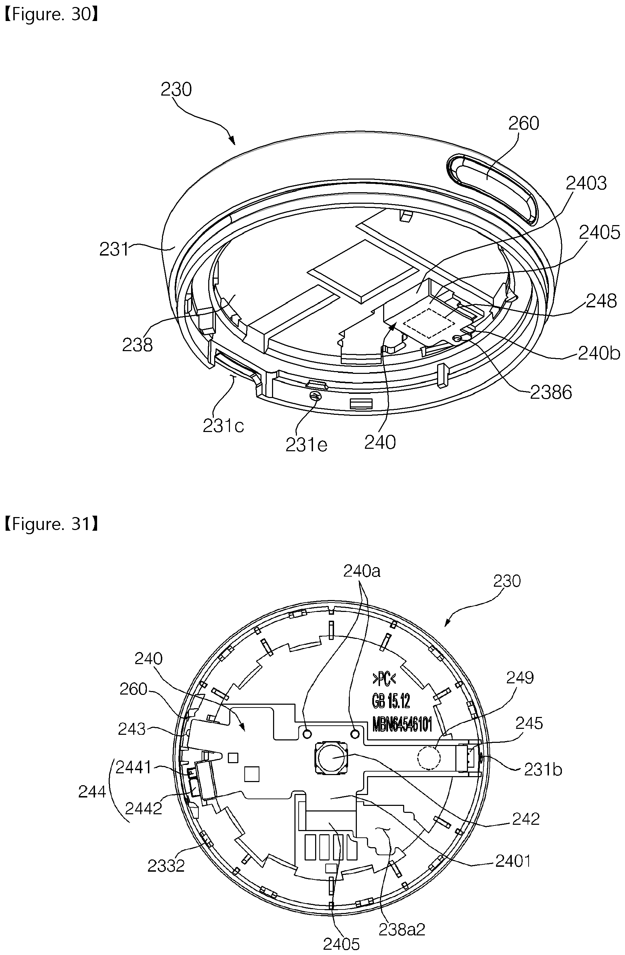

Referring to FIG. 8, the proximity sensor 244 may include a proximity signal light-emitting unit 2441 for emitting a predetermined optical signal Ira in the specific direction and a proximity signal light-receiving unit 2442 for receiving an optical signal Irb reflected in the specific direction (See FIG. 31). The accessory 2 may further include a reflector 2C for reflecting the emitted optical signal Ira.

The reflector 2C includes a reflective surface 2C1 for reflecting the emitted optical signal Ira and an attachment surface 2C2 configured to be attachable to an external object. The reflective surface 2C1 of the reflector 2C may be formed of a material exhibiting high reflectance. The attachment surface 2C2 of the reflector 2C may be detachably attached to one surface of an external object.

Meanwhile, the optical signal Ira emitted by the proximity signal light-emitting unit 2441 may be infrared light. The proximity signal light-receiving unit 2442 may sense the intensity of the optical signal Irb reflected by the reflector or the external object to determine whether the accessory 2 has approached the external object or the reflector.

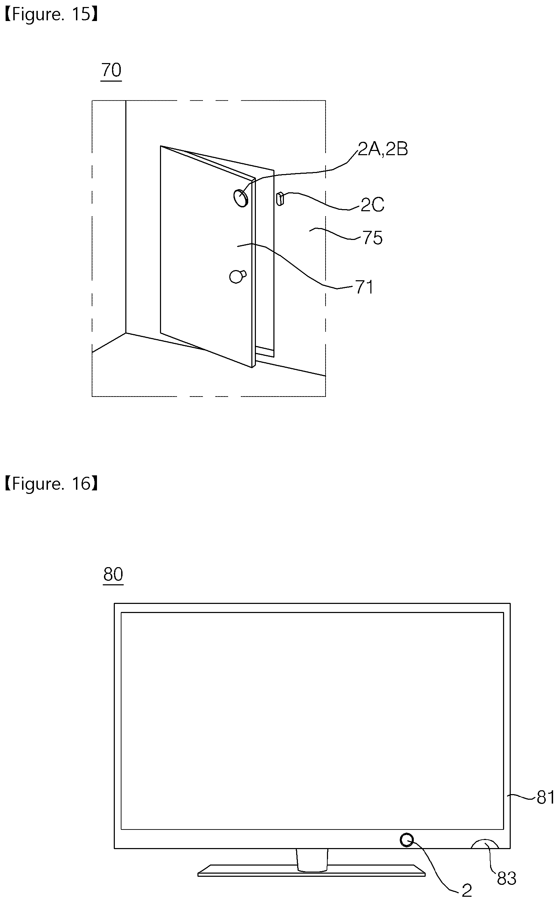

In the case in which it is sensed whether the door 71 is open or closed using the proximity sensor 244, the reflector 2C may also be used, which will be described with reference to FIG. 15.

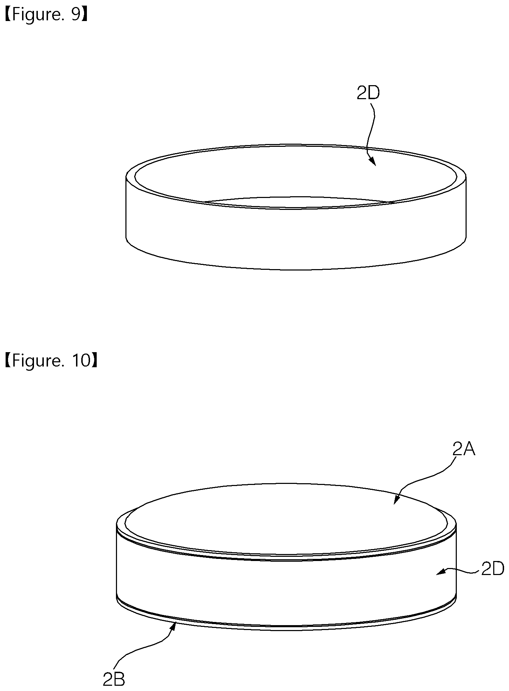

Referring to FIGS. 9 and 10, the accessory 2 includes a detachable waterproof member 2D for sealing a gap between the main body 2A and the container 2B in the state in which the main body 2A is coupled to the container 2B. The waterproof member 2D may be used in the case in which the accessory 2 is placed in an environment having high humidity or in an environment in which the accessory 2 easily contacts water.

The waterproof member 2D may seal the gap between the main body 2A and the container 2B. The waterproof member 2D may prevent water from permeating into the charging terminal 255, which is located at the insertion portion 202, though the gap between the main body 2A and the container 2B.

In the state in which the main body 2A is coupled to the container 2B, the gap between the main body 2A and the container 2B may define an edge that is smaller than the upper edge of the main body 2A and the lower edge of the container 2B.

The side surface of the exposed portion 201 of the main body 2A may be an inclined surface that becomes gradually closer to the central axis X in the downward direction, and the side surface of the outer portion 205 of the container 2B may be an inclined surface that becomes gradually closer to the central axis X in the upward direction.

The upper edge of the main body 2A may be circular, and the lower edge of the container 2B may be circular. In the state in which the main body 2A is coupled to the container 2B, the gap between the main body 2A and the container 2B may be formed in a circular shape smaller than the upper edge of the main body 2A and the lower edge of the container 2B.

In this case, the waterproof member 2D may include an elastic band wound between the upper edge of the main body 2A and the lower edge of the container 2B in the state in which the main body 2A is coupled to the container 2B. The elastic band may be detachably attached to the assembly of the main body 2A and the container 2B.

As a result, the waterproof member 2D is caught between the upper edge of the main body 2A and the lower edge of the container 2B, whereby the waterproof member 2D is easily disposed. In addition, the upper end and the lower end of the waterproof member 2D tightly contact the side surface of the main body 2A and the side surface of the container 2B, respectively, thereby further improving waterproofing efficiency.

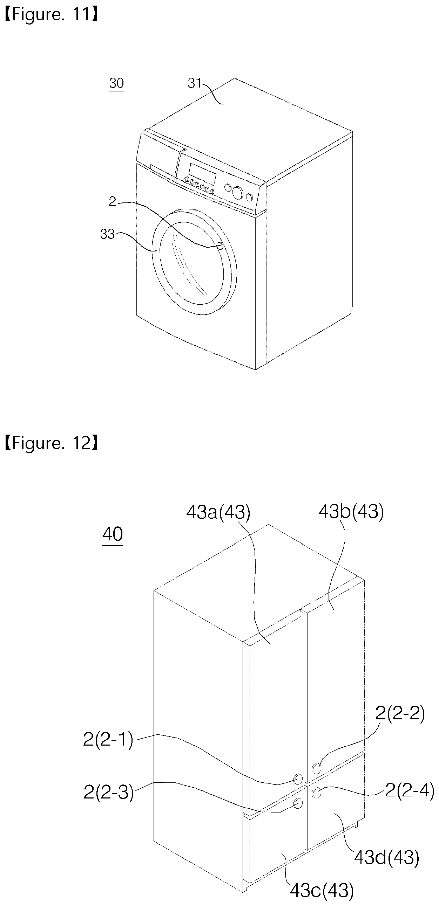

Use examples of the accessory 2 will be described with reference to FIGS. 11 to 16. Various kinds of information (e.g. vibration, acceleration, temperature, humidity, and infrared light), which will be sensed in the following description, may be transmitted through the communication module over the network. Necessary information may be automatically determined based on a signal transmitted over the network. A user may be notified of the information or the determination result through the terminal 6 or the hub 1. Alternatively, the information or the determination result may be used to control other apparatuses.

Referring to FIG. 11, an accessory 2 having an acceleration sensor 257 may be attached to a laundry treatment apparatus 30 to sense vibration generated during the operation of the laundry treatment apparatus 30. The accessory 2 may be attached to a cabinet 31 or a door 33 of the laundry treatment apparatus 30. The accessory 2 may sense a vibration cycle or a vibration period to determine whether or not the laundry treatment apparatus 30 is being operated and the kind of operation performed by the laundry treatment apparatus 30 over the network.

In addition, in the case in which the accessory 2 having the acceleration sensor 257 is attached to the door 33 of the laundry treatment apparatus 30, it is possible to sense acceleration based on opening and closing motions of the door 33. As a result, it is possible to determine, over the network, whether the door 33 is opened or closed.

In addition, the accessory 2 having the acceleration sensor 257 may be placed in a washing hub for receiving laundry in the laundry treatment apparatus 30 in the state in which the waterproof member 2D is attached to the accessory 2 having the acceleration sensor 257. In this case, vibration or acceleration may be sensed by the acceleration sensor 257, whereby it is possible to determine, over the network, whether or not the laundry treatment apparatus 30 is being operated.

In addition, an accessory 2 having a temperature and humidity sensor 245 may be placed in the washing hub for receiving laundry in the laundry treatment apparatus 30. In this case, the humidity in the laundry treatment apparatus 30 during a drying operation may be sensed, whereby it is possible to determine, over the network, whether or not the drying of the laundry has been completed.

Referring to FIG. 12, in the case in which an accessory 2 having an acceleration sensor 257 is attached to a door 43 of a refrigerator 40, it is possible to sense acceleration based on opening and closing motions of the door 43. As a result, it is possible to determine, over the network, whether the door 43 is opened or closed.

In the case in which the refrigerator 40 includes a plurality of doors 43, accessories 2-1, 2-2, 203, and 2-4 may be attached respectively to doors 43a, 43b, 43c, and 43d in order to determine, over the network, whether the doors 43a, 43b, 43c, and 43d are opened or closed.

In addition, an accessory 2 having a remote control module 25 may be attached to a remote-controllable laundry treatment apparatus 30 or refrigerator 40 in order to emit an optical signal to the laundry treatment apparatus 30 or the refrigerator 40 based on a control signal over the network.

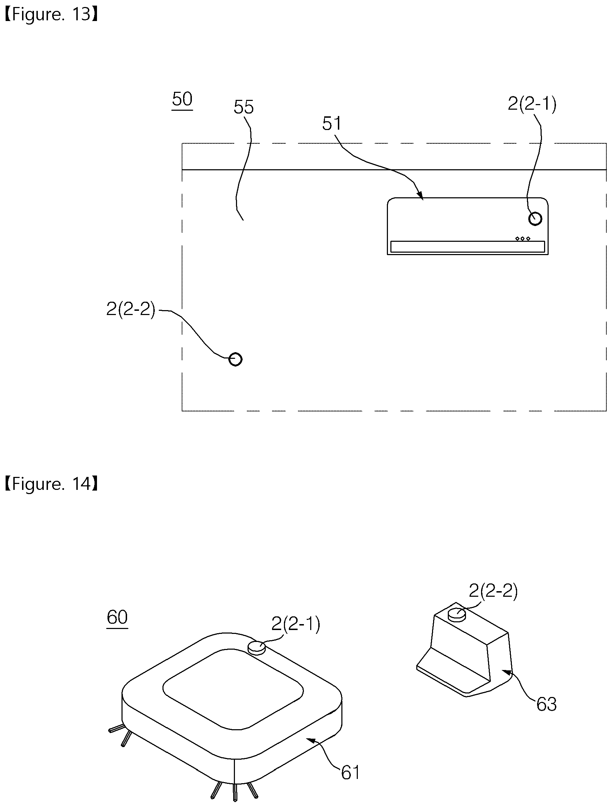

Referring to FIG. 13, an accessory 2 having a temperature and humidity sensor 245 may be placed in an indoor space 50 in which an air conditioner 51 is installed to sense the temperature and humidity in the indoor space 50.

In addition, a necessary control signal may be transmitted to the accessory 2 based on information about temperature and humidity sensed in the indoor space 50 over the network, and an accessory 2 having a remote control module 25 may emit an optical signal to the air conditioner 51 in order to control whether or not to operate the air conditioner 51 and how to operate the air conditioner 51.

In the indoor space 50, an accessory 2-1 may be attached to the surface of the air conditioner 51. An accessory 2-2 may be attached to a wall 55 or the ceiling.

Referring to FIG. 14, in a robot cleaner system 60, an accessory 2 having a proximity sensor 244 may be attached to a robot cleaner 61 (2-1 in FIG. 14) or may be attached to a charging cradle 63 of the robot cleaner (2-2 in FIG. 14). An accessory 2 (2A and 2B) having a proximity sensor 244 may be attached to one selected from between the robot cleaner 61 and the charging cradle 63, and a reflector 2C may be attached to the other selected from between the robot cleaner 61 and the charging cradle 63, in order to sense whether the robot cleaner 61 is separated from the charging cradle 63.

In addition, an accessory 2 having an acceleration sensor 257 may be attached to the robot cleaner 61 in order to sense acceleration based on the movement of the robot cleaner 61 and to determine, over the network, whether the robot cleaner 61 is operating.

In addition, an accessory 2 having a remote control module 25 may be attached to a remote-controllable robot cleaner 61 in order to emit an optical signal to the robot cleaner 61 based on a control signal over the network.

Referring to FIG. 15, in a door 71 or window (not shown) system 70 of a building, an accessory 2 having an acceleration sensor 257 may be attached to the door 71 or the window in order to sense acceleration based on opening and closing motions of the door 71 or the window. As a result, it is possible to determine, over the network, whether the door 71 or the window is opened or closed.

In addition, an accessory 2 (2A and 2B) having a proximity sensor 244 may be attached to one selected from between the door 71 and a wall 75 adjacent to the door 71, and a reflector 2C may be attached to the other selected from between the door 71 and the wall 75 adjacent to the door 71. Specifically, the accessory 2 (2A, 2B, and 2C) may be disposed such that an optical signal emitted by the proximity sensor 244 is reflected by the reflector 2C in the case in which the door 71 is closed. In this case, when the door 71 is opened, the reflector 2C disposed so as to be adjacent thereto in a specific direction in which the proximity sensor 244 emits the optical signal may disappear or move away to enable sensing of whether or not the door 71 is open. Whether or not the window is open may be sensed in the same manner.

Meanwhile, in the case in which the opening and closing motions of a main door 71 of a building or a main door 43 of a refrigerator are not sensed for a long time, a resident may have had a mishap. In this case, this information may be forwarded to the terminal 6.

Referring to FIG. 16, a TV 80 includes a cabinet 81, such as a display panel. The TV 80 includes a control signal light-receiving unit 83 for receiving a remote control signal. An accessory 2 having a remote control module 25 may be attached to the cabinet 81 of the TV 80 or an object adjacent to the TV 80. The accessory 2 may be disposed such that a specific direction in which an optical signal is emitted is directed to the control signal light-receiving unit 83. An optical signal may be emitted to the TV 80 based on a control signal over the network.

The accessory 2 may be attached to the other apparatuses or may be disposed in other places.

In each of the above embodiments, a signal transmitted by the accessory 2 over the network may be received by the terminal 6. An application installed in the terminal 6 may analyze the received signal to acquire information about the operating state of an electric home appliance (e.g. imbalance of a washing machine) or information about opening and closing of a door. The information or the results derived as the result of processing the information (e.g. a warning indicating abnormal operation of a washing machine and a notice requesting that the state of a resident be checked when a door is not opened and closed for a long time) may be displayed through the display or speaker of the terminal 6 or the hub 1.

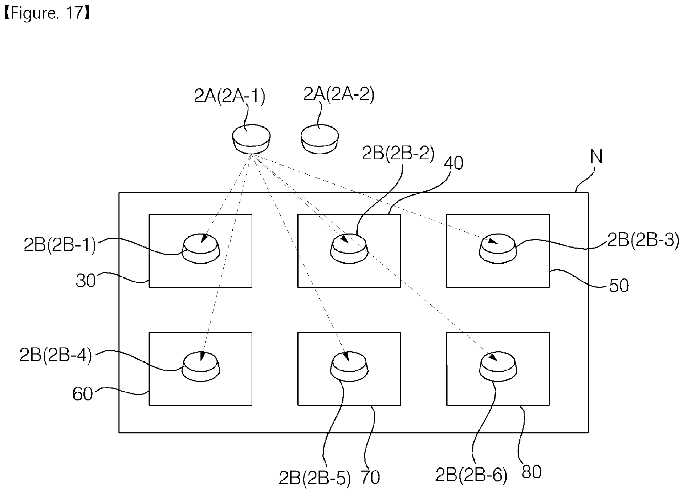

Referring to FIG. 17, a plurality of containers 2B may be attached to respective external objects located at different positions. The number of containers 2B may be greater than the number of main bodies 2A. In this case, a user may select some of the containers 2B as needed and may couple the main bodies 2A to the selected containers 2B. In this way, it is possible to easily change the positions of the main bodies 2A. In the case in which the containers 2B are attached to the external objects at optimal positions and in optimal directions, the main bodies 2A may be easily coupled to the containers 2B. Consequently, dual effort to dispose the main bodies 2A at optimal positions and in optimal directions is not necessary.

For example, in the state in which a container 2B-1 is attached to a position 30 and another container 2B-2 is attached to another position 40, a main body 2A-1 may be coupled to the container 2B-1 and afterward may be coupled to the container 2B-2 as needed.

A plurality of containers 2B-1, 2B-2, 2B-3, 2B-4, 2B-5, and 2B-6 are attached respectively at a plurality of positions 30, 40, 50, 60, 70, and 80, and a smaller number of main bodies 2A than the number of containers may be coupled to one or more containers 2B as needed. In order to realize the above embodiments, the main bodies 2A may be disposed at all the positions. Alternatively, a smaller number of main bodies 2A may be used, and the positions of the main bodies 2A may be easily changed.

The controller 23 may perform control such that the kind of a target transmitted over the network can be changed based on the change in position of the main body 2A. The kind of a target transmitted over the network may be changed by user input through the terminal 6 or the input unit 27. Alternatively, the kind of a target transmitted over the network may be changed in response to automatically changing position information.

The controller 23 may perform control so as to change whether or not to transmit the information about the surrounding conditions over the network and whether or not to operate the remote control module 25. Whether or not to transmit the information about the surrounding conditions and whether or not to operate the remote control module 25 may be changed by user input through the terminal 6 or the input unit 27. Alternatively, whether or not to transmit the information about the surrounding conditions and whether or not to operate the remote control module 25 may be changed in response to automatically changed position information.

The Internet of Things environment required by the user may be changed depending on the change in position of the main body 2A. As a result, information about a target to be transmitted over the network may be changed, or whether or not to transmit the information about the surrounding conditions and whether or not to operate the remote control module 25 may be changed.

Referring to FIG. 17, a plurality of accessories 2 may be used to constitute a network system. For example, a main body 2A-1 and another main body 2A-2 may be disposed at two positions selected from among various positions 30, 40, 50, 60, 70, and 80 within the network environment N.

The network system includes a server 8 for receiving information about the surrounding conditions of one of the two main bodies 2A-1 and 2A-2, e.g. the main body 2A-1, from the main body 2A-1. The server 8 transmits a signal for controlling an apparatus at which the other main body 2A-2 is disposed to the main body 2A-2 based on the sensed information. The transmission and reception of information between the server 8 and the main body 2A means that information is transmitted and received via the gateway 4, the access point 7, and/or the hub 1.

For example, when a main body 2A-1 disposed at the door system 70 senses that the door 71 has been opened through the network system, a main body 2A-2 disposed at the robot cleaner system 60 may emit a remote control optical signal to the robot cleaner 61 such that the robot cleaner 61 cleans two opposite spaces partitioned by the door 71.

In another example, a main body 2A-1 disposed at a certain point in the indoor space 50 senses temperature and humidity at the point through the network system, and a main body 2A-2 disposed at the air conditioner 51 may emit a remote control optical signal for controlling whether or not to operate the air conditioner 51 and the operation level of the air conditioner 51 to the air conditioner 51.

In another example, a main body 2A-1 disposed at a certain point senses information about completion of operation of the washing machine, opening of the door of the refrigerator, opening of the outdoor entrance, or opening of the window at the point through the network system, and a main body 2A-2 disposed at the TV 80 may emit a remote control optical signal for controlling the operation of the TV 80 to the control signal light-receiving unit 83. As a result, a user may be informed of a specific notice or warning through the TV 80.

In a further example, a main body 2A-1 introduced into the laundry treatment apparatus 30 together with laundry senses temperature and humidity in the laundry treatment apparatus 30 through the network system, and a main body 2A-2 disposed outside the laundry treatment apparatus 30 may emit a remote control optical signal for controlling the operation of the laundry treatment apparatus 30 to the laundry treatment apparatus 30.

The network system may further include a third main body 2A. In this case, the server 8 may receive information about the surrounding conditions of the third main body 2A and the main body 2A-1. The server 8 may emit a signal for controlling an apparatus at which the main body 2A-2 is disposed to the main body 2A-2 based on the sensed information.

In the case in which three main bodies 2A are used, for example, the third main body disposed at the door system 70 may sense the opening of the door 71, the main body 2A-1, which is disposed in one, in which the air conditioner 51 is not installed, of two opposite spaces connected to each other as the result of opening of the door 71 may sense the temperature or humidity in the space, and the main body 2A-2 disposed at the air conditioner 51 may emit a remote control optical signal for controlling whether or not to operate the air conditioner 51 and the operation level of the air conditioner 51 to the air conditioner 51, through the network system. In the case in which the third main body senses that the door 71 is closed, setting may be performed such that the air conditioner 51, at which the main body 2A-2 is disposed, is not controlled based on the temperature or humidity sensed by the main body 2A-1.

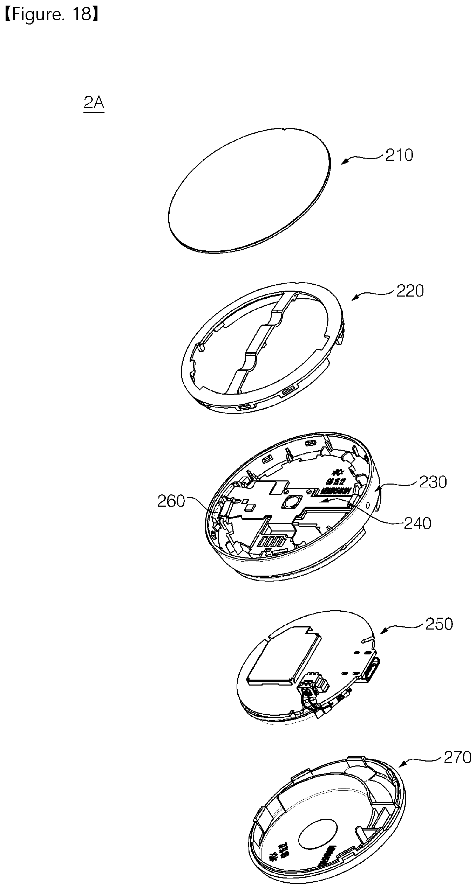

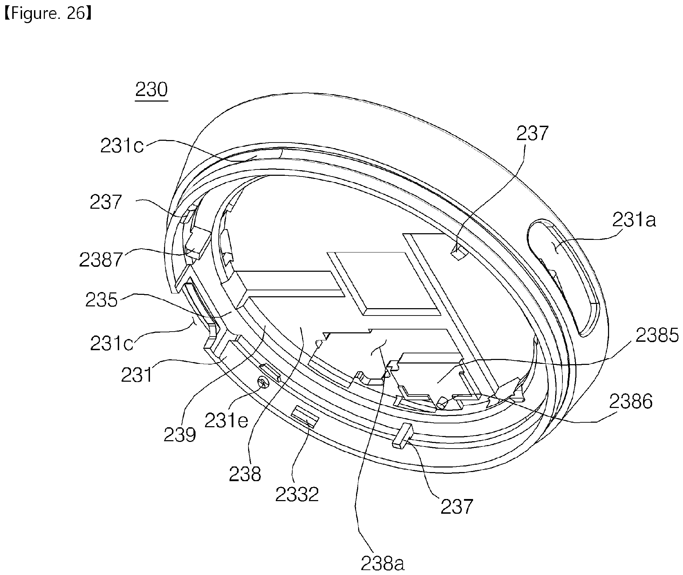

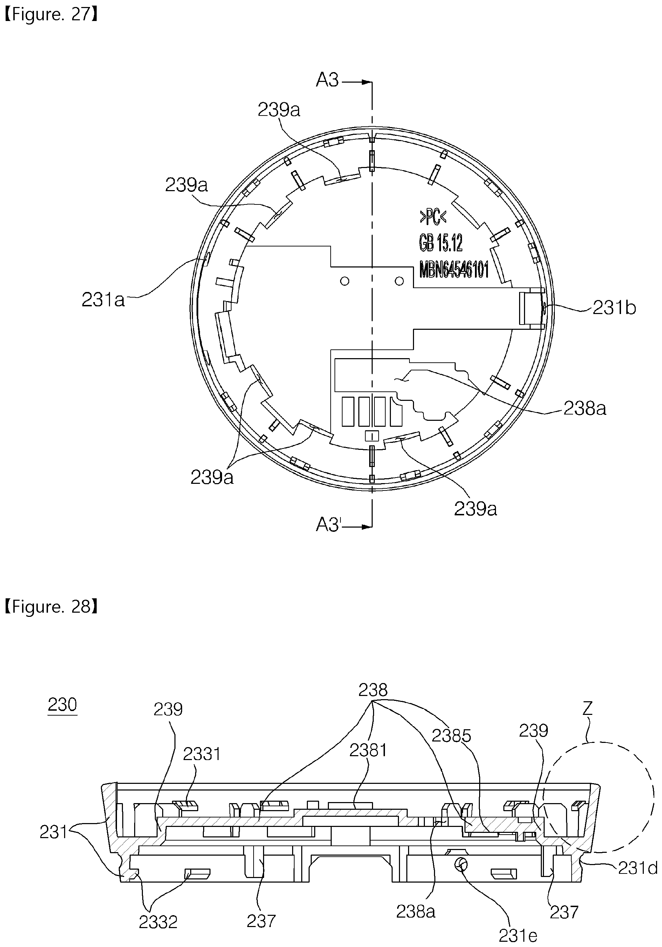

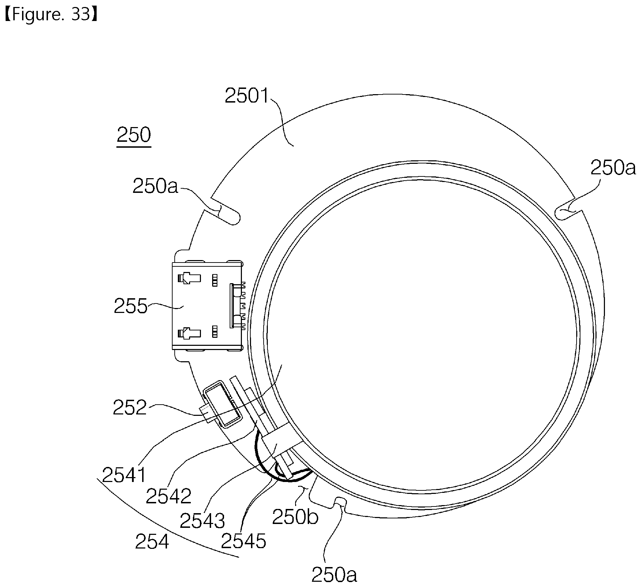

The respective components of the main body 2A will be described in detail with reference to FIGS. 18 to 39.

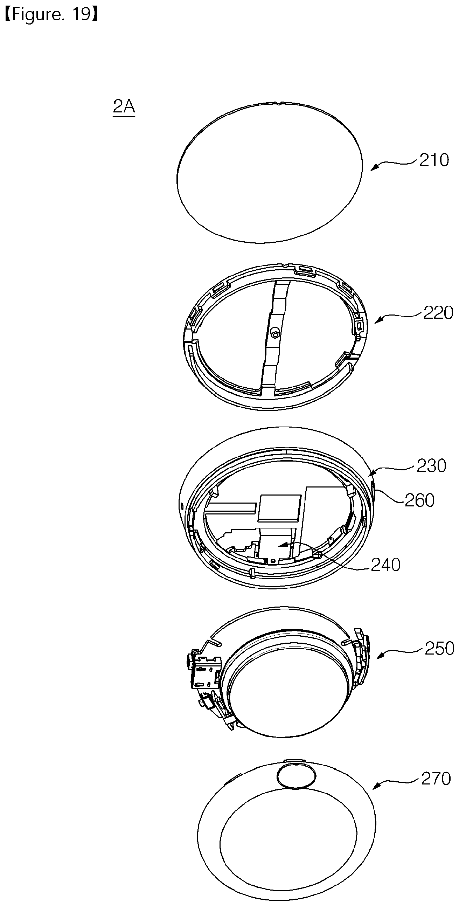

Referring to FIGS. 18 and 19, the main body 2A includes a switch panel 210, which is elastically deformed when pushed downward by a user to push the main switch 242, a switch operation unit 220, which is elastically deformed to generate restoring force when the switch panel 210 is elastically deformed while supporting the switch panel 210, cases 230 and 270 for supporting the switch operation unit 220 and defining the external appearance of the main body 2A, printed circuit boards (PCBs) 240 and 250 received in the cases 230 and 270, and a transmission member 260 disposed in the cases 230 and 270 for transmitting an optical signal.

In this embodiment, the switch panel 210 defines at least a portion of the upper surface of the main body 2A. The cases 230 and 270 include a side case 230 defining at least a portion of the external shape of the main body 2A in the direction XO outward from the axis. The side case 230 is disposed at the lower side of the switch panel 210. The cases 230 and 270 include a bottom case 270 defining the bottom surface of the external shape of the main body 2A. The bottom case 270 is connected to the lower end of the side case 230. The switch operation unit 220 is located on the upper side of the side case 2320. The switch operation unit 220 is disposed at the lower side of the switch panel 210. The switch operation unit 220 contacts the switch panel 210. The PCBs 240 and 250 include an upper PCB 240 and a lower PCB 250. The lower PCB 250 is disposed under the upper PCB 240. The lower PCB 250 is connected to the upper PCB 240. The upper PCB 240 is located in the side case 230. The lower PCB is located in the side case 230 and the bottom case 270.

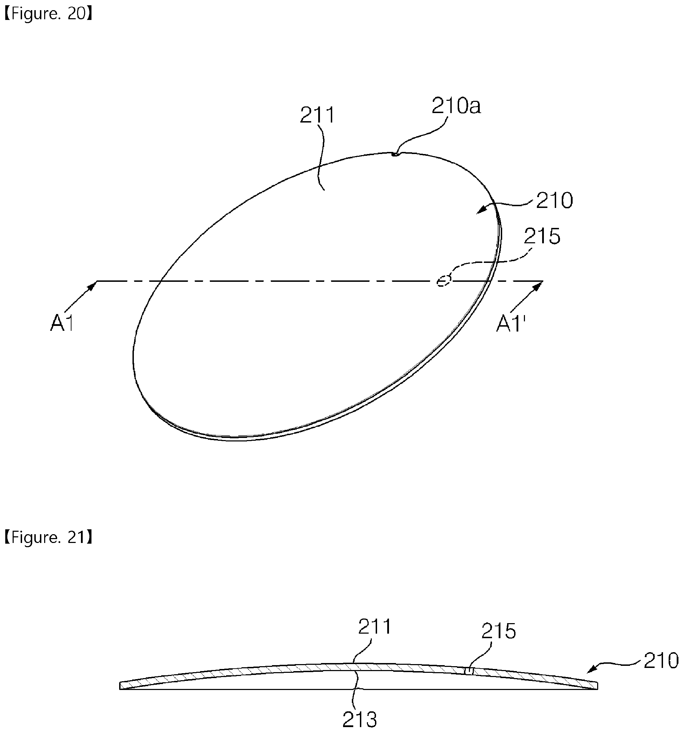

Referring to FIGS. 20 and 21, the switch panel 210 is dome-shaped. The switch panel 210 is formed of a dome-shaped plate that is convex upward. The switch panel 210 is formed in a convex shape such that the center of the switch panel 210 is the highest. The switch panel 210 is formed such that the edge of the switch panel 210 is the lowest. When pushed downward, the dome-shaped switch panel 210 is deformed while generating upward restoring force.

The switch panel 210 defines the upper surface of the main body 2A. The switch panel 210 may be made of synthetic resin. The switch panel 210 is attached to the switch operation unit 220. The switch panel 210 may be attached to the switch operation unit 220 using a double-sided adhesive. When the switch panel 210 is pushed downward and deformed downward, an elastic operation portion 225, a description of which will follow, is pushed downward.

The switch panel 210 may include a plate having a predetermined thickness. The switch panel 210 includes an upper surface 211, defining the external appearance of the main body 2A, and a lower surface 213 for partitioning the interior of the main body 2A.

The outer circumference of the switch panel 210 contacts the inner surface of the side case 230. Specifically, the outer circumference of the switch panel 210 contacts the inner surface of a side member 231, a description of which will follow (the side surface of the side member 231 in the direction XI inward toward the axis). In this case, the upper surface of the outer circumference of the switch panel 210 substantially coincides with the upper end surface of the side member 231. When the dome-shaped switch panel 210 is pushed downward, the inner surface of the side member 231 prevents the switch panel 210 from extending in the direction XO outward from the axis. As a result, on the assumption that the other conditions of the dome-shaped switch panel 210 are not changed, greater restoring force is generated when the switch panel 210 is elastically deformed downward.

When viewed from above, the switch panel 210 is generally dome-shaped. The switch panel 210 may be provided in the edge thereof with a switch panel recess 210a. When the switch panel 210 is located on the side case 230, a positioning protrusion 232 of the side case 230, a description of which will follow, is engaged into the switch panel recess 210a. As a result, the switch panel 210 may be located on the side case 230 and the switch operation unit 220 in the designed direction.

The switch panel 210 includes a light transmission unit 215 made of a material that transmits light. The light transmission unit 215 is made of a transparent or semitransparent material that transmits light in the upward and downward direction of the switch panel 210. The light transmission unit 215 is formed at a portion of the switch panel 210 that is spaced apart from the central axis X in the direction XO outward from the axis. In the state in which the main body 2A is assembled, a display LED 249 is disposed at the lower side of the light transmission unit 215. Light emitted by the display LED 249 may pass upward through the light transmission unit 215. The positioning protrusion 232 and the switch panel recess 210a are disposed such that the display LED 249 is disposed at the lower side of the light transmission unit 215 in the case in which the positioning protrusion 232 is engaged into the switch panel recess 210a.

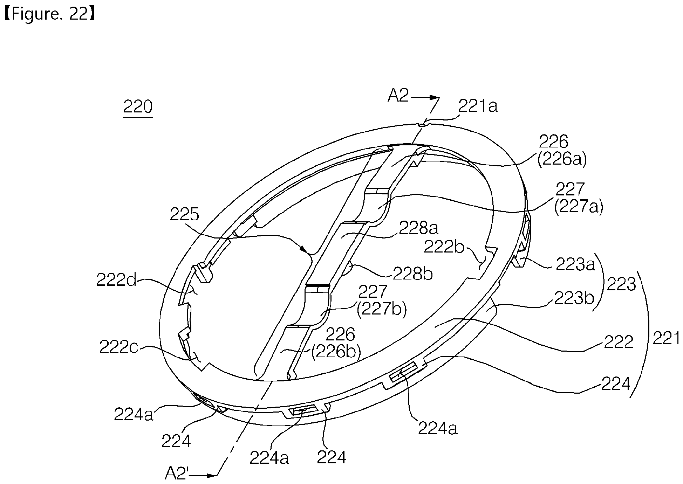

Referring to FIGS. 22 to 24, the switch operation unit 220 includes a support frame 221 located in the case (the side case) 230 and an elastic operation portion 225 connected to the support frame 221 such that the elastic operation portion 225 can contact the switch panel 210.

The support frame 221 is fixed to the case (the side case) 230. The support frame 221 is located on the upper side of the side case 230. The support frame 221 is disposed in the side case 230. The support frame 221 supports the elastic operation portion 225.

The support frame 221 may be provided in the edge thereof with a support frame recess 221a. When the support frame 221 is disposed in the side case 230, a positioning protrusion 232 of the side case 230, a description of which will follow, is engaged into the support frame recess 221a. As a result, the switch operation unit 220 is located I the side case 230 in the designed direction.

In the case in which the positioning protrusion 232 is engaged into the support frame recess 221a, the temperature and humidity sensor 245 and the transmission member 260 may be disposed in a gap between a plurality of separate insertion ribs 223a and 223b, a description of which will follow. In addition, in the case in which the positioning protrusion 232 is engaged into the support frame recess 221a, interference is prevented when other parts are disposed between the light transmission unit 215 and the display LED 249.

The support frame 221 includes a ring member 222. The ring member 222 may be generally formed in a ring shape. The ring member 222 may be made of a plate having a predetermined vertical thickness. The ring member 222 extends along the inner circumference of the side case 230. The side of the ring member 222 in the direction XO outward from the axis contacts the inner surface of the side case 230. The upper surface of the ring member 222 contacts the lower surface of the switch panel 210. The switch panel 210 may be attached to the ring member 222. The lower surface of the edge part of the switch panel 210 is disposed on the upper surface of the ring member 222.

The ring member 222 may be provided with an opening (a recess or a hole) for avoiding interference with other parts when PCBs 240 and 250 are coupled to the side case 230. For example, an opening 222b for securing a space occupied by the temperature and humidity sensor 245 may be formed in the ring member 222. An opening 222c for securing a space occupied by the proximity sensor 244 may be formed in the ring member 222. An opening 222d for securing a space occupied by the remote control module 25 may be formed in the ring member 222. The recesses 222b, 222c, and 222d for securing spaces occupied by the other parts may be formed in the ring member 222 in the direction XI inward toward the axis.

The elastic operation portion 225 is connected to the ring member 222. The elastic operation portion 225 crosses the center of the ring member 222. The ring member 222 has elastic operation portion fixing ends 222a, to which the elastic operation portion 225 is connected. The vertical thickness of each of the elastic operation portion fixing ends 222a is greater than the vertical thickness of the elastic operation portion 225.

The support frame 221 includes an insertion rib 223 protruding downward from the ring member 222 and extending along the ring member 222 in the circumferential direction. A single long insertion rib 223 may be provided. In this embodiment, a plurality of separate insertion ribs 223 is provided.

The insertion ribs 223 are inserted into the side case 230. The insertion ribs 223 are inserted into holding recesses 236c formed in holding ribs 236 of the side case 230. The support frame 221 is more stably located in the side case 230 by the insertion ribs 223.

The insertion ribs 223 are separated from each other about a portion at which the temperature and humidity sensor 245 is disposed. The insertion ribs 223 are also separated from each other about another portion at which the humidity sensor 244 or the remote control module 25 is disposed. The insertion ribs 223 may include a first insertion rib 223a and a second insertion rib 223b, which are separated from each other. The first insertion rib 223a and the second insertion rib 223b extend from the portion at which the temperature and humidity sensor 245 is disposed to the portion at which the humidity sensor 244 or the remote control module 25 is disposed.

The support frame 221 includes a case-coupling portion 224 coupled to the side case 230. The case-coupling portion 224 may be formed in the shape of a hook or a recess. A plurality of case-coupling portions 224 may be arranged along the circumference of the support frame 221 at intervals. The case-coupling portions 224 are formed at the lower surface of the ring member 222. The case-coupling portions 224 are formed at the sides of the insertion ribs 223 in the direction XO outward from the axis. The upper surfaces of the case-coupling portions 224 are connected to the lower surface of the ring member 222, and the ends of the case-coupling portions 224 in the direction XI inward toward the axis are connected to the insertion ribs 223. The case-coupling portions 224 may be coupled to the inner wall of the side case 230 in the direction XO outward from the axis.

In this embodiment, a coupling recess 224a is formed in each of the case-coupling portions 224. The coupling recess 224a may be formed so as to be depressed in the direction XI inward toward the axis. The circumferential length of the coupling recess 224a may be greater than the vertical length of the coupling recess 224a. The coupling recesses 224a may be arranged along the circumference of the support frame 221 at intervals.

The circumferentially opposed sides and the lower side of each of the coupling recesses 224a are partitioned by a corresponding one of the case-coupling portions 224. The upper side of each of the coupling recesses 224a may be partitioned by the lower surface of the ring member 222.

The case-coupling portions 224 are coupled to support frame-coupling portions 2331 of the side case 230. Coupling recesses are formed in one selected from the case-coupling portions 224 and the support frame-coupling portions 2331, and protrusions, which are engaged into the coupling recesses, are formed in the other selected from the case-coupling portions 224 and the support frame-coupling portions 2331. In this embodiment, the coupling recesses 224a are formed in the case-coupling portions 224, and protrusions, which are engaged into the coupling recesses, are formed in the support frame-coupling portions 2331.

The elastic operation portion 225 is disposed at the lower side of the switch panel 210. When the switch panel 210 is elastically deformed downward, the elastic operation portion 225 is also elastically deformed downward to generate restoring force. When the switch operation portion 220 is elastically deformed downward, the main switch 242 is pushed. When the main switch 242 is pushed, control information is input to the controller 23.

The elastic operation portion 225 is disposed at the upper side of the main switch 242. The main switch 242 is disposed in the cases 230 and 270. The main switch 242 is pushed downward such that a command is input to the controller 23. When the elastic operation portion 225 is elastically deformed downward, the main switch 242 is pushed. The elastic operation portion 225 is spaced apart from the upper end of the main switch 242 by a predetermined distance in the state of not being elastically deformed.

The elastic operation portion 225 is disposed between the switch panel 210 and the main switch 242.

The elastic operation portion 225 is formed at the support frame 221 in a bridge shape. The elastic operation portion 225 may be generally formed of a bar type plate. The elastic operation portion 225 may cross the central axis X. The elastic operation portion 225 horizontally traverses the upper side of the main switch 242. When the elastic operation portion 225 is viewed from above, a first connection part 226a, a first bent part 227a, a middle part 228, a second bent part 227b, and a second connection part 226b, a description of which will follow, are sequentially arranged.

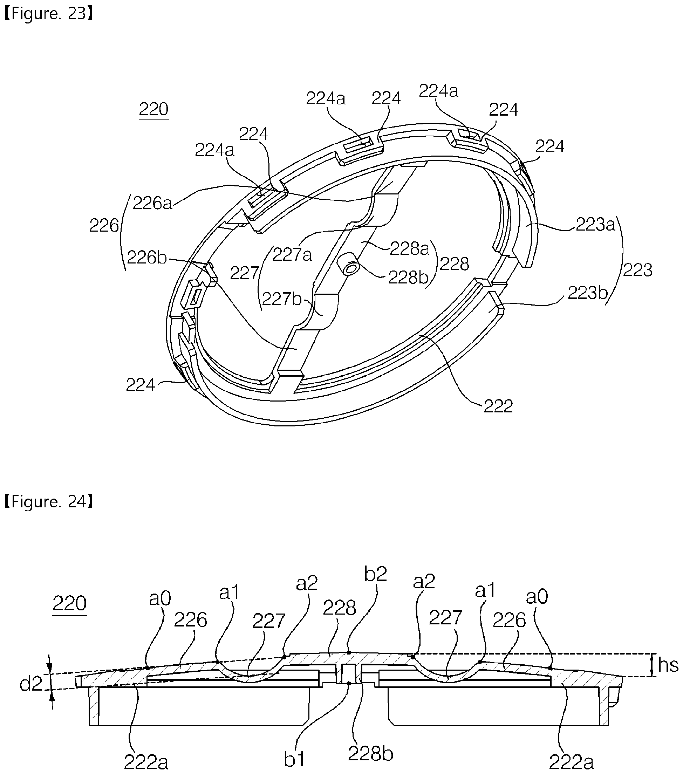

The elastic operation portion 225 is generally convex upward. The middle part of the elastic operation portion 225 is the highest. Referring to FIG. 24, the middle part 228 of the elastic operation portion 225 is higher by a predetermined length hs than the end of the ring member 222 in the direction XO outward from the axis.

The elastic operation portion 225 may be connected to opposite sides of the ring member 222. The elastic operation portion 225 may cross the center of the ring member 222. When the elastic operation portion 225 is pushed downward, therefore, the ring member 222 restricts the opposite ends of the elastic operation portion 225 to prevent the elastic operation portion 225 from extending in the opposite directions such that the elastic deformation is concentrated on the bent parts 227, a description of which will follow.

The elastic operation portion 225 includes connection parts 226 connected to the support frame 221, bent parts 227 formed so as to be convex downward, and a middle part 228 connected to the bent parts 227a and 227b. The middle part 228 includes a horizontal plate 228a having opposite ends connected to the bent parts 227a and 227b and a push protrusion 228b for pushing the main switch 242 downward.

The bent parts 227 are convex downward. When the elastic operation portion 225 is pushed, the bent parts 227 are much more elastically deformed than the other parts.

The bent parts 227 connect the connection parts 226 to the middle part 228. One end a1 of each of the bent parts 227 is connected to a corresponding one of the connection parts 226, and the other end a2 of each of the bent parts 227 is connected to the middle part 228. The bent parts 227 include a first bent part 227a for connecting the first connection part 226a to the middle part 228 and a second bent part 227b for connecting the second connection part 226b to the middle part 228.

The bent parts 227 are connected to the opposite ends of the middle part 228. The bent parts 227 include a first bent part 227a connected to one end of the middle part 228 and a second bent part 227b connected to the other end of the middle part 228.

The first bent part 227a is configured such that the end a2 of the first bent part 227a adjacent to the middle part 228 is higher than the end a1 of the first bent part 227a distant from the middle part 228. The second bent part 227b is configured such that the end a2 of the second bent part 227b adjacent to the middle part 228 is higher than the end a1 of the second bent part 227b distant from the middle part 228.

When the elastic operation portion 225 is pushed downward in the state in which the elastic operation portion 225 is convex upward without the bent parts 227, buckling may occur in an undesired portion of the elastic operation portion 225, and excessive force may be required in order to push the elastic operation portion 225.

In the present invention, the bent parts 227 are provided. When the elastic operation portion 225 is pushed downward, the bent parts 227 are further bent, with the result that the curvature of the bent parts 227 is increased and the distance between the opposite ends a1 and a2 of each of the bent parts 227 is decreased. As the bent parts 227 are elastically deformed when bent, restoring force is generated.

Specifically, the first bent part 227a has a curvature that is convex downward. When the middle part 228 is pushed downward, the first bent part 227a is further bent, with the result that the curvature of the first bent part 227a is increased and the distance between the opposite ends a1 and a2 of the first bent part 227a is decreased. In addition, the second bent part 227b has a curvature that is convex downward. When the middle part 228 is pushed downward, the second bent part 227b is further bent, with the result that the curvature of the second bent part 227b is increased and the distance between the opposite ends a1 and a2 of the second bent part 227b is decreased.

As a result, deformation of the elastic operation portion 225 is concentrated on the bent parts 227 without buckling, which is advantageous in inducing deformation desired by a designer and in predetermining the magnitude of the restoring force.

The connection parts 226 include a first connection part 226a defining one end of the elastic operation portion 225 and connected to one side of the support frame 221 and a second connection part 226b defining the other end of the elastic operation portion 225 and connected to the other side of the support frame 221. The first connection part 226a and the second connection part 226b may be disposed about the central axis X in opposite directions. The first connection part 226a and the second connection part 226b are connected to the elastic operation portion fixing ends 222a.

One end of each of the connection parts 226 is connected to the support frame 221, and the other end of each of the connection parts 226 is connected to a corresponding one of the bent parts 227. The first connection part 226a connects the first bent part 227a to the support frame 221. The second connection part 226b connects the second bent part 227b to the support frame 221.

Each of the connection parts 226 may be formed of a bar type plate. Each of the connection parts 226 may be a member having a predetermined vertical thickness. Each of the connection parts 226 is disposed such that the inclination is gradually increased from the end a0 of the support frame 221 to the end a1 of each of the bent parts 227. The first connection part 226a is disposed such that the inclination is gradually increased from the end a0 of the support frame 221 to the end a1 of the first bent part 227a. The second connection part 226b is disposed such that the inclination is gradually increased from the end a0 of the support frame 221 to the end a1 of the second bent part 227b. As a result, the elastic operation portion 225 may be generally formed so as to be convex upward.

The middle part 228 is disposed between the middle part of the switch panel 210 and the main switch 242.

The middle part 228 is disposed at the lower side of the middle part of the switch panel 210. The upper surface of the middle part 228 may contact the lower surface of the switch panel 210 or may be spaced apart from the lower surface of the switch panel 210. In the state in which the middle part 228 and the switch panel 210 are not elastically deformed, the upper surface of the middle part 228 may be spaced apart from the lower surface of the switch panel 210. When the switch panel 210 is elastically deformed downward, the lower surface of the switch panel 210 contacts the upper surface of the middle part 228, with the result that the middle part 228 is pushed downward.

The middle part 228 is disposed at the upper side of the main switch 242. When moved downward, the middle part 228 pushes the main switch 242. In the state in which the middle part 228 is not elastically deformed, the middle part 228 is spaced apart from the upper end of the main switch 242 by a predetermined distance.

The middle part 228 interconnects the bent parts 227. One end of the middle part 228 is connected to the first bent part 227a, and the other end of the middle part 228 is connected to the second bent part 227b. The upper surface of the middle part 228 is disposed higher than the other parts of the elastic operation portion 225. As a result, the elastic operation portion 225 may be generally formed so as to be convex upward.

The middle part 228 includes a horizontal plate 228a defining the upper surface of the middle part 228.

The connection parts 226a and 226b and the bent parts 227a and 227b are each formed of a plate. The first connection part 226a, the second connection part 226b, the first bent part 227a, and the second bent part 227b are each formed of a plate.

The horizontal plate 228a is thicker than the first bent part 227a and the second bent part 227b. The horizontal plate 228a may be thicker than the first connection part 226a and the second connection part 226b. As a result, the rigidity of the horizontal plate 228a is increased. When the elastic operation portion 225 is pushed downward, therefore, the elastic deformation may be easily concentrated on the bent parts 227. Consequently, it is possible for a designer to more easily set the elastic force of the elastic operation portion 225. In addition, the rigidity of the horizontal plate 228a is sufficiently secured even if the largest bending moment is applied to the horizontal plate 228a, thereby improving the durability of the elastic operation portion 225.

The horizontal plate 228a interconnects the bent parts 227. One end of the horizontal plate 228a is connected to the first bent part 227a, and the other end of the horizontal plate 228a is connected to the second bent part 227b.

The middle part 228 includes a push protrusion 228b protruding downward from the lower surface of the horizontal plate 228a. The push protrusion 228b may be disposed at the middle of the horizontal plate 228a. The push protrusion 228b may have various shapes. In this embodiment, the push protrusion 228b is formed in a hollow cylindrical shape.

In the state in which the upper end b2 of the middle part 228 is not pushed, the lower end b1 of the push protrusion 228b is spaced apart from the upper end of the main switch 242 by a first predetermined length. When the middle part 228 is pushed downward, the lower end b1 of the push protrusion 228b contacts the upper end of the main switch 242, with the result that the main switch 242 is pushed downward. The main switch 242 is set to be pushed by a second predetermined length. The sum of the first predetermined length and the second predetermined length is defined as a stroke length d1.

The depth of the downwardly concave surface of each of the bent parts 227 is defined as a bending depth d2. Specifically, the bending depth d2 may be defined as the distance from a plane interconnecting the opposite ends a1 and a2 of each of the bent parts 227 to the upper surface of each of the bent parts 227.

The elastic operation portion 225 may be configured such that the bending depth d2 is greater than the stroke length d1. As a result, the elastic deformation of the elastic operation portion 225 may be concentrated on the bent parts 227 under the condition that the stroke length d1 is uniform. The bending depth d2 may be about 1.5 times the stroke length d1. For example, the stroke length d1 may be preset to about 0.5 mm, and the bending depth d2 may be preset to about 0.75 mm.

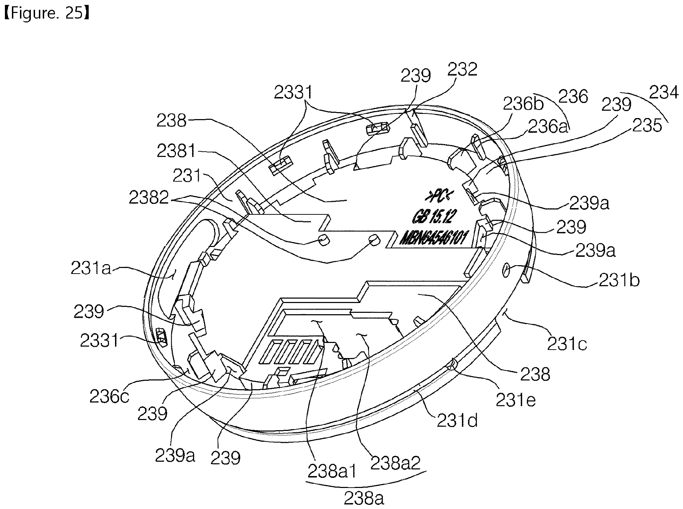

The structure of the side case 230 will be described in detail with reference to FIGS. 25 to 27.

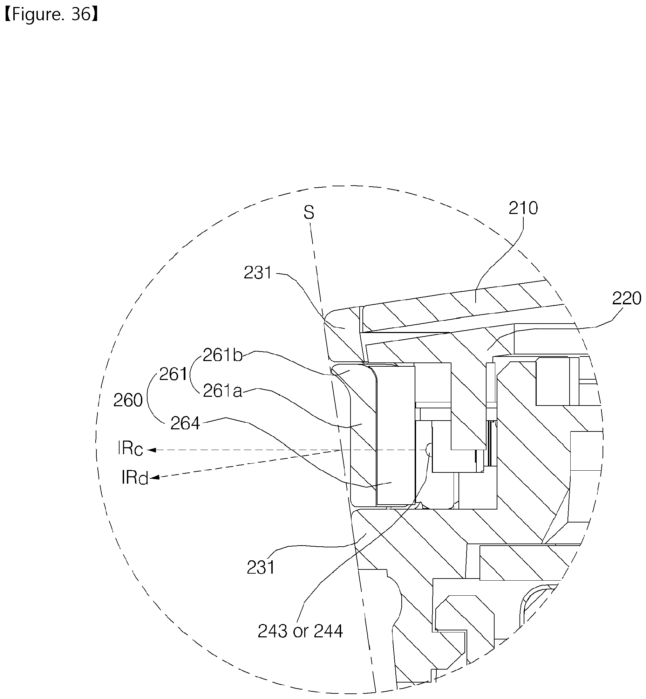

The side case 230 includes a side member 231 defining the external appearance of the circumference thereof about the central axis X. The side member 231 may extend in the circumferential direction. The side member 231 may be constituted by a wall having a predetermined vertical height. Referring to FIG. 36, an inclined surface S of the side member 231 is formed so as to become increasingly distant from the central axis X in the upward direction. The upper end of the side member 231 defines the thickness of the side member 231 in the direction XI inward toward the axis and in the direction XO outward from the axis. The corner of the upper end of the side member 231 in the direction XI inward toward the axis defines the inner edge of the side member 231. The corner of the upper end of the side member 231 in the direction XO outward from the axis defines the upper edge E1 of the main body 2A.

The side member 231 is provided with a transmission member location hole 231a, in which the transmission member 260 is located. The circumferential length of the transmission member location hole 231a is greater than the vertical length of the transmission member location hole 231a. The transmission member location hole 231a is formed in the inclined surface S of the side member 231. Circumferentially opposed ends of the transmission member location hole 231a are rounded.

The side member 231 is provided with a sensor hole 231b, through which air, which is sensed by the temperature and humidity sensor 245, passes. The sensor hole 231b may be circular. The sensor hole 231b is formed opposite the transmission member location hole 231a about the central axis X. A space in which the temperature and humidity sensor 245 is disposed is defined in the sensor hole 231b in the direction XI inward toward the axis.

The side member 231 is provided with a charging terminal recess 231c, through which a plug is inserted into the charging terminal 255. The end of the charging terminal 255 is held in the charging terminal recess 231c. The charging terminal recess 231c is formed in the lower part of the side member 231. The end of the charging terminal 255 is located in the charging terminal recess 231c such that the circumferentially opposed side surfaces and the upper surface of the end of the charging terminal 255 contact the side member 231 and the lower surface of the end of the charging terminal 255 contacts the bottom case 270. The charging terminal recess 231c may be formed in the insertion portion 202 of the main body 2A, which is not exposed when the main body 2A is coupled to the container 2B.

The attachment and detachment groove 231d is formed in the outer circumference of the side member 231. The attachment and detachment groove 231d may extend in the circumferential direction. The attachment and detachment groove 231d may be interrupted by the charging terminal recess 231c.

The side member 231 is provided with a button hole 231d, through which an inner button may be pushed. An external object may be inserted through the button hole 231d to push an inner button, such as a reset button 252. The button hole 231d may be formed in the surface that defines the attachment and detachment groove 231d such that the button hole 231d is not easily visible. The button hole 231d may be formed in the insertion portion 202 of the main body 2A, which is not exposed when the main body 2A is coupled to the container 2B. A space in which the reset button 252 is disposed is defined in the button hole 231d in the direction XI inward toward the axis.

The side member 231 is provided with a positioning protrusion 232. The positioning protrusion 232 may be engaged into the switch panel recess 210a. The positioning protrusion 232 may be engaged into the support frame recess 221a. The positioning protrusion 232 protrudes from the inner surface of the side member 231.

The positioning protrusion 232 extends vertically along the inner surface of the side member 231. In this case, the upper part of the positioning protrusion 232 is located in the switch panel recess 210a, and the lower part of the positioning protrusion 232 is located in the support frame recess 221a.

The side member 231 is provided with support frame-coupling portions 2331, which are coupled to the support frame 221. The support frame-coupling portions 2331 may be hook-shaped or dome-shaped. The support frame-coupling portions 2331 may be arranged along the circumference of the side member 231 at intervals. The support frame-coupling portions 2331 are formed on the inner surface of the side member 231. The support frame-coupling portions 2331 are formed on the upper part of the side member 231. The support frame-coupling portions 2331 may be hooks protruding from the inner surface of the side member 231 in the direction XO inward toward the axis. Each of the hooks 2331 may be formed in a shape having a circumferential length greater than a vertical length. The hooks 2331 are inserted into the coupling recesses 224a of the support frame 221.

The side case 230 includes holding ribs 236 for guiding the support frame 221 such that the support frame 221 is located in the side frame. Holding recesses 236c are formed in the holding ribs 236. The insertion ribs 223 of the support frame 221 are inserted into the holding recesses 236c. The holding ribs 236 are arranged along the circumference of the side case 230 at intervals. The holding ribs 236 are disposed inside the side case 230. The holding ribs 236 protrude upward from the upper surface of a main rib 235, a description of which will follow, and extend in the direction XI inward toward the axis and the direction XO outward from the axis.

Each of the holding ribs 236 may include a first holding rib 236a and a second holding rib 236b, which are separated from each other. A gap between the first holding rib 236a and the second holding rib 236b defines a holding recess 236c. One end of the first holding rib 236a may be connected to the inner surface of the side member 231. One end of the second holding rib 236b may be connected to a connection rib 239, a description of which will follow.

The side member 231 is provided with a bottom case-coupling portion 2332, which is coupled to the bottom case 270. The bottom case-coupling portion 2332 may be hook-shaped or dome-shaped. A plurality of bottom case-coupling portions 2332 may be arranged along the circumference of the side member 231 at intervals. The bottom case-coupling portions 2332 are formed on the inner surface of the side member 231. The bottom case-coupling portions 2332 are formed on the lower part of the side member 231. The bottom case-coupling portions 2332 may be hooks protruding from the inner surface of the side member 231 in the direction XO inward toward the axis. Each of the hooks 2332 may be formed in a shape having a circumferential length greater than a vertical length. The hooks 2332 are inserted into coupling recesses 273a formed in the bottom case 270.

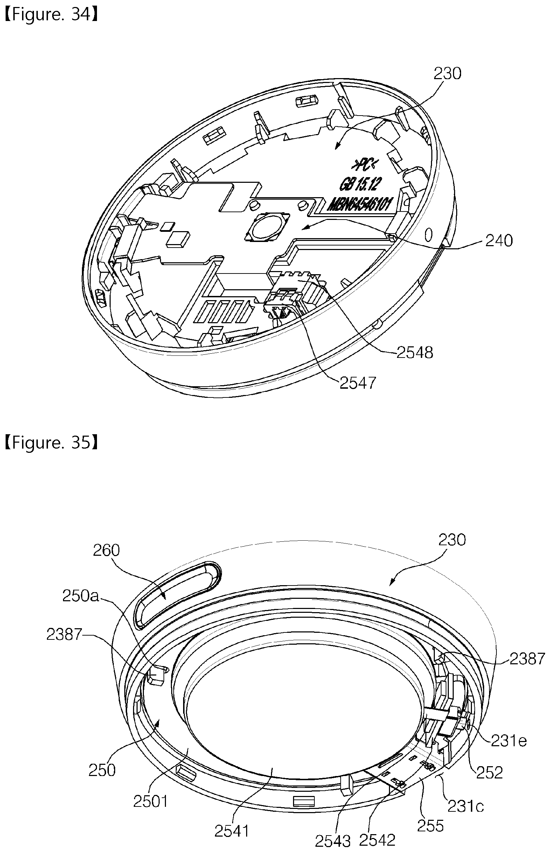

The side case 230 includes a lower guide 237 for guiding the disposition of the lower PCB 250. The lower guide 237 may be a bar type member protruding downward. Alternatively, the lower guide 237 may be a rib type member protruding downward. The lower guide 237 extends upward and downward. The lower end of the lower guide 237 is a free end. The upper end of the lower guide 237 may be connected to the lower surface of the main rib 235. The lower guide 237 is disposed at the inner edge of the side case 230. A plurality of lower guides 237 may be arranged along the circumference of the main rib 235 at intervals. Referring to FIG. 35, the lower PCB 250 is provided with guide recesses 250a, into which the lower guides 237 are engaged. When the lower PCB 250 is placed such that the lower guides 237 are inserted into the guide recesses 250a, the lower PCB 250 may be placed at a predetermined position.

The side case 230 includes a PCB disposition member 238, which is horizontally formed in the side member 231. When viewed from above, the PCB disposition member 238 is disposed at the central part of the side case 230.

The side case 230 includes a PCB disposition member connection portion 234 for connecting the PCB disposition member 238 to the side member 231. The PCB disposition member connection portion 234 is supported by the side member 231, and the PCB disposition member 238 is supported by the PCB disposition member connection portion 234. The PCB disposition member connection portion 234 is disposed at the edge of the PCB disposition member 238. In addition, the PCB disposition member connection portion 234 is disposed between the PCB disposition member 238 and the side member 231.

The PCB disposition member connection portion 234 includes a main rib 235 protruding from the inner surface of the side member 231 in the direction XI inward toward the axis and extending along the circumference of the side member 231. The main rib 235 has a predetermined vertical thickness. The main rib 235 may be ring-shaped. The main rib 235 provides a support point for supporting the PCB disposition member 238.

The PCB disposition member connection portion 234 includes a connection rib 239 protruding from the main rib 235 so as to be connected to the PCB disposition member 238. The connection rib 239 may protrude downward from the lower surface of the main rib 235. In this embodiment, the connection rib 239 protrudes upward from the upper surface of the main rib 235. The lower end of the connection rib 239 may be connected to the end of the main rib 235 in the direction XI inward toward the axis. The upper end of the connection rib 239 may be connected to the end of the PCB disposition member 238 in the direction XO outward from the axis.

The connection rib 239 may extend in the circumferential direction. A plurality of connection ribs 239 may be arranged in the circumferential direction at intervals. Holes 239a may be defined between the respective connection ribs 239. The holes 239a are partitioned by the connection ribs 239 at opposite sides of the respective holes 239a in the circumferential direction and are partitioned by the PCB disposition member 238 and the main rib 235 in the vertical direction.

The PCB disposition member 238 is a plate member that is disposed horizontally. When viewed from above, the PCB disposition member 238 may be generally circular. The PCB disposition member 238 may be disposed horizontally.

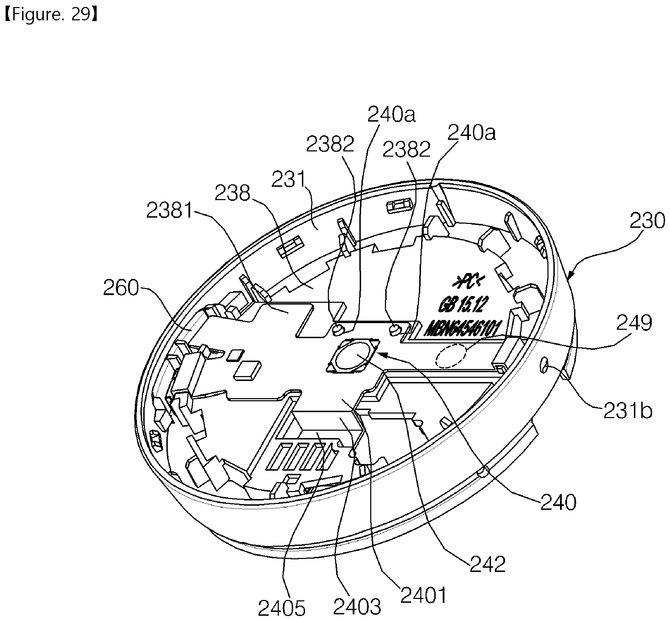

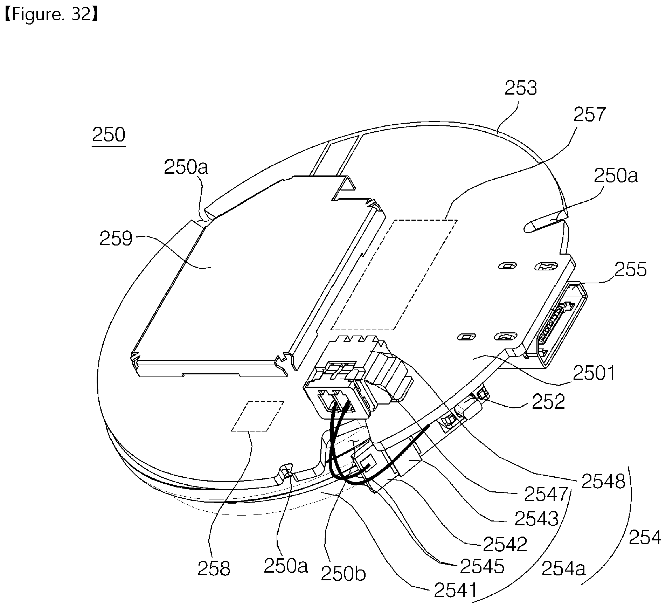

The PCB disposition member 238 is provided with a vertical through hole 238a. Referring to FIGS. 29 to 31, the PCB disposition member 238 is provided with a PCB through hole 238a1. The PCB may be disposed so as to extend through the PCB through hole 238a1. Referring to FIGS. 32 and 34, the PCB disposition member 238 is provided with an element through hole 238a2. A predetermined element or part may be disposed so as to extend through the element through hole 238a2. In this embodiment, the upper PCB 240 extends through the PCB through hole 238a1, and a connector 2547 of the power supply device 254 extends through the element through hole 238a2. The PCB through hole 238a1 and the element through hole 238a2 may be formed separately. In this embodiment, the PCB through hole 238a1 and the element through hole 238a2 are integrally formed into a single through hole 238a.

Referring to FIGS. 25 to 31, the PCB disposition member 238 includes PCB contact portions 2381 and 2385, which define a PCB location surface. Specifically, the upper surface of the PCB disposition member 238 includes an upper contact portion 2381, which contacts the lower surface of the upper PCB 240. The lower surface of the PCB disposition member 238 includes a lower contact portion 2385, which contacts the upper surface of the upper PCB 240. The upper PCB 240 may extend through the through hole 238a so as to be disposed at both the upper side and the lower side of the PCB disposition member 238. In this case, the upper PCB 240 may contact both the upper contact portion 2381 and the lower contact portion 2385.

The upper contact portion 2381 of the PCB disposition member 238 is disposed higher than the other portions. The upper contact portion 2381 may extend in the forward and rearward direction. The front end of the upper contact portion 2381 may extend to the front end of the PCB disposition member 238, and the rear end of the upper contact portion 2381 may extend to the rear end of the PCB disposition member 238.

The PCB disposition member 238 includes fixing portions 2382 and 2383 for fixing the PCB to the PCB disposition member 238. Specifically, the PCB disposition member 238 may include an upper fixing protrusion 2382 protruding upward and a lower fixing protrusion 2386 protruding downward. The upper fixing protrusion 2382 may be disposed at the upper contact portion 2381, and the lower fixing protrusion 2386 may be disposed at the lower contact portion 2385. The upper fixing protrusion 2382 may be inserted into a fixing hole 240a formed in the upper PCB 240, and the lower fixing protrusion 2386 may be inserted into a fixing hole 240b formed in the upper PCB 240.

The inner space of the side case 230 may be partitioned by the PCB disposition member 238. The inner space of the side case 230 may be partitioned into an upper inner space defined at the upper side of the PCB disposition member 238 and a lower inner space defined at the lower side of the PCB disposition member 238. The upper inner space of the side case 230 extends along the inner circumference of the side member 231 so as to have a larger vertical depth. The sensor module, including the temperature and humidity sensor 245 and the proximity sensor 244, may be disposed in the upper inner space of the side case 230. The remote control module 25 may be disposed in the upper inner space of the side case 230.

The main body 2A includes PCBs 240 and 250. The PCBs 240 and 250 are disposed in the main body 2A. Two or more PCBs 240 and 250 may be disposed so as to realize a layered structure. In this embodiment, the upper PCB 240 is disposed above the lower PCB 250.

Referring to FIGS. 29 to 31, the upper PCB 240 includes an upper plate portion 2401 contacting the upper contact portion 2381, a lower plate portion 2405 contacting the lower contact portion 2385, and a connection plate portion 2403 for connecting the upper plate portion 2401 and the lower plate portion 2405 to each other. The upper plate portion 2401 is disposed in the upper inner space of the side case 230, and the lower plate portion 2405 is disposed in the lower inner space of the side case 230. The connection plate portion 2403 vertically extends through the through hole 238a.

When viewed from above, the upper plate portion 2401 extends to the main rib 235 in the forward and rearward direction. The upper plate portion 2401 is provided with a fixing hole 240a. The upper fixing protrusion 2382 is inserted into the fixing hole 240a such that the upper plate portion 2401 is fixed.

The front part of the upper plate portion 2401 may be bent downward along the front corner of the PCB disposition member 238. The rear part of the upper plate portion 2401 may be bent downward along the rear corner of the PCB disposition member 238. The control signal light-emitting unit 243 or the proximity sensor 244 may be disposed at the forward-facing surface of the bent front part of the upper plate portion 2401. The temperature and humidity sensor 245 may be disposed at the rearward-facing surface of the bent rear part of the upper plate portion 2401.

The control signal light-emitting unit 243 is disposed at the front part of the upper plate portion 2401. The control signal light-emitting unit 243 may include an LED for emitting infrared light to the front. The transmission member 260 is disposed in front of the control signal light-emitting unit 243. The control signal light-emitting unit 243 is located at the upper side of the main rib 235 on the front side of the side case. The control signal light-emitting unit 243 is electrically connected to the upper PCB 240.

The proximity sensor 244 is disposed at the front part of the upper plate portion 2401. The proximity sensor 244 includes a proximity signal light-emitting unit 2441 for emitting infrared light to the front and a proximity signal light-receiving unit 2442 for receiving a reflected component of the emitted infrared light. The transmission member 260 is disposed in front of the proximity sensor 244. The proximity sensor 244 is located at the upper side of the main rib 235 on the front side of the side case 230. The proximity sensor 244 is electrically connected to the upper PCB 240.

The control signal light-emitting unit 243 and the proximity sensor 244 are disposed at the left and right sides of the front part of the side case 230. Infrared light emitted by the control signal light-emitting unit 243 and infrared light emitted by the proximity sensor 244 may pass through the transmission member 260. The control signal light-emitting unit 243 and the proximity sensor 244 are disposed at the rear of the transmission member 260.

The temperature and humidity sensor 245 may be disposed at the rear part of the upper plate portion 2401. The temperature and humidity sensor 245 senses the temperature and/or humidity of air passing through the sensor hole 231b. The sensor hole 231b is disposed at the rear of the temperature and humidity sensor 245. The proximity sensor 244 is located at the upper side of the main rib 235 on the rear side of the side case 230. The proximity sensor 244 is electrically connected to the upper PCB 240.

The main switch 242 may be disposed at the central part of the upper plate portion 2401. The main switch 242 may be pushed downward. The push protrusion 228b is disposed at the upper side of the main switch 242 so as to be space apart from the main switch 242 by a predetermined distance.

The upper plate portion 2401 is formed in a shape that can be connected to all of the control signal light-emitting unit 243, the proximity sensor 244, the temperature and humidity sensor 245, and the main switch 242.

The display LED 249 may be disposed at the upper plate portion 2401. The display LED 249 may include a plurality of LEDs having different colors. The display LED 249 may inform a user of charging/discharging of the battery 2541 or whether the accessory has been paired with the network. The region in which the display LED 249 is disposed is shown in FIG. 29. The display LED 249 is disposed at the lower side of the light transmission unit 215 of the switch panel 210. Light emitted by the display LED 249 may pass through the light transmission unit 215. In this embodiment, the display LED 249 is disposed between the main switch 242 and the temperature and humidity sensor 245.

The upper plate portion 2401 of the PCB is bent downward and extends to define the upper end of the connection plate portion 2403. The lower plate portion 2405 of the PCB is bent upward and extends to define the lower end of the connection plate portion 2403. The connection plate portion 2403 is disposed at the right side of the main switch 242. The connection plate portion 2403 electrically connects the upper plate portion 2401 and the lower plate portion 2405 to each other.

The lower plate portion 2405 extends from the lower end of the connection plate portion 2403 in the direction XO outward from the axis. When viewed from below, one end of the lower plate portion 2405 extends to the main rib 235. The lower plate portion 2405 is provided with a fixing hole 240b. The lower fixing protrusion 2386 is inserted into the fixing hole 240b such that the lower plate portion 2405 is fixed.

A lower PCB connection terminal 248 is disposed at the lower plate portion 2405. The lower PCB connection terminal 248 provides an electrical connection point with the lower PCB 250. The lower PCB connection terminal 248 is connected to an upper PCB connection terminal 258 disposed on the lower PCB 250. The region in which the lower PCB connection terminal 248 is disposed is shown in FIG. 30. The lower PCB connection terminal 248 is disposed at the lower surface of the lower plate portion 2405.

Referring to FIGS. 32 to 35, the lower PCB 250 includes a main board 2501. The main board 2501 is a plate member that is disposed horizontally. The guide recesses 250a are formed in the main board 2501. The guide recesses 250a are arranged along the circumference of the main board 2501 at intervals. The guide recesses 250a are formed from the edge of the main board 2501 toward the central axis X.

The upper PCB connection terminal 258 is disposed at the main board 2501. The upper PCB connection terminal 258 is disposed at the upper surface of the main board 2501. The upper PCB connection terminal 258 provides an electrical connection point with the upper PCB 240. The upper PCB connection terminal 258 is connected to the lower PCB connection terminal 248, which is disposed on the upper PCB 240. The region in which the upper PCB connection terminal 258 is disposed is shown in FIG. 32.

The communication module 26 is disposed at the main board 2501. The communication module 26 may be disposed at the upper surface of the main board 2501. The communication module 26 includes an antenna 253 for transmitting and receiving a signal over the network. Referring to FIG. 32, the antenna 253 may be patterned on the main board 2501. In another example, an additional antenna 253 may be disposed at a place other than the main board 2501.

The acceleration sensor 257 may be disposed at the main board 2501. The acceleration sensor 257 may be disposed at the upper surface of the main board 2501. The region in which the acceleration sensor 257 is disposed is shown in FIG. 32.

The lower PCB 250 includes an element protection cover 259 for protecting elements disposed on the main board 2501. The element protection cover 259 may be disposed at the upper surface of the main board 2501. The element protection cover 259 covers the elements disposed on the main board 2501.

The power supply device 254 may be disposed at the main board 2501. The power supply device 254 includes a rechargeable battery 2541 for supplying power. The power supply device 254 may include an abnormal current interruption unit 2542 for interrupting power when abnormal current is supplied from the battery 2541. The power supply device 254 may include a battery connection line 2543 for electrically connecting the battery 2541 to the abnormal current interruption unit 2542. The power supply device 254 includes a board-side connector 2548 disposed at the main board 2501 for supplying current from the battery 2541 to the main board 2501. The power supply device 254 includes a conductor-side connector 2547 connected to the board-side connector 2548. One of the board-side connector 2548 and the conductor-side connector 2547 is a socket, and the other of the board-side connector 2548 and the conductor-side connector 2547 is a plug. The power supply device 254 includes a connector connection line 2545 for electrically connecting the conductor-side connector 2547 to the abnormal current interruption unit 2542.

The power supply device 254 includes a replacement module 254a that is replaceable when needed. The replacement module 254a includes the battery 2541, the abnormal current interruption unit 2542, the battery connection line 2543, the conductor-side connector 2547, and the connector connection line 2545. The power supply device 254 includes the replacement module 254a and the board-side connector 2548.

The battery 2541 is disposed at the lower surface of the main board 2501. When viewed from below, the battery 2541 is circular, and is disposed such that the center of the battery 2541 is located at a point spaced apart from the central axis X. The battery 2541 may be electrically connected to the charging terminal 255.

The abnormal current interruption unit 2542 is disposed at the lower surface of the main board 2501. The abnormal current interruption unit 2542 may be a plate member that is perpendicular to the main board 2501.

The board-side connector 2548 is disposed at the upper surface of the main board 2501. The conductor-side connector 2547 is disposed at the upper side of the main board 2501. The connector connection line 2545 connects the abnormal current interruption unit 2542, which is disposed at the lower surface of the main board 2501, and the conductor-side connector 2547, which is disposed at the upper side of the main board 2501, to each other. A conductor through hole 250b is formed in the main board 2501, and the connector connection line 2545 extends through the conductor through hole 250b.

Referring to FIG. 34, the board-side connector 2548 and the conductor-side connector 2547 extend through the element through hole 238a2.

The charging terminal 255 is disposed at the lower surface of the main board 2501. The charging terminal 255 is located in the charging terminal recess 231c. When discharged, the battery 2541 may be charged through the charging terminal 255.

The reset button 252 is disposed at the lower surface of the main board 2501. The reset button 252 is disposed in the button hole 231d in the direction XI inward toward the axis. In the case in which the lower guides 237 are inserted into the guide recesses 250a, the disposition between the reset button 252 and the sensor hole 231b and the disposition between the upper PCB connection terminal 258 and the lower PCB connection terminal 248 are achieved as desired.

Referring to FIGS. 36 to 38, the transmission member 260 is located in the transmission member location hole 231a of the side case 230. The transmission member 260 includes a front window 261 exposed to the outside, a catching portion 263 for enabling the transmission member 260 to be caught by the side member 231, and a disposition guide 264 for guiding the disposition of elements at the rear of the transmission member 260.

The side member 231 includes an inclined surface S having different distances from the central axis X in the vertical direction. The inclined surface S forms an acute angle with the central axis X in an imaginary vertical section including the central axis X. In this embodiment, the side member 231 includes an inclined surface S that is gradually distant from the central axis X in the upward direction.

The transmission member location hole 231a is formed in the inclined surface S of the side member 231. When the window 261 is viewed from the front, the edge of the window 261 protrudes so as to correspond to the inclined surface S of the side member 231. Referring to FIG. 36, in an arbitrary horizontal section, the extent to which the surface of the edge of the window 261 protrudes in the direction XO outward from the axis is substantially proportional to the extent to which the surface of the side member adjacent to the window 261 protrudes in the direction XO outward from the axis. The protruding surface of the edge of the window 261 may have substantially the same inclination as the inclined surface S.

When the window 261 is viewed from the front, the central part of the window 261 defines a surface 261a formed so as to be parallel to the central axis X in an imaginary vertical section including the central axis X.

In the case in which the inclined surface S has an inclination gradually distant from the central axis X in the upward direction, the window 261 includes a vertical portion 261a formed at the central part and the lower part of the window 261. The vertical portion 261a defines a surface 261a formed so as to be parallel to the central axis X in an imaginary vertical section including the central axis X. The vertical portion 261a is perpendicular to an imaginary horizontal plane (a plane perpendicular to the central axis X).

The lower end of the vertical portion 261a defines the lower end of the window 261. The lower end of the vertical portion 261a is connected to the side member 231 at the lower side of the transmission member location hole 231a. In an imaginary vertical section, the surface of the vertical portion 261a is disposed on substantially the same vertical line as the surface of the side member 231 at the lower side of the transmission member location hole 231a. When infrared light is emitted from the rear of the vertical portion 261a to the front of the vertical portion 261a, therefore, the infrared light travels straight, without being refracted.

The side member 231 may extend in the circumferential direction. The inclined surface S may be curved in the circumferential direction. The vertical portion 261a may be curved in the circumferential direction. The circumferential curvature of the vertical portion 261a is substantially the same as the circumferential curvature of the side member 231 at the lower side of the transmission member location hole 231a.

The window 261 includes bent portions 261b and 261c protruding from the upper edge and the left and right edges of the window 261 in the direction XO outward from the axis. The bent portions 261b and 261c may be formed along the inclined surface S of the side member 231 so as to be gradually distant from the central axis X in the upward direction. The bent portions 261b and 261c may be formed in a convex shape.

The bent portions 261b and 261c include an upper bent portion 261b protruding forward from the upper part of the window 261 and side bent portions 261c protruding forward from the left and right parts of the window 261. The side bent portions 261c are formed so as to gradually protrude in the upward direction.

When the window 261 is viewed from the front, the region defined by the bent portions 261b and 261c and the vertical portion 261a is concave.

The catching portion 263 may protrude from the rear edge of the window 261 upward, downward, leftward, or rightward. The catching portion 263 is formed at the rear side of the transmission member location hole 231a. The catching portion 263 extends upward, downward, leftward, or rightward such that the transmission member 260 cannot escape from the transmission member location hole 231a. The catching portion 263 contacts the inner wall of the side member 231 such that the transmission member 260 cannot escape from the transmission member location hole 231a.

The catching portion 263 may protrude upward or downward. In this embodiment, two catching portions 263 protrude from circumferentially opposed sides of the window 261. The catching portions 263 may include a first catching portion 263a disposed at one side of the window 261 and a second catching portion 263b disposed at the other side of the window 261. The catching portions 263 are caught by the side member 231 adjacent to the transmission member location hole 231a.

The main body 2A includes an optical signal light-emitting unit for emitting a predetermined optical signal in a specific direction. The optical signal light-emitting unit may be constituted by the proximity sensor 244 and/or the control signal light-emitting unit 243. That is, the optical signal light-emitting unit includes at least one of the proximity sensor 244 and the control signal light-emitting unit 243. In this embodiment, the optical signal light-emitting unit includes both the proximity sensor 244 and the control signal light-emitting unit 243.

The optical signal light-emitting unit is disposed at the rear of the window 261. The optical signal light-emitting unit is disposed such that the optical signal passes perpendicularly through the central part of the window 261. The optical signal light-emitting unit is disposed such that the optical signal passes perpendicularly through the vertical portion 261a.

The disposition guide 264 protrudes rearward from the rear surface of the window 261. The disposition guide 264 may include a rib that extends vertically. The disposition guide 264 may partition a space defined at the rear of the window 261 into left and right spaces. A plurality of disposition guides 264 may be arranged side by side. The disposition guides 264 may include a disposition guide 264a for defining the left space 260a of the window 261. The disposition guides 264 may include a disposition guide 264b for defining the right space 260b of the window 261.

The control signal light-emitting unit 243 and the proximity sensor 244 are disposed respectively in the spaces 260a and 260b defined at the rear of the window 261, which are partitioned by the disposition guide 264b. In this embodiment, the control signal light-emitting unit 243 is disposed in the left space 260a, and the proximity sensor 244 is disposed in the right space 260b. The disposition guide 264b guides the positions of the proximity sensor 244 and the control signal light-emitting unit 243 relative to the window 261. As a result, optical signals emitted by the proximity sensor 244 and the control signal light-emitting unit 243 may pass through the window 261 at predetermined angles and may reach predetermined positions. That is, the disposition guide 264b guides the relative disposition of the transmission member 260, the proximity sensor 244, and the control signal light-emitting unit 243 such that the optical signals pass perpendicularly through the vertical portions 261a.

The optical signal light-emitting units disposed in the spaces 260a and 260b defined at the rear of the window 261 push the rear surface of the window 261 forward such that the catching portions 263 come into tight contact with the inner surface of the side member 231. As a result, the transmission member 260 is fixed to the side member 231.

The optical signal light-emitting units may include module cases 2433 and 2443 for pushing the rear surface of the window 261. The module cases 2433 and 2443 define the front surfaces of the optical signal light-emitting units. The front surfaces of the module cases 2433 and 2443 contact the rear surface of the window 261.

The module cases 2433 and 2443 include a control module case 2433, in which the control signal light-emitting unit 243 is disposed, and a proximity module case 2443, in which the proximity signal light-emitting unit 2441 is disposed. The proximity signal light-receiving unit 2443 may be disposed in the proximity module case 2443.

The control module case 2433 may be provided in the front surface thereof with a recess, which is depressed rearward. The control signal light-emitting unit 243 may be disposed in the recess and may emit an optical signal forward. The proximity module case 2443 may be provided in the front surface thereof with a recess, which is depressed rearward. The proximity signal light-emitting unit 2441 may be disposed in the recess and may emit an optical signal forward. In addition, the proximity module case 2443 may be provided in the front surface thereof with an additional recess, which is depressed rearward. The proximity signal light-receiving unit 2442 may be disposed in the additional recess and may receive the optical signal returning from the front.

The front surface of the control module case 2433 and the front surface of the proximity module case 2443 may contact the rear surface of the window 261 to push the window 261 forward. The disposition of the control module case 2433 and the proximity module case 2443 is guided by the disposition guides 264.

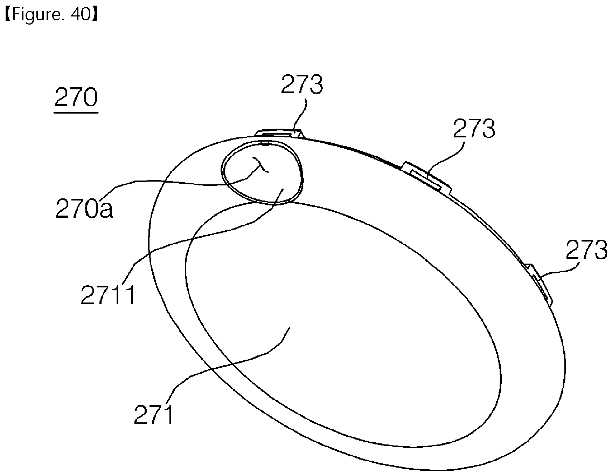

Referring to FIGS. 39 to 42, the bottom case 270 defines the lower surface of the main body 2A. The bottom case 270 may define the lower part of the side surface of the main body 2A. A space is defined in the bottom case 270 in the state in which the bottom case 270 is coupled to the side case 230.

The lower PCB 250 is disposed in the bottom case 270. The lower PCB 250 is coupled to the upper side of the bottom case 270.

The bottom case 270 is provided with a space 270b in which the battery 2541 is disposed. The bottom case 270 is provided with a space 270c in which the charging terminal is disposed. The bottom case 270 is provided with a recess 270d, in which the reset button is held.

The bottom case 270 includes an outer member 271 defining the external appearance thereof. The outer member 271 includes a lower surface. The outer member 271 includes a circumferential surface formed around the circumference thereof.

The direction-setting recess 270a is formed in the outer member 271. The direction-setting recess 270a is formed in the lower side of the outer member 271. When viewed from below, the direction-setting recess 270a is formed in the edge of the outer member 271. The direction-setting recess 270a is defined by the depression 2711 of the outer member 271.

The bottom case 270 includes a side case-coupling portion 273, which is coupled to the side case 230. A plurality of side case-coupling portions 273 may be arranged along the circumference of the bottom case 270 at intervals. The side case-coupling portions 273 protrude upward from the upper end of the outer member 271.

In this embodiment, the side case-coupling portions 273 are provided with coupling recesses 273a. Each of the coupling recesses 273a may be depressed in the direction XI inward toward the axis. The circumferential length of each of the coupling recesses 273a may be greater than the vertical length of each of the coupling recesses 273a. The coupling recesses 273a may be arranged along the circumference of the support frame 221 at intervals.

The side case-coupling portions 273 are coupled to the bottom case-coupling portions 2332 of the side case 230. One selected from each of the side case-coupling portions 273 and each of the bottom case-coupling portions 2332 is provided with a coupling recess, and the other selected from each of the side case-coupling portions 273 and each of the bottom case-coupling portions 2332 is provided with a protrusion, which is engaged into the coupling recess. In this embodiment, the side case-coupling portions 273 are provided with coupling recesses 273a, and the bottom case-coupling portions 2332 are provided with protrusions, which are engaged into the coupling recess 273a.

The upper end of the circumferential surface of the outer member 271 contacts the lower end of the side case 230. The bottom case 270 includes an edge insertion rib 272 protruding upward from the circumferential surface of the outer member 271 and extending along the circumference of the outer member 271. The edge insertion rib 272 extends along the upper edge of the outer member 271. The edge insertion rib 272 may be ring-shaped. The edge insertion rib 272 is formed at a point spaced apart from the edge of the upper end of the outer member 271 by a predetermined distance (a distance corresponding to the thickness of the lower end of the side case 230) toward the central axis X. The side surface of the edge insertion rib 272 in the direction XO outward from the axis contacts the inner surface of the side case 230.

The side case-coupling portions 273 protrude upward from the edge insertion rib 272. The reset button disposition recess 270d is formed in the edge insertion rib 272.

The bottom case 270 includes a charging terminal guide rib 277 for guiding the disposition of the charging terminal 255. The charging terminal guide rib 277 includes a bottom guide 277a for guiding the disposition of the lower surface of the charging terminal 255, an end guide 277b for guiding the end of the charging terminal 255 in the direction XO outward from the axis, and side guides 277c for guiding circumferentially opposed surfaces of the charging terminal 255.

The charging terminal disposition space 270c is provided at the upper side of the bottom guide 277a and the end guide 277b. The charging terminal disposition space 270c is provided between the two side guides 277c.

The bottom guide 277a includes a rib protruding upward from the outer member 271. The bottom guide 277a includes a rib extending in the leftward and rightward direction. The upper end of the bottom guide 277a supports the lower surface of the charging terminal 255.

The end guide 277b is formed at the upper end of the outer member 271. The edge insertion rib 272 is not disposed at the position at which the end guide 277b is formed. The end guide 277b may be formed so as to be depressed such that the end of the charging terminal 255 is engaged into the upper end of the outer member 271.

The two side guides 277c may be disposed at the left and right side surfaces of the charging terminal 255. The side guides 277c include ribs protruding upward from the outer member 271. The side guides 277c extend along the side surfaces of the charging terminal 255. The height of the upper end of each of the side guides 277c is substantially equal to the height of the upper end of the edge insertion rib 272.

The bottom case 270 includes a battery guide rib 275 for guiding the disposition of the battery 2541. The battery guide rib 275 contacts the side surface of the battery 2541. The battery guide rib 275 extends along the side surface of the battery 2541.

The lower surface of the battery 2541 may be supported by the bottom surface of the outer member 271. When viewed from above, the battery 2541 is circular, and is disposed such that the center of the battery 2541 is located at a point spaced apart from the central axis X. The battery 2541 is eccentrically disposed in the bottom case 270. The battery 2541 has a diameter less than the diameter of the bottom case 270. The battery 2541 may be disposed such that the side surface of the battery 2541 in the direction XO outward from the axis contacts the inner surface of the bottom case 270.

The battery guide rib 275 is formed so as to surround the side surface of the battery 2541 in the direction opposite to the direction in which the battery 2541 is eccentric.

The battery guide rib 275 includes ribs 275a and 275c, formed at positions at which the ribs 275a and 275c do not interfere with the charging terminal 255, the reset button 252, and the abnormal current interruption unit 2542 such that the ribs 275a and 275c protrude to predetermined heights. The ribs 275a and 275c include a rib 275a extending from one side of the charging terminal 255 and a rib 275c extending from the other side of the charging terminal 255.

The battery guide rib 275 includes a rib 275b protruding to a height less than the heights of the ribs 275a and 275c so as to prevent interference with the charging terminal 255. One side surface of the rib 275b guides the side surface of the battery 2541, and the charging terminal 255 is disposed at the upper side of the rib 275b.

The battery guide rib 275 includes a rib 275d protruding to a height less than the heights of the ribs 275a and 275c so as to prevent interference with the abnormal current interruption unit 2542. One side surface of the rib 275d guides the side surface of the battery 2541, and the other components of the power supply device 254 excluding the battery 2541 may be disposed at the upper side of the rib 275d. A cylindrical battery disposition space 270b is defined between the concave surface of the battery guide rib 275 and the inner surface of the outer member 271.

Referring to FIGS. 43 to 46, the container 2B includes a container body 280, which has therein an external coupling portion 283 and at least a portion of the inner portion 206, and a container side member 290 defining the outer portion 205 with respect to the container body 280 in the direction XO outward from the axis. The container 2B includes a container body 280, which defines a bottom portion 281a and an inclined portion 281b, and a container side member, which defines an outward surface 291.

The container 2B includes a main body-coupling portion 280a, formed by depressing the central part of the container 2B downward.

When viewed from above, the container body 280 is circular. The central part of the container body 280 is concave downward. The side surface of the container body 280 protrudes upward so as to have a predetermined height.

The container body 280 includes an inner surface 281, which contacts the main body 2A when the main body 2A is coupled to the container 2B. The inner surface 281 includes a bottom portion 281a, which is disposed at the central part thereof, and an inclined portion 281b, which defines an inclined surface formed from the edge of the bottom portion 281a to the upper end of the container body 280. The inclined portion 281b may be formed so as to be gradually inclined in the direction XO outward from the axis. The inclined portion 281b is generally formed so as to be concave.

The inclined portion 281b is formed in the circumferential direction. The inclined portion 281b extends in the circumferential direction.

The direction-setting protrusion 285 is formed on the inclined portion 281b. The direction-setting protrusion 285 may be formed on the bottom portion 281a.

The container body 280 includes a contact surface 282 configured to contact the container side member 290 in the direction XO outward from the axis. The contact surface 282 includes an inclined surface formed so as to become close to the central axis X in the upward direction.

The contact surface 282 is provided with a catching recess 280b, which is depressed in the direction XI inward toward the axis. The catching recess 280b is formed in the lower part of the contact surface 282. The contact surface 282 may be provided with a catching recess 280b, which is depressed toward the inclined portion 281b in the direction XI inward toward the axis. The catching recess 280b is provided in substantially the same horizontal plane as the inclined portion 281b.

The catching recess 280b extends in the circumferential direction. The catching recess 280b is hidden by the container side member 290. A coupling hook 295 formed at the container side member 290 is inserted into the catching recess 280b in order to couple the container body 280 to the container side member 290.

If the catching recess 280b is not provided, the thickness between the lower part of the inclined portion 281b and the lower part of the contact surface 282 may be greater than the thicknesses of the other portions due to the inclination of the inclined portion 281b and the inclination of the contact surface 282. In the case in which the catching recess 280b is provided, the thickness of the lower part of the container body 280 may be reduced, which is advantageous in injection-molding.

A direction-setting protrusion space 280d, which is concave toward the direction-setting protrusion 285, is defined at the lower side of the contact surface 282. The direction-setting protrusion space 280d may be connected to the catching recess 280b. The direction-setting protrusion space 280d is hidden by the container side member 290.

The contact surface 282 is provided with a guide recess 280c for guiding the insertion of the container body 280 into a central opening 290c formed in the container side member 290. The guide recess 280c is formed in the contact surface 292 so as to be concave in the direction XI inward toward the axis. The guide recess 280c extends along the inclined surface of the contact surface 282. The guide recess 280c extends vertically. The depth of the guide recess 280c may be gradually increased from the upper side to the lower side. The guide recess 280c is formed in the upper side of the catching recess 280b. The lower end of the guide recess 280c may be connected to the catching recess 280b.

A guide protrusion 296 formed on the container side member 290 may be inserted into the guide recess 280c to limit the vertical movement of the container side member 290 for assembly. The guide protrusion 296 may be inserted into the guide recess 280c from above so as to slide downward along the guide recess 280c.

The container body 280 includes the external coupling portion 283, which is located at the lower surface of the container body 280. When the container body 280 is viewed from below, the external coupling portion 283 is disposed at the central part of the container body 280. The external coupling portion 283 may be circular.

The edge of the lower surface of the container body 280 defines an edge portion 283a inclined relative to the horizontal plane. The edge portion 283a includes an inclined surface, the inclination of which gradually increases in the direction XO outward from the axis. The edge portion 283a is ring-shaped. The edge portion 283a is connected to the external coupling portion 283 in the direction XI inward toward the axis and is connected to the lower end of the container side member 290 in the direction XO outward from the axis.

The container 2B is made of a material that can be injection-molded. For example, the container 2B may be made of synthetic resin. The container body 280 is made of a material that can be injection-molded. The container side member 290 is also made of a material that can be injection-molded.

The structure and function of the main body 2A will be described in detail with reference to FIGS. 47 to 54.

Referring to FIGS. 47 and 48, on the assumption that an imaginary circle having a predetermined diameter r1 is disposed perpendicular to the central axis X, the main body 2A includes an upper edge E1 extending along the circumference of the imaginary circle having the diameter r1. Referring to FIG. 47, the upper edge E1 may be disposed in the imaginary plane H1.

The upper edge E1 may be circular or arc-shaped. In the case in which a recess or a protrusion is formed at the main body 2A on the circumference of the imaginary circle having the diameter r1, the recess or the protrusion is not included in the upper edge E1, and the upper edge E1 is arc-shaped. Even in the case in which the upper edge E1 is arc-shaped, the upper edge E1 may be approximately circular.

The side surface of the main body 2A in the direction XO outward from the axis is formed further inward in the direction XI inward toward the axis than the upper edge E1.

In the case in which the main body 2A perpendicularly approaches an external horizontal plane G (in the state in which the central axis X is parallel to the horizontal plane G), the upper edge E1 of the main body 2A contacts the external plane G first.

Referring to FIG. 49, in the case in which the upper edge E1 perpendicularly contacts the external horizontal plane G in the state in which the main body 2A is separated from the container 2B, the main body 2A may tilt toward the lower surface 278 of the main body 2A (i.e. in a direction T1). The reason for this is that the upper edge E1 of the main body 2A is supported by the horizontal plane G, whereas the lower edge E2 of the main body 2A is not supported by the horizontal plane G.

In the case in which the main body 2A is manufactured so as to have approximately circular edges E1 and E2, therefore, the main body 2A may be overturned within a short time in the direction T1 (i.e. toward the lower surface 278 of the main body 2A) when the main body 2A is separated from the ground or rolls along the ground. Consequently, the possibility of losing the main body 2A may be minimized, and the user's excessive movement to hold the main body 2A so as to prevent it from rolling far away may be reduced.

On the assumption that an imaginary circle having a predetermined diameter r2 is disposed perpendicular to the central axis X, the main body 2A may include a lower edge E2 extending along the circumference of the imaginary circle having the diameter r2. The diameter r2 is smaller from the diameter r1.

Referring to FIG. 47, the lower edge E1 may be constituted by a set of points contacting at least one of the upper edge E1 and the side of the main body 2A and, at the same time, a horizontal plane G. (FIG. 47 shows that the lower edge E2 contacts the side of the main body 2A and, at the same time, the horizontal plane G, and FIG. 50 shows that the lower edge E2 contacts the upper edge E1 and the side of the main body 2A and, at the same time, the horizontal plane G.) Particularly, in the case in which the border of the lower surface 278 of the main body 2A is curved, as shown in FIG. 47, it may be defined as the lower edge E2, as described above.

Referring to FIG. 47, a point q on the side surface of the main body 2A and the lower edge E2 simultaneously contact the horizontal plane G. Referring to FIG. 47, the lower edge E2 may be disposed in the imaginary plane H2.

The lower edge E2 may be circular or arc-shaped. In the case in which a recess or a protrusion is formed at the main body 2A on the circumference of the imaginary circle having the diameter r2, the recess or the protrusion is not included in the lower edge E2, and the lower edge E2 is arc-shaped. Even in the case in which the lower edge E2 is arc-shaped, the lower edge E2 may be approximately circular.

Referring to FIGS. 50 and 52, when the main body 2A is overturned toward the lower surface 278 (in the direction T1) while rolling on the horizontal plane G, the lower edge E2 contacts the horizontal plane G. In this case, the center of gravity of the main body 2A is further biased further toward the lower surface 278 (in the direction T1) due to the tilting of the main body 2A. Since the diameter r2 is smaller than that the diameter r1, the main body 2A rolls while turning toward the lower surface 278 (in the direction T1). Afterwards, the main body 2A rolls while turning in the state in which only the lower edge E2 contacts the horizontal plane G. When the main body 2A completely tilts to the extent that the lower surface 278 contacts the horizontal plane G, the rolling motion of the main body 2A is stopped.

FIG. 52 is a conceptual view showing imaginary tracks formed by the upper edge E1 and the lower edge E2 of the main body on the horizontal plane when the main body 2A is overturned while rolling along the horizontal plane. In FIG. 52, a track 11 is formed by the upper edge E1, and a track 12 or 13 is formed by the lower edge E2. The main body rolls while traveling straight or turning somewhat from a point p1 to a point p2 in the state in which the upper edge E1 contacts the horizontal plane G. The main body 2A tilts toward the lower surface 278 (in the direction T1), and the lower edge E2 contacts the horizontal plane G from a point p3. Afterwards, the upper edge E1 is separated from the horizontal plane G, and the main body 2A turns in the state in which the lower edge E2 contacts the horizontal plane G. Track 12 indicates a relatively small degree of turning, and track 13 indicates a relatively large degree of turning. The degree of turning may gradually increase as the main body 2a moves while turning. As the result of turning, the main body 2A may return to the initial position thereof. Afterwards, the main body 2A is completely overturned, and the lower surface 278 contacts the horizontal plane G. As a result, the movement of the main body 2A is stopped. When the main body 2A rolls on the horizontal plane G, it is possible to prevent the main body 2A from rolling far away as the result of overturning, turning, and stopping of the main body 2A.

The side surface of the main body 2A may include an inclined surface formed so as to become close to the central axis X in the downward direction. The side surface of the main body 2A may include a plurality of inclined surfaces formed so as to become close to the central axis X in the downward direction. In this case, the inclined surfaces may have different inclinations. In addition, the inclination of the inclined surface of the side surface of the main body 2A may be gradually changed in the downward direction. A recess or a hole may be formed in the inclined surface of the side surface of the main body 2A.

The height h of the main body 2A may be smaller than the diameter r2. In the case in which the height of the main body 2A is smaller, a side-standing state, in which at least one of the upper edge E1 and the side surface of the main body 2A and the lower edge E2 simultaneously contact the horizontal plane G, may become more unstable. As a result, complete overturning of the main body 2A (i.e. the lower surface 278 contacting the horizontal plane G) may be more smoothly and rapidly achieved.

The main body 2A includes a lower corner 279 connected to the lower side of the lower edge E2. The lower corner 279 is chamfered. The lower corner 279 is rounded. The upper end of the lower corner 279 is connected to the lower edge E2, and the lower end of the lower corner 279 is connected to the lower surface 278. The lower corner 279 defines a surface closer to the central axis X than the lower edge E2. The lower corner 279 may define a surface at a position higher than the lower surface 278.

Referring to FIG. 52, during overturning of the main body 2A, the main body 2A tilts further toward the lower surface 278 (in the direction T1) even after the lower edge E2 contacts the horizontal plane G. At this time, the lower corner 279 smoothly contacts the horizontal plane G, and then the lower surface 279 smoothly contacts the horizontal plane G. As a result, it is possible to reduce impact that is applied to the lower surface 278 during overturning of the main body 2A. That is, impact applied to the main body 2A is reduced during overturning of the main body 2A, thereby reducing the possibility that apparatuses will be broken or damaged.

Furthermore, the lower corner 279 defines a surface that becomes gradually closer to the central axis X in the downward direction. During overturning of the main body 2A, the main body 2A tilts further toward the lower surface 278 (in the direction T1). At this time, the contact point of the lower corner 279 that contacts the horizontal plane G becomes gradually closer to the central axis X of the main body 2A. Consequently, the main body 2A is more rapidly turned. As a result, it is possible to minimize the movement distance of the main body 2A depending on the turning of the main body 2A.

Referring to FIGS. 47 and 51, the battery 2541 may be disposed in the lower part of the main body 2A. The case of the main body 2A may be made of a material exhibiting relatively low specific gravity, such as synthetic resin. Specifically, the switch panel 210, the switch operation unit 220, the side case 230, and the bottom case 270 are made of a material exhibiting low specific gravity, such as synthetic resin. In addition, parts are disposed in the inner space of the main body 2A at relatively low density, except for the space in which the battery 2541 is disposed. The battery 2541 is disposed in the inner space of the main body 2A at relatively high density. In addition, the battery is made of a metal material. Consequently, the battery 2541 may exhibit high specific gravity. The battery 2541 may be disposed in the lower part of the main body 2A such that the center of gravity M of the main body 2A is located at the lower side of the main body 2A.

The battery 2541 may be disposed lower than an imaginary plane Hm that divides the height of the main body 2A into two halves. The battery 2541 may be generally cylindrical. The height of the battery 2541 may be less than half of the height h of the main body 2A.

Referring to FIG. 51, in the case in which the center of gravity M of the main body 2A is located at the lower side of the main body 2A, the main body 2A may be more rapidly overturned toward the lower surface 278 (in the direction T1) when the main body 2A rolls along the horizontal plane G. Referring to FIG. 52, in the case in which the center of gravity M of the main body 2A is located at the lower side of the main body 2A, the degree of turning of the main body 2A is increased, with the result that a relatively rapidly turning track 13 is formed, which is advantageous in more rapid stopping of the main body 2A.

Referring to FIG. 53, when viewed from below the main body 2A, the battery 2541 may be disposed at an eccentric position. The eccentric position of the battery 2541 means that a vertical axis Mb passing through the center of gravity of the battery 2541 is spaced apart from the central axis X of the main body 2A by a predetermined distance in a predetermined direction ec. In the case in which the battery 2541, the specific gravity of which is relatively high, is disposed eccentrically, the center of gravity M of the main body 2A is eccentric in the direction ec in which the battery 2541 is eccentric. The center of gravity M of the main body 2A is intentionally spaced apart from the central axis X.

When viewed from below, the battery 2541 is formed to have a circular shape having a diameter less than the diameter r1 and the diameter r2. The battery 2541, the diameter of which is relatively small, may be disposed in the eccentric direction ec so as to contact the inner surface of the side member 231. In this case, the side surface of the battery 2541 is spaced apart from the inner surface of the side member 231 in the direction opposite to the eccentric direction ec. The diameter of the battery 2541 may be less than 0.8 times the diameter r2.

The battery guide rib 272 fixes the battery 2541 such that the battery 2541 is disposed at the eccentric position.

Referring to FIG. 54, in the case in which the center of gravity M of the main body 2A moves upward from the horizontal plane G when the main body 2A (or an assembly of the main body 2A and the container 2B) rolls along the horizontal plane G, torque is applied to the main body 2A in a direction T2 in which the center of gravity M of the main body 2A moves downward. FIG. 54(a) shows that the center of gravity M is located at the right side of the main body 2A, whereby torque is applied to the main body 2A in a rightward direction T2, and FIG. 54(b) shows that the center of gravity M is located at the left side of the main body 2A, whereby torque is applied to the main body 2A in a leftward direction T3.

When the kinetic energy of the rolling motion of the main body 2A is less than a predetermined value, therefore, the kinetic energy is completely converted into the potential energy, with the result that the main body 2A moves no farther away. The predetermined value of the kinetic energy means the minimum kinetic energy at which the motion direction is maintained even when the center of gravity M moves to the highest position. When the main body 2A rolls, therefore, the main body may not move far away. In addition, overturning of the main body 2A is more smoothly performed during the rolling of the main body 2A due to the eccentric position of the center of gravity M. The reason for this is that torque is applied in the direction opposite to the motion direction, with the result that the motion speed and the centrifugal force (in the direction opposite to the direction in which the main body 2A tilts) are reduced, which is more advantageous in overturning of the main body 2A.

Referring to FIGS. 55 and 56, on the assumption that an imaginary circle having a predetermined diameter r3 is disposed perpendicular to the central axis X, the container 2B includes a lower edge E3 extending along the circumference of the imaginary circle having the diameter r3. Referring to FIG. 55, the lower edge E3 may be disposed in the imaginary plane H3.

The lower edge E3 may be circular or arc-shaped. In the case in which a recess or a protrusion is formed at the container 2B on the circumference of the imaginary circle having the diameter r3, the recess or the protrusion is not included in the lower edge E3, and the lower edge E3 is arc-shaped. Even in the case in which the lower edge E3 is arc-shaped, the lower edge E3 may be approximately circular.

The side surface (the outward surface 291) of the container 2B in the direction XO outward from the axis is formed further inward in the direction XI inward toward the axis than the lower edge E3 of the container 2B. In the case in which the container 2B perpendicularly approaches an external horizontal plane G (in the state in which the central axis X is parallel to the horizontal plane G), the lower edge E3 of the container 2B contacts the external plane G first.

The diameter r3 is different from the diameter r1. In this embodiment, the diameter r3 is greater than the diameter r1.

The accessory 2A and 2B is configured such that the upper edge E1 of the main body 2A and the lower edge E3 of the container 2B can simultaneously contact the horizontal plane G in the state in which the main body 2A is vertically coupled to the container 2B.

Referring to FIGS. 57 and 58, when the accessory 2A and 2B rolls in the state in which the upper edge E1 of the main body 2A and the lower edge E3 of the container 2B contact the horizontal plane G, the accessory 2A and 2B turns to one side, since the diameter r1 and the diameter r3 are different from each other. Referring to FIG. 57, the diameter r1 is smaller than the diameter r3, and therefore the accessory 2A and 2B turns to the upper edge E1 (in a direction T4). FIG. 58 shows a track 14 formed by the upper edge E1 and a track 15 formed by the lower edge E3. When the accessory 2A and 2B rolls in the state in which the upper edge E1 and the lower edge E3 contact a point p4 and a point p5, respectively, the accessory 2A and 2B turns to the edge having the smaller diameter (in the direction T4). As the result of turning of the accessory 2A and 2B, the accessory 2A and 2B may return to the initial position thereof.

Referring to FIGS. 55 and 56, on the assumption that an imaginary circle having a predetermined diameter r4 is disposed perpendicular to the central axis X, the container 2B includes an upper edge E4 extending along the circumference of the imaginary circle having the diameter r4. Referring to FIG. 55, the upper edge E4 may be disposed in the imaginary plane H3.

The diameter r4 is smaller from the diameter r3. When the container 2B is separated from the ground or rolls along the ground, the container 2B may be overturned toward the upper edge E4 within a short time. The principle by which the container 2B is overturned is identical to the principle by which the main body 2A is overturned, and therefore a description thereof will be omitted. The possibility of losing the container 2B may be minimized, and then user's excessive movement to hold the container 2B so as to prevent it from rolling far away may be reduced.

The upper edge E4 may be circular or arc-shaped. In the case in which a recess or a protrusion is formed at the container 2B on the circumference of the imaginary circle having the diameter r4, the recess or the protrusion is not included in the upper edge E4, and the upper edge E4 is arc-shaped. Even in the case in which the upper edge E4 is arc-shaped, the upper edge E4 may be approximately circular.

The upper edge E4 of the container 2B may be constituted by a set of points contacting at least one of the lower edge E3 and the side of the container 2B and, at the same time, a horizontal plane G. (FIG. 55 shows that the upper edge E4 of the container 2B contacts the lower edge E3 and the side of the container 2B and, at the same time, the horizontal plane G.)

The side surface (the outward surface 291) of the container 2B may include an inclined surface formed so as to become close to the central axis X in the upward direction. The side surface (the outward surface 291) of the container 2B may include a plurality of inclined surfaces formed so as to become close to the central axis X in the upward direction. In this case, the inclined surfaces may have different inclinations. In addition, the inclination of the inclined surface of the side surface (the outward surface 291) of the container 2B may be gradually changed in the upward direction. A recess or a hole may be formed in the inclined surface of the side surface (the outward surface 291) of the container 2B.

The height of the container 2B may be smaller than the diameter r4. In the case in which the height of the container 2B is smaller, a container side-standing state, in which at least one of the lower edge E3 and the side of the container 2B and the upper edge E4 of the container 2B simultaneously contact the horizontal plane G, may become more unstable. As a result, complete overturning of the container 2B may be more smoothly and rapidly achieved.

## Claims

1. An accessory comprising:
a main body (2A) having a communication module (26) for communicating with a predetermined network; and
a container (2B) having a main body-coupling portion (280a) to which the main body is separably coupled,
wherein the main body (2A) includes an exposed portion (201), which is exposed in the state in which the main body (2A) is coupled to the container (2B), and an insertion portion (202), which is received in the main body-coupling portion (280a),
the main body (2A) comprises a remote control module (25) for transmitting an optical signal for controlling a predetermined apparatus, and
the container (2B) comprises an external coupling portion (283) formed so as to be attached to one surface of an external object,
wherein the main body (2A) is configured to receive information through the communication module (26) over the network,
wherein the remote control module (25) is controlled based on the information received through the communication module (26), and
wherein the container (2B) comprises a direction-setting unit for guiding the main body (2A) to a specific direction when the container (2B) is attached to the one surface of the external object,
the direction-setting unit (285, 270a) comprises a direction-setting protrusion (285) and a direction-setting recess (270a),
the main body (2A) comprises one selected from between the direction-setting protrusion (285) and the direction-setting recess (270a),
the container (2B) comprises the other selected from between the direction-setting protrusion (285) and the direction-setting recess (270a), and
the direction-setting protrusion (285) is engaged into the direction-setting recess (270a).

2. The accessory according to claim 1, wherein
the remote control module (25) comprises a control signal light-emitting unit (243) for transmitting an optical signal for controlling the predetermined apparatus from the main body (2A) in the specific direction.

3. The accessory according to claim 1, wherein the main body further comprises a sensor module (24) for sensing predetermined surrounding conditions,
the sensor module (24) comprises a proximity sensor (244) for sensing a proximity of the main body (2A) to the external object in the specific direction.

4. The accessory according to claim 2 or 3, wherein the container (2B) comprises a direction-indicating unit for visually indicating the specific direction.

5. The accessory according to claim 2 or 3, wherein the direction-setting protrusion (285) is configured to be engaged into the direction-setting recess (270a) in a state in which the main body (2A) is guided to the specific direction, and
the direction-setting protrusion (285) is disposed so as to be eccentric from a central axis (X) of the main body (2A) and the container (2B) in one direction.

6. The accessory according to claim 5, wherein
one selected from between the main body (2A) and the container (2B) is provided with an attachment and detachment groove,
the other selected from between the main body (2A) and the container (2B) comprises an attachment and detachment protrusion configured to be inserted into the attachment and detachment groove when the main body (2A) is coupled to the container (2B),
the attachment and detachment groove extends in a circumferential direction, and
the attachment and detachment protrusion comprises a first attachment and detachment protrusion disposed opposite the direction-setting protrusion (285) about the central axis (X).

7. The accessory according to claim 6, configured such that in a state in which the direction-setting protrusion (285) is not engaged into the direction-setting recess (270a), the first attachment and detachment protrusion can be inserted into the attachment and detachment groove so as to slide in the circumferential direction such that the main body (2A) is rotatable relative to the container.

8. The accessory according to claim 6, wherein the attachment and detachment protrusion comprises a second attachment and detachment protrusion configured to be inserted into the attachment and detachment groove only in a state in which the direction-setting protrusion (285) is engaged into the direction-setting recess (270a).

9. The accessory according to claim 1 or 2, wherein
the main body (2A) comprises one of an attachment and detachment groove (231d) and an attachment and detachment protrusion (298),
the container (2B) comprises the other one of the attachment and detachment groove (231d) and the attachment and detachment protrusion (298), the attachment and detachment protrusion (298) being configured to be inserted into the attachment and detachment groove (231d) when the main body (2A) is coupled to the container (2B),
the attachment and detachment groove (231d) extends in a circumferential direction, and
the attachment and detachment protrusion (298) comprises a plurality of attachment and detachment protrusions arranged at intervals in the circumferential direction.

10. A first system comprising the accessory according to claim 3, wherein
the proximity sensor (244) comprises a proximity signal light-emitting unit (2441) for transmitting a predetermined optical signal in the specific direction and a proximity signal light-receiving unit (2442) for receiving the optical signal reflected in the specific direction, and
the first system further comprises a reflector (2C), the reflector comprising a reflective surface for reflecting the transmitted optical signal and an attachment surface configured to be attachable to the external object.

11. The accessory according to claim 1, comprising a detachable waterproof member for sealing a gap between the main body (2A) and the container (2B) in a state in which the main body is coupled to the container.

12. The accessory according to claim 11, wherein
in the state in which the main body (2A) is coupled to the container (2B), the gap between the main body (2A) and the container (2B) defines an edge that is smaller than an upper edge of the main body (2A) and a lower edge of the container (2B), and
the waterproof member comprises a detachable elastic band wound between the upper edge of the main body (2A) and the lower edge of the container (2B) in the state in which the main body (2A) is coupled to the container (2B).

13. The accessory according to claim 12, wherein
a side surface of the main body (2A) comprises an inclined surface that becomes gradually closer to the central axis in a downward direction, and
a side surface of the container (2B) comprises an inclined surface that becomes gradually closer to the central axis in an upward direction.

14. A second system comprising the accessory according to claim 1 and a first additional plurality of said containers (2B), wherein the main body further comprises a sensor module (24) for sensing predetermined surrounding conditions,
the first additional plurality of said containers are configured to be attached to predetermined surfaces of external objects located at different positions,
the sensor module (24) comprises a plurality of sensors for sensing different kinds of targets, and
the main body (2A) comprises a controller for performing control in a manner that a state change is performed from a first state into a second state,
wherein the controller is, in the first state, configured to transmit a first target information sensed by a first sensor among the plurality of sensors over the network, and
wherein the controller is, in the second state, configured to transmit a second target information sensed by a second sensor among the plurality of sensors over the network.

15. A third system comprising the accessory according to claim 1 and a second additional plurality of said containers (2B), wherein
the second additional plurality of said containers are configured to be attached to predetermined surfaces of external objects located at different positions, and
the main body (2A) comprises a controller for controlling whether or not to transmit information about the surrounding conditions over the network and controlling whether or not to operate the remote control module (25).

## Patentansprüche

1. Zubehör, das aufweist:
einen Hauptkörper (2A) mit einem Kommunikationsmodul (26) zum Kommunizieren mit einem vorbestimmten Netzwerk; und
einen Behälter (2B) mit einem Hauptkörper-Kopplungsabschnitt (280a), mit dem der Hauptkörper trennbar gekoppelt ist,
wobei der Hauptkörper (2A) einen freiliegenden Abschnitt (201), der in dem Zustand freiliegt, in dem der Hauptkörper (2A) mit dem Behälter (2B) gekoppelt ist, und einen Einsatzabschnitt (202) aufweist, der im Hauptkörper-Kopplungsabschnitt (280a) aufgenommen ist,
der Hauptkörper (2A) ein Fernsteuermodul (25) zum Senden eines optischen Signals zum Steuern einer vorbestimmten Vorrichtung aufweist, und
der Behälter (2B) einen externen Kopplungsabschnitt (283) aufweist, der so ausgebildet ist, dass er an einer Oberfläche eines externen Objekts angebracht werden kann,
wobei der Hauptkörper (2A) konfiguriert ist, Informationen durch das Kommunikationsmodul (26) über das Netzwerk zu empfangen, wobei das Fernsteuermodul (25) basierend auf den durch das Kommunikationsmodul (26) empfangenen Informationen gesteuert wird, und
wobei der Behälter (2B) eine Richtungseinstellungseinheit zum Führen des Hauptkörpers (2A) in eine bestimmte Richtung aufweist, wenn der Behälter (2B) an der einen Oberfläche des externen Objekts angebracht ist, wobei die Richtungseinstellungseinheit (285, 270a) einen Richtungseinstellungsvorsprung (285) und eine Richtungseinstellungsaussparung (270a) aufweist, wobei der Hauptkörper (2A) eines aus dem Richtungseinstellungsvorsprung (285) und der Richtungseinstellungsaussparung (270a) ausgewähltes aufweist,
der Behälter (2B) das andere aus dem Richtungseinstellungsvorsprung (285) und der Richtungseinstellungsaussparung (270a) ausgewählte aufweist, und
der Richtungseinstellungsvorsprung (285) mit der Richtungseinstellungsaussparung (270a) in Eingriff steht.

2. Zubehör nach Anspruch 1, wobei
das Fernsteuermodul (25) eine Steuersignal-Lichtemissionseinheit (243) zum Senden eines optischen Signals zum Steuern der vorbestimmten Vorrichtung vom Hauptkörper (2A) in der spezifischen Richtung aufweist.

3. Zubehör nach Anspruch 1, wobei der Hauptkörper ferner ein Sensormodul (24) zum Erfassen von vorbestimmten Umgebungsbedingungen aufweist,
das Sensormodul (24) einen Näherungssensor (244) zum Erfassen einer Nähe des Hauptkörpers (2A) zum externen Objekt in der bestimmten Richtung aufweist.

4. Zubehör nach Anspruch 2 oder 3, wobei der Behälter (2B) eine Richtungsanzeigeeinheit zum visuellen Anzeigen der spezifischen Richtung aufweist.

5. Zubehör nach Anspruch 2 oder 3, wobei der Richtungseinstellungsvorsprung (285) konfiguriert ist, mit der Richtungseinstellungsaussparung (270a) in einem Zustand in Eingriff gebracht zu werden, in dem der Hauptkörper (2A) in die bestimmte Richtung geführt wird, und
der Richtungseinstellungsvorsprung (285) so angeordnet ist, dass er in einer Richtung exzentrisch zu einer Mittelachse (X) des Hauptkörpers (2A) und des Behälters (2B) ist.

6. Zubehör nach Anspruch 5, wobei
einer aus dem Hauptkörper (2A) und dem Behälter (2B) ausgewählter mit einer Befestigungs- und Lösungsnut versehen ist,
der andere aus dem Hauptkörper (2A) und dem Behälter (2B) ausgewählte einen Befestigungs- und Lösungsvorsprung aufweist, der konfiguriert ist, in die Befestigungs- und Lösungsnut eingesetzt zu werden, wenn der Hauptkörper (2A) mit dem Behälter (2B) gekoppelt wird,
sich die Befestigungs- und Lösungsnut in einer Umfangsrichtung erstreckt, und
der Befestigungs- und Lösungsvorsprung einen ersten Befestigungs- und Lösungsvorsprung aufweist, der um die Mittelachse (X) gegenüber dem Richtungseinstellungsvorsprung (285) angeordnet ist.

7. Zubehör nach Anspruch 6, das so konfiguriert ist, dass in einem Zustand, in dem der Richtungseinstellungsvorsprung (285) nicht mit der Richtungseinstellungsaussparung (270a) in Eingriff steht, der erste Befestigungs- und Lösungsvorsprung in die Befestigungs- und Lösungsnut eingesetzt werden kann, um in der Umfangsrichtung zu gleiten, so dass der Hauptkörper (2A) relativ zum Behälter drehbar ist.

8. Zubehör nach Anspruch 6, wobei der Befestigungs- und Lösungsvorsprung einen zweiten Befestigungs- und Lösungsvorsprung aufweist, der konfiguriert ist, nur in einem Zustand in die Befestigungs- und Lösungsnut eingesetzt zu werden, in dem der Richtungseinstellungsvorsprung (285) mit dem Richtungseinstellungsaussparung (270a) in Eingriff steht.

9. Zubehör nach Anspruch 1 oder 2, wobei
der Hauptkörper (2A) eines der Befestigungs- und Lösungsnut (231d) und des Befestigungs- und Lösungsvorsprungs (298) aufweist,
der Behälter (2B) das andere der Befestigungs- und Lösungsnut (231d) und des Befestigungs- und Lösungsvorsprungs (298) aufweist, wobei der Befestigungs- und Lösungsvorsprung (298) konfiguriert ist, in die Befestigungs- und Lösungsnut (231d) eingesetzt zu werden, wenn der Hauptkörper (2A) mit dem Behälter (2B) gekoppelt wird, sich die Befestigungs- und Lösungsnut (231d) in einer Umfangsrichtung erstreckt, und der Befestigungs- und Lösungsvorsprung (298) eine Vielzahl von Befestigungs- und Lösungsvorsprüngen aufweist, die in Intervallen in der Umfangsrichtung angeordnet sind.

10. Erstes System, das das Zubehör nach Anspruch 3 aufweist, wobei der Näherungssensor (244) eine Näherungssignal-Lichtemissionseinheit (2441) zum Senden eines vorbestimmten optischen Signals in der spezifischen Richtung und eine Näherungssignal-Lichtempfangseinheit (2442) zum Empfangen des in der spezifischen Richtung reflektierten optischen Signals aufweist, und das erste System ferner einen Reflektor (2C) aufweist, wobei der Reflektor eine reflektierende Oberfläche zum Reflektieren des gesendeten optischen Signals und eine Befestigungsoberfläche aufweist, die konfiguriert ist, an dem externen Objekt befestigt zu werden.

11. Zubehör nach Anspruch 1, das ein abnehmbares wasserdichtes Element zum Abdichten eines Spalts zwischen dem Hauptkörper (2A) und dem Behälter (2B) in einem Zustand aufweist, in dem der Hauptkörper mit dem Behälter gekoppelt ist.

12. Zubehör nach Anspruch 11, wobei
in dem Zustand, in dem der Hauptkörper (2A) mit dem Behälter (2B) gekoppelt ist, der Spalt zwischen dem Hauptkörper (2A) und dem Behälter (2B) eine Kante definiert, die kleiner ist als eine obere Kante des Hauptkörpers (2A) und eine untere Kante des Behälters (2B), und das wasserdichte Element ein abnehmbares elastisches Band aufweist, das zwischen der oberen Kante des Hauptkörpers (2A) und der unteren Kante des Behälters (2B) in dem Zustand gewickelt ist, in dem der Hauptkörper (2A) mit dem Behälter (2B) gekoppelt ist.

13. Zubehör nach Anspruch 12, wobei
eine Seitenfläche des Hauptkörpers (2A) eine geneigte Fläche aufweist, die sich der Mittelachse nach unten hin allmählich nähert, und
eine Seitenfläche des Behälters (2B) eine geneigte Fläche aufweist, die sich der Mittelachse in einer Aufwärtsrichtung allmählich nähert.

14. Zweites System, das das Zubehör gemäß Anspruch 1 und eine erste zusätzliche Vielzahl der Behälter (2B) aufweist, wobei der Hauptkörper ferner ein Sensormodul (24) zum Erfassen vorbestimmter Umgebungsbedingungen aufweist,
die erste zusätzliche Vielzahl der Behälter konfiguriert ist, an vorbestimmten Oberflächen von externen Objekten angebracht zu werden, die sich an verschiedenen Positionen befinden,
das Sensormodul (24) eine Vielzahl von Sensoren zum Erfassen verschiedener Arten von Zielen aufweist, und
der Hauptkörper (2A) eine Steuerung zum Durchführen einer solchen Steuerung aufweist, dass ein Zustandswechsel von einem ersten Zustand in einen zweiten Zustand durchgeführt wird,
wobei die Steuerung im ersten Zustand konfiguriert ist, eine erste Zielinformation, die von einem ersten Sensor unter der Vielzahl der Sensoren erfasst wird, über das Netzwerk zu senden, und
wobei die Steuerung im zweiten Zustand konfiguriert ist, eine zweite Zielinformation, die von einem zweiten Sensor unter der Vielzahl der Sensoren erfasst wird, über das Netzwerk zu senden.

15. Drittes System, das das Zubehör gemäß Anspruch 1 und eine zweite zusätzliche Vielzahl der Behälter (2B) aufweist, wobei
die zweite zusätzliche Vielzahl der Behälter konfiguriert ist, an vorbestimmten Oberflächen von externen Objekten angebracht zu werden, die sich an verschiedenen Positionen befinden, und
der Hauptkörper (2A) eine Steuerung zum Steuern, ob Informationen über die Umgebungsbedingungen über das Netzwerk gesendet werden sollen oder nicht, und zum Steuern aufweist, ob das Fernsteuermodul (25) betrieben werden soll oder nicht.

## Revendications

1. Accessoire, comprenant :
un corps principal (2A) ayant un module de communication (26) permettant de communiquer avec un réseau défini ; et
un récipient (2B) ayant une partie d'accouplement (280a) de corps principal à laquelle le corps principal est accouplé de manière amovible,
où le corps principal (2A) comprend une partie exposée (201), laquelle est exposée dans l'état où le corps principal (2A) est accouplé au récipient (2B), et une partie d'insertion (202), laquelle est reçue dans la partie d'accouplement (280a) de corps principal,
le corps principal (2A) comprend un module de commande à distance (25) permettant de transmettre un signal optique pour la commande d'un appareil défini, et
le récipient (2B) comprend une partie d'accouplement extérieure (283) formée de manière à être fixée à une surface d'un objet extérieur,
où le corps principal (2A) est prévu pour recevoir des informations par l'intermédiaire du module de communication (26) via le réseau,
où le module de commande à distance (25) est commandé sur la base des informations reçues par l'intermédiaire du de communication (26), et
où le récipient (2B) comprend une unité de définition de direction destinée à guider le corps principal (2A) vers une direction spécifique quand le récipient (2B) est fixé à la surface de l'objet extérieur, ladite unité de définition de direction (285, 270a) comprend une saillie de définition de direction (285) et un évidement de définition de direction (270a), le corps principal (2A) comprend une partie sélectionnée entre la saillie de définition de direction (285) et l'évidement de définition de direction (270a),
le récipient (2B) comprend l'autre partie, sélectionnée entre la saillie de définition de direction (285) et l'évidement de définition de direction (270a), et
la saillie de définition de direction (285) est insérée dans l'évidement de définition de direction (270a).

2. Accessoire selon la revendication 1, où
le module de commande à distance (25) comprend une unité photoémettrice de signal de commande (243) destinée à transmettre un signal optique pour la commande de l'appareil défini depuis le corps principal (2A) dans la direction spécifique.

3. Accessoire selon la revendication 1, où le corps principal comprend en outre un module de capteur (24) pour la détection de conditions ambiantes définies,
le module de capteur (24) comprend un capteur de proximité (244) destiné à détecter la proximité du corps principal (2A) à l'objet extérieur dans la direction spécifique.

4. Accessoire selon la revendication 2 ou la revendication 3, où le récipient (2B) comprend une unité d'indication de direction pour l'indication visuelle de la direction spécifique.

5. Accessoire selon la revendication 2 ou la revendication 3, où la saillie de définition de direction (285) est prévue pour être insérée dans l'évidement de définition de direction (270a) dans un état où le corps principal (2A) est guidé vers la direction spécifique, et où la saillie de définition de direction (285) est disposée de manière à être excentrée par rapport un axe central (X) du corps principal (2A) et du récipient (2B) dans une direction.

6. Accessoire selon la revendication 5, où
un élément entre le corps principal (2A) ou le récipient (2B) est sélectivement prévu avec une rainure de fixation et de détachement,
l'autre élément entre le corps principal (2A) et le récipient (2B) comprend sélectivement une saillie de fixation et de détachement prévue pour être insérée dans la rainure de fixation et de détachement quand le corps principal (2A) est accouplé au récipient (2B), la rainure de fixation et de détachement s'étend dans la direction circonférentielle, et
la saillie de fixation et de détachement comprend une première saillie de fixation et de détachement disposée opposée à la saillie de définition de direction (285) autour de l'axe central (X).

7. Accessoire selon la revendication 6, prévu de sorte que, dans un état où la saillie de définition de direction (285) n'est pas insérée dans l'évidement de définition de direction (270a), la première saillie de fixation et de détachement peut être insérée dans la rainure de fixation et de détachement de manière à coulisser dans la direction circonférentielle pour que le corps principal (2A) soit rotatif par rapport au récipient.

8. Accessoire selon la revendication 6, où la saillie de fixation et de détachement comprend une deuxième saillie de fixation et de détachement prévue pour n'être insérée dans la rainure de fixation et de détachement que dans un état où la saillie de définition de direction (285) est insérée dans l'évidement de définition de direction (270a).

9. Accessoire selon la revendication 1 ou la revendication 2, où
le corps principal (2A) comprend un élément entre une rainure de fixation et de détachement (231d) et une saillie de fixation et de détachement (298),
le récipient (2B) comprend l'autre élément entre la rainure de fixation et de détachement (231d) et la saillie de fixation et de détachement (298), la saillie de fixation et de détachement (298) étant prévue pour être insérée dans la rainure de fixation et de détachement (231d) quand le corps principal (2A) est accouplé au récipient (2B),
la rainure de fixation et de détachement (231d) s'étend dans la direction circonférentielle, et
la saillie de fixation et de détachement (298) comprend une pluralité de saillies de fixation et de détachement espacées dans la direction circonférentielle.

10. Premier système comprenant l'accessoire selon la revendication 3, où le capteur de proximité (244) comprend une unité photoémettrice de signal de proximité (2441) destinée à transmettre un signal optique défini dans la direction spécifique et une unité photoréceptrice de signal de proximité (2442) destinée à recevoir le signal optique réfléchi dans la direction spécifique, et où ledit premier système comprend en outre un réflecteur (2C), ledit réflecteur comprenant une surface réfléchissante destinée à réfléchir le signal optique transmis et une surface de fixation prévue pour pouvoir être fixée à l'objet extérieur.

11. Accessoire selon la revendication 1, comprenant un élément amovible étanche à l'eau destiné à colmater un interstice entre le corps principal (2A) et le récipient (2B) dans un état où le corps principal est accouplé au récipient.

12. Accessoire selon la revendication 11, où
dans l'état où le corps principal (2A) est accouplé au récipient (2B), l'interstice entre le corps principal (2A) et le récipient (2B) définit un bord plus court que le bord supérieur du corps principal (2A) et le bord inférieur du récipient (2B), et où élément étanche à l'eau comprend une bande élastique amovible enroulée entre le bord supérieur du corps principal (2A) et le bord inférieur du récipient (2B) dans l'état où le corps principal (2A) est accouplé au récipient (2B).

13. Accessoire selon la revendication 12, où
une surface latérale du corps principal (2A) comprend une surface inclinée se rapprochant progressivement de l'axe central dans la direction descendante, et
une surface latérale du récipient (2B) comprend une surface inclinée se rapprochant progressivement de l'axe central dans la direction ascendante.

14. Deuxième système comprenant l'accessoire selon la revendication 1 et une première pluralité additionnelle des récipients (2B), où le corps principal comprend en outre un module de capteur (24) pour la détection de conditions ambiantes définies,
la première pluralité additionnelle des récipients est prévue pour être fixée à des surfaces définies d'objet extérieurs situés à des emplacements différents,
le module de capteur (24) comprend une pluralité de capteurs pour détecter différents types de cibles, et
le corps principal (2A) comprend un contrôleur destiné à exécuter une commande de manière à réaliser un changement d'état, d'un premier état vers un deuxième état,
où le contrôleur est, dans le premier état, prévu pour transmettre des premières informations cibles détectées par un premier capteur parmi la pluralité de capteurs via le réseau, et
où le contrôleur est, dans le deuxième état, prévu pour transmettre des deuxièmes informations cibles détectées par un deuxième capteur parmi la pluralité de capteurs via le réseau.

15. Troisième système comprenant l'accessoire selon la revendication 1 et une deuxième pluralité additionnelle de récipients (2B), où
la deuxième pluralité additionnelle de récipients est prévue pour être fixée à des surfaces définies d'objet extérieurs situés à des emplacements différents, et
le corps principal (2A) comprend un contrôleur destiné à commander s'il convient ou non de transmettre des informations sur les conditions ambiantes via le réseau, et commander s'il convient ou non de mettre en service le module de commande à distance (25).
